(19) Europäisches Patentamt
European Patent Office
Office européen des brevets

(11) EP 4 737 962 A1

(12) EUROPEAN PATENT APPLICATION

(43) Date of publication:
06.05.2026 Bulletin 2026/19

(51) International Patent Classification (IPC):
G02B 6/13 (2006.01)   G02B 6/43 (2006.01)
G02F 1/01 (2006.01)   G02B 6/42 (2006.01)

(21) Application number: 24210598.9

(22) Date of filing: 04.11.2024

(52) Cooperative Patent Classification (CPC):
G02B 6/43; G02B 6/13; G02B 6/4295

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Black Semiconductor GmbH
52068 Aachen (DE)

(72) Inventors:
• Huyghebaert,Cedric,Dr.
52068 Aachen (DE)
• Schall, Daniel,Dr.
52068 Aachen (DE)

(74) Representative: Herzog IP Patentanwalts GmbH
Steinstraße 16-18
40212 Düsseldorf (DE)

Remarks:
Amended claims in accordance with Rule 137(2)
EPC.

(54) **ASSEMBLY COMPRISING OPTO-ELECTRONIC COMPONENTS FOR DATA TRANSFER AND METHOD FOR PRODUCING THE SAME**

(57)     An assembly comprising
a a first sub-assembly comprising
i. a first layer of a first kind comprising a first plurality of electronic components;
ii. a first plurality of waveguides;
iii. a first plurality of opto-electronic components that each has a height that is equal to or less than 50 $\mu$m and are adapted and arranged to modify electromagnetic waves propagating in a first longitudinal portion of at least one waveguide, of the first plurality of waveguides;
iv. a first plurality of connectors, wherein
A. at least one connector, of the first plurality of connectors, is adapted and arranged to electrically connect at least one electronic component with at least one opto-electronic component;
wherein an average lateral minimum distance $F_X$ between the first longitudinal portions and the first plurality of connectors is in the range from 0.75 to 1.7 $\mu$m.

Fig. 2B                    200

EP 4 737 962 A1

**Description**

FIELD OF THE INVENTION

The invention relates in general to the field of semiconductor assemblies. A particular aspect of the invention pertains to an assembly comprising a first sub-assembly, wherein the first sub-assembly comprises a first plurality of waveguides, a first plurality of opto-electronic components, and a first plurality of connectors, wherein an average minimum distance $F_X$ between first longitudinal portions, of the first plurality of waveguides, and the first plurality of connectors is in the range from 0.8 to 1.5 $\mu$m. The invention also pertains to a use of the assembly, and a method for producing an assembly.

BACKGROUND

The transfer of data between semiconductor dies is commonly done using connectors that are made of, *e.g.,* copper. This set-up leads to a limitation on the data transfer rate for a number of reasons. For example, the density of the connectors is limited by the amount of space available. Furthermore, increasing the data transfer rate requires more energy, which leads to the generation of significant amounts of heat. In order to dissipate this heat, the dies may be arranged further apart. However, the distance between dies is also limited, as the signal quality of the data not only reduces with an increase of the length of the connectors, but more energy is also required to transfer the data over a larger distance. The above problems persist even if the dies are arranged on an interposer.

OBJECTS

An object of the present invention is to at least partially overcome at least one of the disadvantages encountered in the state of the art.
It is a further object of the invention to provide an assembly that allows for a reduced energy consumption.
It is a further object of the invention to provide an assembly that allows for a higher bitrate.
It is a further object of the invention to provide an assembly that allows for a higher bitrate per distance.
It is a further object of the invention to provide an assembly that allows for an improved heat dissipation.
It is a further object of the invention to provide an assembly that is less complex to manufacture.
It is a further object of the invention to provide an assembly that requires less time to produce.
It is a further object of the invention to provide an assembly that has a lower footprint.
It is a further object of the invention to provide a method for producing an assembly.
It is a further object of the invention to provide a method for producing an assembly that allows for a reduced energy consumption.
It is a further object of the invention to provide a method for producing an assembly that allows for a higher bitrate.
It is a further object of the invention to provide a method for producing an assembly that allows for a higher bitrate per distance.
It is a further object of the invention to provide a method for producing an assembly that allows for an improved heat dissipation.
It is a further object of the invention to provide a method for producing an assembly that has a lower footprint.
It is a further object of the invention to provide a method for producing an assembly, wherein the method has a reduced complexity.
It is a further object of the invention to provide a method for producing an assembly, wherein the method allows for a faster production of the assembly.

PREFERRED EMBODIMENTS OF THE INVENTION

A contribution to at least partially fulfilling at least one of the above-mentioned objects is made by any of the embodiments of the invention.

A 1st embodiment of the invention is an assembly comprising

a. a first sub-assembly, wherein the first sub-assembly comprises

i. a first layer of a first kind that comprises a first plurality of electronic components;
ii. a first plurality of waveguides adapted and arranged for the propagation of electromagnetic waves;
iii. a first plurality of opto-electronic components that each

A. has a height that is equal to or less than 50 $\mu$m, preferably equal to or less than 20 $\mu$m, and more preferably equal to or less than 10 $\mu$m, and

B. is adapted and arranged to modify electromagnetic waves propagating in a first longitudinal portion of at least one waveguide, of the first plurality of waveguides;

iv. a first plurality of connectors, wherein

A. at least one connector, of the first plurality of connectors, is adapted and arranged to electrically connect at least one electronic component, of the first plurality of electronic components, with at least one opto-electronic component, of the first plurality of opto-electronic components,

B. preferably, at least one connector, of the first plurality of connectors, is adapted and arranged to electrically connect at least two electronic components, of the first plurality of electronic components, and

C. preferably, at least one connector, of the first plurality of connectors, is adapted and arranged to electrically connect at least two opto-electronic components, of the first plurality of opto-electronic components;

wherein at least one or all of the following applies:

I. an average minimum distance $F_X$ between the first longitudinal portions, of the first plurality of waveguides, and the first plurality of connectors is in the range from 0.75 to 1.7 $\mu$m, preferably from 0.8 to 1.5 $\mu$m, more preferably from 0.85 to 1.3 $\mu$m, and further preferably from 0.9 to 1.1 $\mu$m, wherein the average minimum distance $F_X$ is measured parallel to a further direction (X) that is perpendicular to the first direction (Z), wherein the first direction (Z) is perpendicular to the first layer of the first kind;

II. an average minimum distance $G_Z$ between further longitudinal portions, of the first plurality of waveguides, and the first plurality of connectors is in the range from 2 to 3.5 $\mu$m, preferably from 2.1 to 3.1 $\mu$m, more preferably from 2.2 to 2.8 $\mu$m, and further preferably from 2.3 to 2.6 $\mu$m, wherein the average minimum distance $G_Z$ is measured parallel to the first direction (Z).

In an aspect of the 1st embodiment, all possible combinations of the features I. and II are preferred aspects of the embodiment. These combinations are I; II; I+II. In an aspect of the 1st embodiment, all possible combinations of the features iv.A to iv.C are preferred aspects of the embodiment. These combinations are iv.A; iv.A+iv.B; iv.A+iv.C; iv.A+iv.B+iv.C. In a preferred aspect of the 1st embodiment, at least 50 %, more preferably at least 75 % of the waveguides, of the first plurality of waveguides, are adapted and arranged to allow electromagnetic wave to enter, to exit, or to enter and exit, the first sub-assembly. In this aspect, it is preferred that at least 50 %, more preferably at least 75 % of the waveguides, of the first plurality of waveguides, are adapted and arranged to allow electromagnetic wave to enter and exit the first sub-assembly. In a preferred aspect of the 1st embodiment, the first plurality of opto-electronic components comprises at least 20, more preferably at least 50, more preferably at least 75, even more preferably at least 100, further preferably at least 150, and even further preferably at least 200 opto-electronic components. E.g., the first plurality of opto-electronic components may comprise 1000 or more opto-electronic components.

In a preferred embodiment of the assembly, the average minimum distance $F_X$ is less than an average minimum distance $F_Z$ between the first longitudinal portions, of the first plurality of waveguides, and the first plurality of connectors, wherein the average minimum distance Fz is measured parallel to the first direction (Z). This preferred embodiment is a 2nd embodiment of the invention, that preferably depends on the 1st embodiment of the invention.

In a preferred embodiment of the assembly, the average minimum distance Fz between the first longitudinal portions, of the first plurality of waveguides, and the first plurality of connectors is in the range from 2 to 3.5 $\mu$m, preferably from 2.1 to 3.1 $\mu$m, more preferably from 2.2 to 2.8 $\mu$m, and further preferably from 2.3 to 2.6 $\mu$m, wherein the average minimum distance $F_Z$ is measured parallel to the first direction (Z). This preferred embodiment is a 3rd embodiment of the invention, that preferably depends on any of the 1st to 2nd embodiments of the invention.

In a preferred embodiment of the assembly, an average minimum distance $G_X$ between the further longitudinal portions, of the first plurality of waveguides, and the first plurality of connectors is in the range from 2 to 3.5 $\mu$m, preferably from 2.1 to 3.1 $\mu$m, more preferably from 2.2 to 2.8 $\mu$m, and further preferably from 2.3 to 2.6 $\mu$m, wherein the average minimum distance $G_X$ is measured parallel to the further direction (X). This preferred embodiment is a 4th embodiment of the invention, that preferably depends on any of the 1st to 3rd embodiments of the invention.

In a preferred embodiment of the assembly, an average minimum distance Hz between the first longitudinal portions, of the first plurality of waveguides, and the first plurality of electronic components is in the range from 8 to 24 $\mu$m, preferably from 9 to 22 $\mu$m, more preferably from 9.5 to 20 $\mu$m, and further preferably from 10 to 19 $\mu$m, wherein the average minimum distance $H_Z$ is measured parallel to the first direction (Z). This preferred embodiment is a 5th

embodiment of the invention, that preferably depends on any of the 1st to 4th embodiments of the invention. In one preferred aspect of the 5th embodiment, the average minimum distance Hz is in the range from 8 to 20 $\mu$m, more preferably from 9 to 18 $\mu$m, even more preferably from 9.5 to 16 $\mu$m, and further preferably from 10 to 15 $\mu$m. In another preferred aspect of the 5th embodiment, the average minimum distance $H_Z$ is in the range from 12 to 24 $\mu$m, more preferably from 14 to 22 $\mu$m, even more preferably from 16 to 20 $\mu$m, and further preferably from 17 to 19 $\mu$m.

In a preferred embodiment of the assembly, at least one or all of the following applies:

a. an average minimum distance $H_X$ between the first layer of the first kind and the first longitudinal portions, of the first plurality of waveguides, is less than 100 nm, preferably less than 50 nm, more preferably less than 10 nm, and further preferably less than 2 nm, and wherein the average minimum distance $H_X$ is measured parallel to the further direction (X);

b. an average minimum distance $H_Y$ between the first layer of the first kind and the first longitudinal portions, of the first plurality of waveguides, is less than 100 nm, preferably less than 50 nm, more preferably less than 10 nm, and further preferably less than 2 nm, and wherein the average minimum distance $H_Y$ is measured parallel to a second direction (Y), wherein the second direction (Y) is perpendicular to the first direction (Z) and the further direction (X).

This preferred embodiment is a 6th embodiment of the invention, that preferably depends on any of the 1st to 5th embodiments of the invention.

In an aspect of the 6th embodiment, all possible combinations of the features a. and b. are preferred aspects of the embodiment. These combinations are *e.g.,* a; b; a+b.

In a preferred embodiment of the assembly, at least one or all of the following applies:

a. the first layer of the first kind does not comprise a waveguide;

b. the first layer of the first kind does not comprise an optical element adapted and arranged for the coupling of electromagnetic waves between two waveguides.

This preferred embodiment is a 7th embodiment of the invention, that preferably depends on any of the 1st to 6th embodiments of the invention.

In an aspect of the 7th embodiment, all possible combinations of the features a. and b. are preferred aspects of the embodiment. These combinations are *e.g.,* a; b; a+b. In the 7th embodiment, feature b., an example of the optical element is an intermediate waveguide adapted and arranged between a first waveguide and a further waveguide, such that an electromagnetic wave propagating in the first waveguide can be coupled to the further waveguide via the intermediate waveguide. In this example, the first waveguide, the further waveguide, and the intermediate waveguide preferably do not touch each other. Furthermore, in this example, the first waveguide, the further waveguide, and the intermediate waveguide are preferably arranged at different positions, as measured along the first direction.

In a preferred embodiment of the assembly, in a cross-sectional cut of the assembly made perpendicular to the first layer of the first kind, the cross-sectional cut comprises the following layers and components, in this order:

i. the first layer of the first kind; and

ii. the first plurality of opto-electronic components.

This preferred embodiment is an 8th embodiment of the invention, that preferably depends on any of the 1st to 7th embodiments of the invention.

In a preferred embodiment of the assembly, in a cross-sectional cut of the assembly, made perpendicular to the first layer of the first kind, at least 50 %, more preferably at least 75 %, and further preferably at least 95 % of the opto-electronic components, of the first plurality of opto-electronic components, are arranged to overlap the first layer of the first kind. This preferred embodiment is a 9th embodiment of the invention, that preferably depends on any of the 1st to 8th embodiments of the invention.

In a preferred aspect of the 9th embodiment, all of the opto-electronic components, of the first plurality of opto-electronic components, are arranged to overlap the first layer of the first kind.

In a preferred embodiment of the assembly, the first layer of the first kind comprises

a. a sub-layer of a first kind, wherein the sub-layer of the first kind comprises at least 50 %, more preferably at least 75 %, and further preferably at least 95 % of the electronic components, of the first plurality of electronic components, and

b. a sub-layer of a further kind, wherein the sub-layer of the further kind is adapted and arranged

i. to electrically connect at least two electronic components, of the first plurality of electronic components,

ii. preferably, to electrically connect at least one electronic component, of the first plurality of electronic components, and at least one opto-electronic component, of the first plurality of opto-electronic components,

iii. preferably, to electrically connect at least two opto-electronic components, of the first plurality of opto-electronic components.

This preferred embodiment is a 10th embodiment of the invention, that preferably depends on any of the 1st to 9th embodiments of the invention.

In a preferred aspect of the 10th embodiment, the sub-layer of the first kind comprises all of the electronic components of the first plurality of electronic components. In an aspect of the 10th embodiment, all combination of the features b.i., b.ii., and b.iii. are preferred aspects of the embodiment. These combinations are *e.g.,* b.i; b.i.+b.ii.; b.i.+b.iii.; b.i.+b.ii.+b.iii.

In a preferred embodiment of the assembly, the first layer of the first kind is adapted and arranged to have a clock speed of at least 0.5 GHz, preferably at least 0.7 GHz, more preferably at least 0.9 GHz, and further preferably at least 1.1 GHz. This preferred embodiment is an 11th embodiment of the invention, that preferably depends on any of the 1st to 10th embodiments of the invention.

In a preferred aspect of the 11th embodiment, the first layer of the first kind has a clock speed of at least 1.5 GHz, more preferably at least 2 GHz, even more preferably at least 2.5 GHz, further preferably at least 3 GHz, further preferably at least 3.5 GHz, and even further preferably at least 4 GHz. In a preferred aspect of the 11th embodiment, the first layer of the first kind has a clock speed of 10 GHz or less, more preferably 9 GHz or less, and further preferably 8 GHz or less.

In a preferred embodiment of the assembly, the assembly is adapted and arranged to allow for a flow of an electrical current between at least one electronic component, of the first plurality of electronic components, and at least one opto-electronic component, of the first plurality of opto-electronic components, without requiring that the electrical current flows through at least one of the following: a bonding wire, a solder bump, a microbump, a C2 bump, a C4 bump, a hybrid bond. This preferred embodiment is a 12th embodiment of the invention, that preferably depends on any of the 1st to 11th embodiments of the invention.

In a preferred aspect of the 12th embodiment, the electrical current is used to transfer data. In a preferred aspect of the 12th embodiment, the assembly is adapted and arranged to allow for a flow of an electrical current between at least one electronic component, of the first plurality of electronic components, and at least 50 %, more preferably at least 75 %, and further preferably at least 95 % of the opto-electronic components, of the first plurality of opto-electronic components, without requiring that the electrical current flows through at least one of the following: a bonding wire, a solder bump, a microbump, a C2 bump, a C4 bump, a hybrid bond.

In a preferred embodiment of the assembly, the first plurality of connectors does not comprise any of the following: a bonding wire, a solder bump, a microbump, a C2 bump, a C4 bump, a hybrid bond. This preferred embodiment is a 13th embodiment of the invention, that preferably depends on any of the 1st to 12th embodiments of the invention.

In a preferred embodiment of the assembly, the assembly further comprises a layer of a further kind, and wherein, in a cross-sectional cut of the assembly made perpendicular to the first layer of the first kind, the cross-sectional cut comprises the following layers and components, in this order:

i. the first layer of the first kind,
ii. the first plurality of opto-electronic components, and
iii. the layer of the further kind.

This preferred embodiment is a 14th embodiment of the invention, that preferably depends on any of the 1st to 13th embodiments of the invention.

In a preferred embodiment of the assembly, the layer of the further kind is adapted and arranged for the propagation of electromagnetic waves (e.g., by comprising one or more waveguides). This preferred embodiment is a 15th embodiment of the invention, that preferably depends on the 14th embodiments of the invention.

In a preferred embodiment of the assembly, the layer of the further kind is adapted and arranged to optically connect at least two opto-electronic components, preferably at least two opto-electronic components that are arranged at a distance of at least 100 nm, more preferably at least 1 $\mu$m, even more preferably at least 15 $\mu$m, further preferably at least 100 $\mu$m, further preferably at least 500 $\mu$m, and even further preferably at least 1000 $\mu$m, from each other. This preferred embodiment is a 16th embodiment of the invention, that preferably depends on any of the 14th to 15th embodiments of the invention.

In a preferred aspect of the 16th embodiment, the "at least two opto-electronic components" include at least one opto-electronic component of the first plurality of opto-electronic components and at least one opto-electronic component of a second plurality of opto-electronic components. In a preferred aspect of the 16th embodiment, the at least two opto-electronic components are arranged at a distance of at least 1 cm, more preferably at least 10 cm, even more preferably at least 50 cm, further preferably at least 100 cm, further preferably at least 500 cm, and even further preferably at least 1000 cm, from each other.

In a preferred embodiment of the assembly, the layer of the further kind is adapted and arranged to transfer data using electromagnetic waves. This preferred embodiment is a 17th embodiment of the invention, that preferably depends on any of the 14th to 16th embodiments of the invention.

In the 17th embodiment, an example of the transfer of data using electromagnetic waves is the transfer of data using optical signals, e.g., by means of one or more waveguides. In a preferred aspect of the 17th embodiment, the layer of the further kind is adapted and arranged to transfer data using electrical currents.

In a preferred embodiment of the assembly, the layer of the further kind is adapted and arranged to transfer at least 20 %, preferably at least 40 %, and further preferably at least 60 %, of the total data transferrable via the layer of the further kind, using electromagnetic waves. This preferred embodiment is an 18th embodiment of the invention, that preferably depends on the 17th embodiment of the invention.

In a preferred embodiment of the assembly, the layer of the further kind comprises a further plurality of waveguides that are adapted and arranged for the propagation of electromagnetic waves, and wherein at least one waveguide, of the further plurality of waveguides, is in optical connection with at least one waveguide of the first plurality of waveguides. This preferred embodiment is a 19th embodiment of the invention, that preferably depends on any of the 14th to 18th embodiments of the invention.

In a preferred aspect of the 19th embodiment, at least 50 %, more preferably at least 75 %, and further preferably at least 95 % of the waveguides, of the further plurality of waveguides, are in optical connection with at least one waveguide of the first plurality of waveguides.

In a preferred embodiment of the assembly, the first layer of the first kind and the layer of the further kind are separated by a distance of at least 4.5 $\mu$m, preferably at least 5 $\mu$m, and further preferably at least 7 $\mu$m, wherein the distance is measured along the first direction (Z). This preferred embodiment is a 20th embodiment of the invention, that preferably depends on any of the 14th to 19th embodiments of the invention.

In an aspect of the 20th embodiment, the "distance" is defined as the shortest distance between the first layer of the first kind and the layer of the further kind. The "distance" is measured starting from a surface of the first layer of the first kind that faces the layer of the further kind.

In a preferred embodiment of the assembly, a surface area of the layer of the further kind is larger than a surface area of the first layer of the first kind, preferably at least 1.2 times larger, more preferably at least 1.5 times larger, even more preferably at least 2 time larger, further preferably at least 5 times larger, and even further preferably at least 10 times larger. This preferred embodiment is a 21st embodiment of the invention, that preferably depends on any of the 14th to 20th embodiments of the invention.

In the 21st embodiment, the surface area of the layer of the further kind is preferably the area of a surface that is parallel to the first layer of the first kind. In the 21st embodiment, the surface area of the layer of the further kind is preferably the area of a surface that faces away from the first plurality of opto-electronic components. In the 21st embodiment, the surface area of the first layer of the first kind is preferably the area of a surface that faces the first plurality of opto-electronic components. In a preferred aspect of the 21st embodiment, the surface area of the layer of the further kind is at least 20 times, more preferably at least 30 times, and further preferably at least 50 times larger than the surface area of the first layer of the first kind. For example, the surface area of the layer of the further kind can be 100 times larger than the surface area of the first layer of the first kind.

In a preferred embodiment of the assembly, at least one or all of the following applies:

   a. the layer of the further kind comprises less than 2000, preferably less than 1000, more preferably less than 500, even more preferably less than 200, further preferably less than 100, further preferably less than 50, and even further preferably less than 20 opto-electronic components, preferably opto-electronic components selected from the group consisting of a modulator, a photodetector, a combination thereof;
   b. the layer of the further kind comprises less than 2000, preferably less than 1000, more preferably less than 500, even more preferably less than 200, further preferably less than 100, further preferably less than 50, and even further preferably less than 20 electronic components, preferably electronic components selected from the group consisting of a semiconductor component, a transistor, a capacitor, a diode, a resistor, a combination of at least two thereof.

This preferred embodiment is a 22nd embodiment of the invention, that preferably depends on any of the 14th to 21st embodiments of the invention.

In an aspect of the 22nd embodiment, all possible combinations of the features a. and b. are preferred aspects of the embodiment. These combinations are *e.g.,* a; b; a+b. In the 22nd embodiment, the opto-electronic components should preferably not be understood to refer to only the opto-electronic components of the first plurality of opto-electronic components. Rather, the opto-electronic components should preferably be understood to refer to opto-electronic components forming part of any plurality of opto-electronic components. In the 22nd embodiment, the electronic components should preferably not be understood to refer to only the electronic components of the first plurality of electronic components. Rather, the electronic components should preferably be understood to refer to electronic components forming part of any plurality of electronic components.

In a preferred embodiment of the assembly, at least one or all of the following applies:

a. a clock speed of the first layer of the first kind is higher than a clock speed of the layer of the further kind;

b. the layer of the further kind is adapted and arranged to have a maximum clock speed that is in the range from 0 to of 400 MHz, preferably from 0 to 100 MHz, more preferably from 0 to 50 MHz, even more preferably from 0 to 1 MHz, further preferably from 0 to 500 kHz, and further preferably from 0 to 100 kHz.

This preferred embodiment is a 23rd embodiment of the invention, that preferably depends on any of the 14th to 22nd embodiments of the invention.

In an aspect of the 23rd embodiment, all possible combinations of the features a. and b. are preferred aspects of the embodiment. These combinations are *e.g.,* a; b; a+b.

In a preferred embodiment of the assembly, the layer of the further kind comprises at least one connector adapted and arranged to electrically connect at least two electronic components, preferably at least two electronic components that are arranged at a distance of at least 100 nm, more preferably at least 1 $\mu$m, even more preferably at least 15 $\mu$m, further preferably at least 100 $\mu$m, further preferably at least 500 $\mu$m, and even further preferably at least 1000 $\mu$m, from each other. This preferred embodiment is a 24th embodiment of the invention, that preferably depends on any of the 14th to 23rd embodiments of the invention.

In a preferred aspect of the 24th embodiment, the "at least two electronic components" include at least one electronic component of the first plurality of electronic components and at least one electronic component of a second plurality of electronic components. In an optional aspect of the 24th embodiment, the assembly is adapted and arranged such that an electrical current flowing between the at least two electronic components passes through at least one or all of the following: a bonding wire, a solder bump, a microbump, a C4 bump, a C2 bump, a hybrid bond. In a preferred aspect of the 24th embodiment, the assembly is adapted and arranged such that an electrical current flowing between the at least two electronic components can be used to transfer data.

In a preferred embodiment of the assembly, the layer of the further kind comprises at least one or all of the following:

a. a material that has a glass transition temperature, *e.g.,* a glass;

b. silicon, oxygen, boron, sodium, carbon, calcium, aluminium, lead, hafnium, zirconium, a polymer, a combination of at least two thereof.

This preferred embodiment is a 25th embodiment of the invention, that preferably depends on any of the 14th to 24th embodiments of the invention.

In an aspect of the 25th embodiment, all possible combinations of the features a. and b. are preferred aspects of the embodiment. These combinations are *e.g.,* a; b; a+b. In a preferred aspect of the 25th embodiment, feature a., the layer of the further kind comprises at least 50 wt-%, more preferably at least 65 wt-%, and further preferably at least 75 wt-% of a glass, with the wt-% based on a total weight of the layer of the further kind. In a preferred aspect of the 25th embodiment, feature a., the material is amorphous. In the 25th embodiment, feature b., examples of a polymer include an acrylate, such polymethyl methacrylate, and a terephthalate, such as polyethylene terephthalate. In the 25th embodiment, feature b., preferred polymers include polyacrylates (such polymethyl methacrylate), polyesters (such as polyethylene terephthalate), and a fluoropolymer (such as polytetrafluoroethylene).

In a preferred embodiment of the assembly, the layer of the further kind has at least one or all of the following properties:

a. a dielectric constant of at least 3;

b. a thickness that is in the range from 0.01 to 4 mm, preferably from 0.05 to 2 mm, more preferably from 0.1 to 1.3 mm, even more preferably from 0.3 to 1.2 mm, and further preferably from 0.5 to 1 mm;

c. a linear thermal expansion coefficient, measured at 25 °C, that is in the range from $1 \times 10^{-6}$ to $15 \times 10^{-6}$ m/(m °C), preferably from $3 \times 10^{-6}$ to $12 \times 10^{-6}$ m/(m °C), and more preferably from $5 \times 10^{-6}$ to $10 \times 10^{-6}$ m/(m °C).

This preferred embodiment is a 26th embodiment of the invention, that preferably depends on any of the 14th to 25th embodiments of the invention.

In an aspect of the 26th embodiment, all possible combinations of the features a. to c. are preferred aspects of the embodiment. These combinations are *e.g.,* a; b; c; a+b; a+c; b+c; a+b+c.

In a preferred embodiment of the assembly, at least 50 %, preferably at least 75 %, and more preferably at least 95 % of the opto-electronic components, of the first plurality of opto-electronic components, comprise at least one electrically conducting element, wherein said at least one electrically conducting element is preferably adapted and arranged to be electrically charged and/or discharged. This preferred embodiment is a 27th embodiment of the invention, that preferably depends on any of the 1st to 26th embodiments of the invention.

In a preferred aspect of the 27th embodiment, all of the opto-electronic components, of the first plurality of opto-electronic components, comprise at least one electrically conducting element that is adapted and arranged to be electrically charged and discharged.

In a preferred embodiment of the assembly, the electrically conducting elements are adapted and arranged to be in opto-electronic interaction with the first longitudinal portions of the first plurality of waveguides. This preferred embodiment is a 28th embodiment of the invention, that preferably depends on the 27th embodiment of the invention.

In a preferred embodiment of the assembly, at least one or all of the following applies to the at least one electrically conducting element:

a. comprises at least one or all of the following: carbon, a nitride, at least one metal, at least one metal alloy, at least one conductive oxide, at least one conductive polymer, at least one chalcogen, at least one perovskite, a combination of at least two or more thereof;

b. has in the range from 1 to 100, preferably from 1 to 50, and more preferably from 1 to 20 atomic layers. This preferred embodiment is a 29th embodiment of the invention, that preferably depends on any of the 27th to 28th embodiments of the invention.

In an aspect of the 29th embodiment, all possible combinations of the features a. and b. are preferred aspects of the embodiment. These combinations are *e.g.,* a; b; a+b. In an aspect of the 29th embodiment, feature a., carbon is preferred. In this aspect, graphene is particularly preferred. In a preferred aspect of the 29th embodiment, feature b., the at least one electrically conducting element has in the range from 1 to 10, preferably from 1 to 6, and more preferably from 1 to 3 atomic layers.

In a preferred embodiment of the assembly, at least one or all of the following applies to the at least one electrically conducting element:

a. is adapted and arranged to have an optical attenuation coefficient in the range from $2 \times 10^{-4}$ to 0.6 dB/$\mu$m, preferably in the range from $2 \times 10^{-2}$ to 0.40 dB/$\mu$m, and more preferably in the range from 0.15 to 0.25 dB/$\mu$m;

b. is adapted and arranged to have a variable optical attenuation coefficient;

c. has an electrical conductivity of at least $10^4$ S/m, preferably at least $10^5$ S/m, and further preferably at least $10^6$ S/m.

This preferred embodiment is a 30th embodiment of the invention, that preferably depends on any of the 27th to 29th embodiments of the invention.

In an aspect of the 30th embodiment, all possible combinations of the features a. to c. are preferred aspects of the embodiment. These combinations are *e.g.,* a; b; c; a+b; a+c; b+c; a+b+c.

In a preferred embodiment of the assembly, at least 50 %, more preferably at least 75 %, and further preferably at least 85 % of the electronic components, of the first plurality of electronic components, are selected from the group consisting of a semiconductor component, a transistor, a capacitor, a diode, a resistor, an electronic component adapted and arranged to store data using magnetic domains, a combination of at least two thereof. This preferred embodiment is a 31st embodiment of the invention, that preferably depends on any of the 1st to 30th embodiments of the invention.

In the 31st embodiment, it is not required that the electronic components are of the same type, e.g., the electronic components are all transistors. Rather, the first plurality of electronic components may be made up of, e.g., transistors, capacitors, diodes, and resistors. In the 31st embodiment, an example of an electronic component that is adapted and arranged to store data using magnetic domains is magneto-resistive random access memory.

In a preferred embodiment of the assembly, at least 50 %, more preferably at least 75 %, and further preferably at least 95 % of the opto-electronic components, of the first plurality of opto-electronic components, are selected from the group consisting of a modulator, a photodetector, a combination thereof. This preferred embodiment is a 32nd embodiment of the invention, that preferably depends on any of the 1st to 31st embodiments of the invention.

In the 32nd embodiment, it is not required that the opto-electronic components are all of the same type, e.g., the opto-electronic components are all modulators. Rather, the first plurality of opto-electronic components may be made up of, e.g., modulators and photodetectors. In a preferred aspect of the 32nd embodiment, a first fraction of the opto-electronic components, of the first plurality of opto-electronic components, are modulators, and a further fraction of the opto-electronic components, of the first plurality of opto-electronic components, are photodetectors. In this aspect the first fraction and the further fraction preferably add up to 100 %.

In a preferred embodiment of the assembly, at least 50 %, preferably all, of the electronic components, of the first plurality of electronic components, have at least one or all of the following properties:

a. a width that is equal to or less than 500 nm, more preferably equal to or less than 300 nm, and further preferably equal to or less than 100 nm;
b. a length that is equal to or less than 1 mm, more preferably equal to or less than 500 $\mu$m, and further preferably equal to or less than 100 $\mu$m.

This preferred embodiment is a 33rd embodiment of the invention, that preferably depends on any of the 1st to 32nd embodiments of the invention.

In an aspect of the 33rd embodiment, all possible combinations of the features a. and b. are preferred aspects of the embodiment. These combinations are *e.g.,* a; b; a+b. In an aspect of the 33rd embodiment, the electronic components may have a width as small as 10 nm, or even smaller.

In a preferred embodiment of the assembly, the first layer of the first kind is adapted and arranged to form an integrated circuit, preferably an integrated circuit selected from the group consisting of a processing unit, a memory unit, an application-specific integrated circuit, a microcontroller, a field-programmable gate array, and a system-on-chip. This preferred embodiment is a 34th embodiment of the invention, that preferably depends on any of the 1st to 33rd embodiments of the invention.

In a preferred embodiment of the assembly, the first sub-assembly is a die. This preferred embodiment is a 35th embodiment of the invention, that preferably depends on any of the 1st to 34th embodiments of the invention.

In a preferred embodiment of the assembly, the first plurality of waveguides are adapted and arranged for the propagation of electromagnetic waves that have wavelengths in the range from 300 to 3000 nm, preferably in the range of 800 to 2100 nm, and more preferably in the range of 1200 to 1700 nm. This preferred embodiment is a 36th embodiment of the invention, that preferably depends on any of the 1st to 35th embodiments of the invention. In an aspect of the 36th embodiment, it is preferred that the electromagnetic waves have wavelengths in the O-band (1260 nm to 1360 nm) and/or the C-band (1530 nm to 1565 nm).

In a preferred embodiment of the assembly, the assembly further comprises at least one light emitting means adapted and arranged to emit electromagnetic waves, preferably a laser. This preferred embodiment is a 37th embodiment of the invention, that preferably depends on any of the 1st to 36th embodiments of the invention.

In a preferred aspect of the 37th embodiment, the assembly is adapted and arranged such that the electromagnetic waves emitted by the at least one light emitting means can propagate in the first plurality of waveguides. In a preferred aspect of the 37th embodiment, the at least one light emitting means is arranged on the further layer. For example, the at least one light emitting means is flip-chipped on the further layer. In a preferred aspect of the 37th embodiment, the at least one light emitting means is in optical connection with the first plurality of waveguides.

In a preferred embodiment of the assembly, the light emitting means is adapted and arranged to emit electromagnetic waves with a wavelength in the range from 1000 to 2500 nm. This preferred embodiment is a 38th embodiment of the invention, that preferably depends on any of the 1st to 37th embodiments of the invention.

In an aspect of the 38th embodiment, it is preferred that the electromagnetic waves have wavelengths in the O-band (1260 nm to 1360 nm) and/or the C-band (1530 nm to 1565 nm).

In a preferred embodiment of the assembly, the assembly further comprises

a. a second sub-assembly, wherein the second sub-assembly comprises

i. a second plurality of electronic components, preferably arranged in a second layer of the first kind;
ii. a second plurality of waveguides adapted and arranged for the propagation of electromagnetic waves;
iii. a second plurality of opto-electronic components that each

A. has a height that is equal to or less than 50 $\mu$m, preferably equal to or less than 20 $\mu$m, and more preferably equal to or less than 10 $\mu$m,
B. is adapted and arranged to modify electromagnetic waves propagating in a first longitudinal portion of a waveguide, of the second plurality of waveguides;

iv. a second plurality of connectors, wherein

A. at least one connector, of the second plurality of connectors, is adapted and arranged to electrically connect at least two electronic components, of the second plurality of electronic components,
B. at least one connector, of the second plurality of connectors, is adapted and arranged to electrically connect at least one electronic component, of the second plurality of electronic components, with at least one opto-electronic component, of the second plurality of opto-electronic components, and
C. preferably, at least one connector, of the second plurality of connectors, is adapted and arranged to electrically connect at least two opto-electronic components, of the second plurality of opto-electronic components;

wherein at least one opto-electronic component, of the first plurality of opto-electronic components, is in optical connection with at least one opto-electronic component, of the second plurality of opto-electronic components.

This preferred embodiment is a 39th embodiment of the invention, that preferably depends on any of the 1st to 38th embodiments of the invention, more preferably any of the 14th to 38th embodiments of the invention.

In a preferred aspect of the 39th embodiment, preferred embodiments and preferred aspects of the first-sub-assembly are also preferred embodiments and preferred aspects, *mutatis mutandis,* of the second sub-assembly. For example, any of the 27th to 30th, and 31st preferred embodiments preferably apply, *mutatis mutandis,* to the second plurality of opto-electronic components. In a preferred aspect of the 39th embodiment, the second sub-assembly comprises a second layer of the first kind. In this aspect, it is preferred that an average minimum distance $I_Z$ between the first longitudinal portions, of the second plurality of waveguides, and the second plurality of connectors is in the range from 2 to 3.5 $\mu$m, preferably in the range from 2.1 to 3.1 $\mu$m, more preferably in the range from 2.2 to 2.8 $\mu$m, and further preferably in the range from 2.3 to 2.6 $\mu$m, wherein the average minimum distance $I_Z$ is measured parallel to the first direction (Z). In a preferred aspect of the 39th embodiment, an average minimum distance $I_X$, between the first longitudinal portions, of the second plurality of waveguides, and the second plurality of connectors is in the range from 0.75 to 1.7 $\mu$m, preferably from 0.8 to 1.5 $\mu$m, more preferably from 0.85 to 1.3 $\mu$m, and further preferably from 0.9 to 1.1 $\mu$m, wherein the average minimum distance $I_X$ is measured parallel to the further direction (X). In a preferred aspect of the 39th embodiment, the second plurality of opto-electronic components comprises at least 20, more preferably at least 50, more preferably at least 75, even more preferably at least 100, further preferably at least 150, and even further preferably at least 200 opto-electronic components. E.g., the second plurality of opto-electronic components may comprise 1000 or more opto-electronic components.

In a preferred embodiment of the assembly, at least one waveguide, of the further plurality of waveguides in the layer of the further kind, is in optical connection with at least one waveguide of the second plurality of waveguides. This preferred embodiment is a 40th embodiment of the invention, that preferably depends on the 39th embodiment of the invention, more preferably depends on the 39th embodiment of the invention when the 39th embodiment depends on any of the 14th to 38th embodiments of the invention.

In a preferred aspect of the 40th embodiment, the layer of the further kind is adapted and arranged to transport electromagnetic waves between the first plurality of opto-electronic components and the second plurality of opto-electronic components.

In a preferred embodiment of the assembly, at least one or all of the following applies:

a. a minimum distance between the first plurality of electronic components and the second plurality of electronic components is at least 0.01 mm, preferably at least 0.05 mm, more preferably at least 0.08 mm, even more preferably at least 0.2 mm, further preferably at least 0.5 mm, and even further preferably at least 1 mm;

b. a minimum distance between the first plurality of opto-electronic components and the second plurality of opto-electronic components is at least 0.01 mm, preferably at least 0.05 mm, more preferably at least 0.08 mm, even more preferably at least 0.2 mm, further preferably at least 0.5 mm, and even further preferably at least 1 mm.

This preferred embodiment is a 41st embodiment of the invention, that preferably depends on any of the 39th to 40th embodiments of the invention.

In an aspect of the 41st embodiment, all possible combinations of the features a. and b. are preferred aspects of the embodiment. These combinations are *e.g.,* a; b; a+b. In a preferred aspect of the 41st embodiment, feature a., the minimum distance between the first plurality of electronic components and the second plurality of electronic components is in the range from 0.01 mm to 1 m, more preferably from 1 mm to 50 cm. In a preferred aspect of the 41st embodiment, feature b., the minimum distance between the first plurality of opto-electronic components and the second plurality of opto-electronic components is in the range from 0.01 mm to 1 m, more preferably from 1 mm to 50 cm.

In a preferred embodiment of the assembly, the assembly comprises

a. a first integrated circuit that comprises the first plurality of electronic components, and
b. a second integrated circuit that comprises the second plurality of electronic components.

This preferred embodiment is a 42nd embodiment of the invention, that preferably depends on any of the 39th to 41st embodiments of the invention.

In a preferred aspect of the 42nd embodiment, the first integrated circuit is arranged in the first layer of the first kind and the second integrated circuit is arranged in the second layer of the first kind.

In a preferred embodiment of the assembly, one of the following applies:

a. the first sub-assembly is adapted and arranged to function as a processing unit, and the second sub-assembly is adapted and arranged to function as a memory unit;

b. the first sub-assembly is adapted and arranged to function as a memory unit, and the second sub-assembly is adapted and arranged to function as a processing unit.

This preferred embodiment is a 43rd embodiment of the invention, that preferably depends on any of the 39th to 42nd embodiments of the invention.

In an aspect of the 43rd embodiment, all possible combinations of the features a. and b. are preferred aspects of the embodiment. These combinations are *e.g.,* a; b; a+b.

A 44th embodiment of the invention is a method for producing an assembly, comprising the steps of

I. providing a layer of a first kind;

II. superimposing a waveguide layer on the layer of the first kind;

III. removing at least one section of the waveguide layer to obtain a plurality of waveguides;

IV. superimposing at least one electrically conducting element layer on the plurality of waveguides;

V. removing at least one section of the at least one electrically conducting element layer to obtain a plurality of electrically conducting elements;

VI. forming a first plurality of electrodes that are in electrical connection with the plurality of electrically conducting elements;

VII. forming a further plurality of electrodes that are in electrical connection with the layer of the first kind;

VIII. bringing at least one electrode, of the first plurality of electrodes, and at least one electrode, of the further plurality of electrodes, into electrical connection with each other.

In a preferred aspect of the 44th embodiment, the layer of the first kind comprises a plurality of electronic components. In a preferred aspect of the 44th embodiment, the layer of the first kind comprises a plurality of connectors, wherein at least one connector is adapted and arranged to electrically connect at least two electronic components. In a preferred aspect of the 44th embodiment, the layer of the first kind comprises a FEOL layer and a BEOL layer. In a preferred aspect of the 44th embodiment, the longitudinal portions of the waveguides, of the plurality of waveguides, that are overlapped by the plurality of electrically conducting elements are first longitudinal portions. In a preferred aspect of the 44th embodiment, the plurality of electrically conducting elements form a plurality of opto-electronic components. In the 44th embodiment, an electrode should preferably be understood as being an example of a connector.

In a preferred embodiment of the method for producing an assembly, the step of forming the first plurality of electrodes comprises the sub-steps of:

a. preferably superimposing a dielectric layer A on the plurality of electrically conducing elements;

b. forming a first plurality of through-holes, preferably through the dielectric layer A, wherein said through-holes extend to at least one electrically conducting element;

c. superimposing a first electrically conducting material, preferably in the form of a layer, on the plurality of electrically conducing elements, and preferably on the dielectric layer A if present, thereby at least partially filling the first plurality of through-holes, and thereby forming the first plurality of electrodes.

This preferred embodiment is a 45th embodiment of the invention, that preferably depends on the 44th embodiment of the invention.

In a preferred embodiment of the method for producing an assembly, the first plurality of through-holes do not pass through the layer of the first kind. This preferred embodiment is a 46th embodiment of the invention, that preferably depends on the 45th embodiment of the invention.

In an alternative embodiment of the invention, e.g., an alternative to the 46th embodiment, the first plurality of through-holes pass through the layer of the first kind.

In a preferred embodiment of the method for producing an assembly, the step of forming the further plurality of electrodes comprises the following sub-steps:

a. forming a further plurality of through-holes, preferably through the dielectric layer A, wherein said through-holes extend to the layer of the first kind;

b. superimposing a second electrically conducting material, preferably in the form of a layer, on the plurality of electrically conducing elements, and preferably on the dielectric layer A if present, thereby at least partially filling the further plurality of through-holes, and thereby forming the further plurality of electrodes.

This preferred embodiment is a 47th embodiment of the invention, that preferably depends on any of the 44th to 46th embodiments of the invention.

In a preferred embodiment of the method for producing an assembly, the step of bringing the first plurality of electrodes and the further plurality of electrodes into electrical connection with each other comprises the following sub-steps:

> a. superimposing a dielectric layer B on the plurality of electrically conducting elements;
> b. removing at least one section of the dielectric layer B to form at least one recess in the dielectric layer B, preferably such that an end of at least one electrode, of the first plurality of electrodes, and an end of at least one electrode, of the further plurality of electrodes, are exposed;
> c. superimposing a third electrically conducting material, preferably in the form of a layer, on the dielectric layer B, thereby at least partially filling the at least one recess and electrically connecting the end of the at least one electrode, of the first plurality of electrodes, with the end of the at least one electrode, of the further plurality of electrodes.

This preferred embodiment is a 48th embodiment of the invention, that preferably depends on any of the 44th to 47th embodiments of the invention.

In a preferred embodiment of the method for producing an assembly, the method further comprises the step of providing connecting elements that are adapted and arranged to electrically connect the assembly with at least one or all of the following:

> a. a further sub-assembly, e.g., a second sub-assembly;
> b. a layer of the further kind;
> c. a printed circuit board.

This preferred embodiment is a 49th embodiment of the invention, that preferably depends on any of the 44th to 48th embodiments of the invention.

In an aspect of the 49th embodiment, all possible combinations of the features a. to c. are preferred aspects of the embodiment. These combinations are *e.g.,* a; b; c; a+b; a+c; b+c; a+b+c. The step in the 49th embodiment is preferably performed after step VIII. of the 44th embodiment.

In a preferred aspect of any of the 45th to 49th embodiments of the invention, at least one or all of the following have the same elemental composition and/or chemical composition: the first electrically conducting material, the second electrically conducting material, and the third electrically conducting material.

In an aspect of the invention, it is preferred that the assembly according to any of the 1st to 43rd embodiments of the invention is obtainable by the method according to any of the 44th to 49th embodiments of the invention.

A 50th embodiment of the invention is an assembly obtainable by a method, according to the invention, for producing an assembly, preferably the method according to any of the 44th to 49th embodiments of the invention.

A 51st embodiment of the invention is a use of an assembly according to the invention, preferably the assembly according to any of the 1st to 43rd, and 50th embodiments of the invention, in a computing device for at least one or all of the following:

> a. a transfer of data between at least two electronic components, preferably at least one electronic component of the first plurality of electronic components and at least one electronic component of a second plurality of electronic components;
> b. a transfer of data between at least two opto-electronic components, preferably at least one opto-electronic component of the first plurality of opto-electronic components and at least one opto-electronic component of the second plurality of opto-electronic components.

In an aspect of the 51st embodiment, all possible combinations of the features a. and b. are preferred aspects of the embodiment. These combinations are *e.g.,* a; b; a+b. Examples of the transfer of data in the 51st embodiment is the transfer of data between at least two integrated circuits, and the transfer of data between a first part of an integrated circuit and a further part of an integrated circuit. In a preferred aspect of the 51st embodiment, feature a., the data is transferred via at least one, preferably at least two opto-electronic components.

In a preferred embodiment of the use of the assembly, at least one or all of the following applies:

> a. a minimum distance between the at least two electronic components is at least 0.08 mm, more preferably at least 0.2 mm, and further preferably at least 0.5 mm;
> b. a minimum distance between the at least two opto-electronic components is at least 0.08 mm, more preferably at least 0.2 mm, and further preferably at least 0.5 mm.

This preferred embodiment is a 52nd embodiment of the invention, that preferably depends on the 51st embodiment of the invention.

In an aspect of the 52nd embodiment, all possible combinations of the features a. and b. are preferred aspects of the embodiment. These combinations are *e.g.,* a; b; a+b. In a preferred aspect of the 52nd embodiment, feature a., the minimum distance between the at least two electronic components are in the range from 0.01 mm to 1 m, more preferably from 1 mm to 70 cm. In a preferred aspect of the 52nd embodiment, feature b., the minimum distance between the at least two opto-electronic components is in the range from 0.01 mm to 1 m, more preferably from 1 mm to 50 cm.

In a preferred embodiment of the use of the assembly, the data is transferred using electromagnetic waves, *e.g.,* optical signals. This preferred embodiment is a 53rd embodiment of the invention, that preferably depends on any of the 51st to 52nd embodiments of the invention.

In a preferred embodiment of the use of the assembly, the data is transferred via a layer of the further kind. This preferred embodiment is a 54th embodiment of the invention, that preferably depends on any of the 51st to 53rd embodiments of the invention.

A 55th embodiment of the invention is an assembly according to the invention, preferably the assembly according to any of the 1st to 43rd, and 50th embodiments of the invention, wherein the assembly is selected from the group consisting of an assembly adapted and arranged for local communication, an assembly adapted and arranged for telecommunication, an assembly adapted and arranged for high-performance computing, an assembly adapted and arranged for artificial intelligence (e.g., machine learning), an assembly adapted and arranged for a data centre, an assembly adapted and arranged for a switch (e.g., a network switch), an assembly adapted and arranged for an optical interconnect, an assembly adapted and arranged for a computer chip, a combination of at least two thereof.

A 56th embodiment of the invention is an optical sensing module **900** comprising:

> a. preferably a light emitting means **901** adapted an arranged to emit first electromagnetic waves directed towards a target area **902;**
> b. a sensing unit **903** adapted and arranged to detect further electromagnetic waves from the target area **902,** thereby generating an electrical signal;
> c. preferably, optics **904** adapted and arranged to focus the further electromagnetic waves onto the sensing unit **903;**
> d. an assembly **905** according to the invention, preferably the assembly according to any of the 1st to 43rd, and 50th embodiments of the invention, wherein the assembly comprises a first sub-assembly **906,** and wherein preferably at least one or all of the following applies:

>> i. the first sub-assembly **906** is adapted and arranged to be in data communication with the sensing unit **903,**
>> ii. the assembly **900** comprises a second sub-assembly **907** that is adapted and arranged to be in data communication, more preferably optical contact, with the first sub-assembly **906.**

A 57th embodiment of the invention is a first apparatus **1000** adapted and arranged for a medical application, comprising

> a. a sensing unit **1001** adapted and arranged to measure at least one physical property of a body, preferably a mammalian body;
> b. an assembly **1002** according to the invention, preferably the assembly according to any of the 1st to 43rd, and 50th embodiments of the invention, wherein the assembly **1002** comprises a first sub-assembly **1003,** and wherein preferably at least one or all of the following applies:

>> i. the first sub-assembly **1003** is adapted and arranged to be in data communication with the sensing unit **1001,**
>> ii. the assembly **1002** comprises a second sub-assembly **1004** that is adapted and arranged to be in data communication, more preferably optical contact, with the first sub-assembly **1003.**

A 58th embodiment of the invention is a vehicle **1100** adapted and arranged for flight, wherein the vehicle **1100** comprises

> a. a sensing unit **1101** preferably adapted and arranged to provide information about surroundings (e.g., a target area) of the vehicle **1100,** more preferably spatial information about surroundings of the vehicle **1100;**
> b. an assembly **1102** according to the invention, preferably the assembly according to any of the 1st to 43rd, and 50th embodiments of the invention, wherein the assembly **1102** comprises a first sub-assembly **1103,** and wherein preferably at least one or all of the following applies:

>> i. the first sub-assembly **1103** is adapted and arranged to be in data communication with the sensing unit **1101,**
>> ii. the assembly **1102** comprises a second sub-assembly **1104** that is adapted and arranged to be in data communication, more preferably optical contact, with the first sub-assembly **1103;**

c. preferably a propulsion means **1105;**
d. preferably a means to generate lift **1106;**
e. preferably a control system **1107** adapted and arranged to control a movement of the vehicle, more preferably wherein the control system is more prefer.

In a preferred embodiment of the vehicle adapted and arranged for flight, said vehicle is selected from the group consisting of an airplane, a helicopter, a drone, a rocket, a satellite, a balloon (e.g., a weather balloon, a hot-air balloon) and a missile. This preferred embodiment is a 59th embodiment of the invention, that preferably depends on the 58th embodiment of the invention.

A 60th embodiment of the invention is a robotic system **1200,** comprising:

a. a robotic body **1201** adapted and arranged for movement;
b. preferably a sensing unit **1202** preferably adapted and arranged provide spatial information about surroundings (e.g., a target area) of the robotic body **1201;**
c. an assembly **1203** according to the invention, preferably the assembly according to any of the 1st to 43rd, and 50th embodiments of the invention, wherein the assembly **1203** comprises a first sub-assembly **1204,** and wherein preferably at least one or all of the following applies:

i. the first sub-assembly **1204** is adapted and arranged to be in data communication with the sensing unit **1202,**
ii. the assembly **1203** comprises a second sub-assembly **1205** that is adapted and arranged to be in data communication, more preferably optical contact, with the first sub-assembly **1204;**
iii. the assembly **1203** is arranged in the robotic body **1201;**

d. preferably a control module **1206** adapted and arranged to control a movement of the robotic body **1201,** preferably based on the spatial information provided by the sensing unit **1206,** wherein the control module **1206** is preferably adapted and arranged to be in data communication with the sensing unit **1201** by means of the assembly **1203.**

A 61st embodiment of the invention is a first system **1300,** comprising:

a. an assembly **1301** according to the invention, preferably the assembly according to any of the 1st to 43rd, and 50th embodiments of the invention, wherein the assembly **1301** comprises a first sub-assembly **1302,** and preferably comprises a second sub-assembly **1303** that is adapted and arranged to be in data communication, more preferably optical contact, with the first sub-assembly **1302;**
b. one or more memory units **1304,** preferably one or more optical memory units, adapted and arranged to store instructions and/or data;
c. one or more processors **1305,** preferably one or more optical processors, that are adapted and arranged

i. to be in data communication, and preferably in optical connection, with the one or more memory units **1304,**
ii. to execute the instructions stored in the one or more memory units **1304** and/or to perform operations using optical signals.

A 62nd embodiment of the invention is a second system **1400** comprising:

a. an assembly **1401** according to the invention, preferably the assembly according to any of the 1st to 43rd, and 50th embodiments of the invention, wherein the assembly **1401** comprises a first sub-assembly **1402,** and preferably comprises a second sub-assembly **1403** that is adapted and arranged to be in data communication, more preferably optical contact, with the first sub-assembly **1402;**
b. a homomorphic operation module **1404** that is adapted and arranged for performing homomorphic operations on encrypted optical data to obtain modified encrypted optical data,
c. preferably, a photonic encryption module **1405,** wherein the photonic encryption module **1405**

i. is preferably in optical connection with the homomorphic operation module **1404,**
ii. is adapted and arranged for encrypting optical data, preferably using an optical encoding scheme, to obtain the encrypted optical data;

d. preferably, a photonic decryption module **1406,** wherein the photonic decryption module **1406**

i. is preferably in optical connection with the homomorphic operation module **1404,** the photonic encryption module **1405,** or both,
ii. is adapted and arranged for decrypting the modified encrypted optical data, preferably using an optical decoding scheme;

wherein
preferably at least one or all of the following are adapted and arranged to be in data connection via the at least one assembly **1401:**

    A. the homomorphic operation module **1404** and the photonic encryption module **1405;**
    B. the homomorphic operation module **1404** and the photonic decryption module **1406;**
    C. the photonic encryption module **1405** and the photonic decryption module **1406.**

A 63<sup>rd</sup> embodiment of the invention is a first transportation means **1500,** preferably adapted and arranged for autonomous travel, comprising:

    a. a sensing unit **1501,** wherein preferably adapted and arranged to provide spatial information about surroundings (e.g., a target area) of the first transportation means **1500;**
    b. an assembly **1502** according to the invention, preferably the assembly according to any of the 1<sup>st</sup> to 43<sup>rd</sup>, and 50<sup>th</sup> embodiments of the invention, wherein the assembly **1502** comprises a first sub-assembly **1503,** and wherein preferably at least one or all of the following applies:

        i. the first sub-assembly **1503** is adapted and arranged to be in data communication with the sensing unit **1501,**
        ii. the assembly **1502** comprises a second sub-assembly **1504** that is adapted and arranged to be in data communication, more preferably optical contact, with the first sub-assembly **1503.**

    c. a processing module **1505**

        i. comprising a perception sub-module **1506** adapted and arranged to analyse and/or process the spatial information from the sensing unit **1501** to provide perception data on a presence and/or a classification of patterns and/or items in the target area,
        ii. comprising a generation sub-module **1507** adapted and arranged to process the perception data, and to preferably generate a recommendation, a control instruction, or both;
        iii. wherein the processing module **1505** is preferably adapted and arranged to be in data communication, more preferably optical connection, with the sensing unit **1501,** more preferably via the assembly **1502;**

    d. preferably a human-machine interface **1508** adapted and arranged to provide feedback to a user based on the recommendation, the control instruction, or both;
    e. preferably a control unit **1509** adapted and arranged to execute the recommendation, the control instruction, or both;
    f. a steering means **1510** adapted and arranged to steer the first transportation means **1500,** wherein the control unit **1509** is preferably adapted and arranged to control the steering means **1510,**
    g. a propulsion means **1511** adapted and arranged to provide propulsion to the first transportation means **1500,** wherein the control unit **1509** is preferably adapted and arranged to control the propulsion means **1511.**

A 64<sup>th</sup> embodiment of the invention is a further transportation means **1600** comprising:

    a. an assembly **1601** according to the invention, preferably the assembly according to any of the 1<sup>st</sup> to 43<sup>rd</sup>, and 50<sup>th</sup> embodiments of the invention, wherein the assembly **1601** comprises a first sub-assembly **1602,** and wherein preferably the assembly **1601** comprises a second sub-assembly **1603** that is adapted and arranged to be in data communication, more preferably optical contact, with the first sub-assembly **1602;**
    b. a steering means **1604** adapted and arranged to steer the further transportation means **1600,**
    c. a propulsion means **1605** adapted and arranged to provide propulsion to the further transportation means **1600.**

A 65<sup>th</sup> embodiment of the invention is a third system **1700,** comprising:

    a. an assembly **1701** according to the invention, preferably the assembly according to any of the 1<sup>st</sup> to 43<sup>rd</sup>, and 50<sup>th</sup> embodiments of the invention, wherein the assembly **1701** comprises a first sub-assembly **1702,** and wherein preferably the assembly **1701** comprises a second sub-assembly **1703** that is adapted and arranged to be in data communication, more preferably optical contact, with the first sub-assembly **1702;**

b. preferably, wherein the third system **1700** is adapted and arranged for at least one or all of the following: artificial intelligence, machine learning, graphics rendering, large-scale visualisation, gaming, high-frequency trading, video streaming, audio recognition, image recognition, object recognition, virtual reality, molecular simulation, scientific simulations (e.g., the modelling of weather patterns and/or climate, the modelling of star formation), the solving of equations, data mining, cloud-based applications.

A 66th embodiment of the invention is a use of the assembly according to the invention, preferably the assembly according to any of the 1st to 43rd, and 50th embodiments of the invention, for at least one or all of the following:

a. at least one on communication and telecommunication;
b. high-performance computing;
c. artificial intelligence applications and/or machine learning applications;
d. optical sensing;
e. optical computing;
f. at least one or all of homomorphic operations, photonic encryption, photonic decryption.

In the 66th embodiment of the invention, all possible combinations of the features a. to f. are preferred aspects of the invention.

A 67th embodiment of the invention is a use of an assembly according to the invention, preferably the assembly according to any of the 1st to 43rd, and 50th embodiments of the invention, in at least one or all of the following:

a. a system adapted and arranged for at least one on communication and telecommunication;
b. a system adapted and arranged for high-performance computing;
c. a data centre,
d. at least one of a switch (e.g., a network switch), an optical interconnect;
e. a computer chip;
f. a module adapted and arranged for optical sensing;
g. an apparatus adapted and arranged for a medical application;
h. a vehicle adapted and arranged for flight;
i. a robotic system;
j. a system adapted and arranged for optical computing;
k. at least one of a homomorphic operation module, a photonic encryption module, a photonic decryption module;
l. a transportation means,
m. a system adapted and arranged for at least one of artificial intelligence applications and/or machine learning applications.

In the 67th embodiment of the invention, all possible combinations of the features a. to m. are preferred aspects of the invention.

A 68th embodiment of the invention is a use of an assembly according to the invention, preferably the assembly according to any of the 1st to 43rd, and 50th embodiments of the invention, for at least one or all of the following: graphics rendering, large-scale visualisation, gaming, high-frequency trading, video streaming, audio recognition, image recognition, object recognition, virtual reality, molecular simulation, scientific simulations (e.g., the modelling of weather patterns and/or climate, the modelling of star formation), the solving of equations, data mining, cloud-based applications.

A 69th embodiment of the invention is a use of an assembly according to the invention, preferably the assembly according to any of the 1st to 43rd, and 50th embodiments of the invention, in at least one or all of the following: an apparatus adapted and arranged for consumer applications; an apparatus adapted and arranged for laser and/or light detection and ranging; an apparatus adapted and arranged for optical spectroscopy; a system adapted and arranged for high performance computing, preferably for memory intensive applications, big data, or search engines; an apparatus adapted and arranged for virtual reality, augmented reality, gaming; an apparatus adapted and arranged for streaming and/or video broadcasting; a system adapted and arranged for trading, brokerage, and/or financing; a system adapted and arranged for wireless communication; an apparatus adapted and arranged for biometric searches, personal data management, or patient data management; an apparatus adapted and arranged for climate prediction, weather forecast, and/or scientific simulations (e.g., the modelling of star formation); an apparatus adapted and arranged for molecular simulation, drug discovery, and/or gene sequencing; and an apparatus adapted and arranged for an enterprise cloud.

A 70th embodiment of the invention is an item comprising an assembly according to the invention, preferably the assembly according to any of the 1st to 43rd, and 50th embodiments of the invention, wherein the item is selected from a group consisting of:

a. a system adapted and arranged for at least one on communication and telecommunication;
b. a system adapted and arranged for high-performance computing;
c. a data centre,
d. at least one of a switch (e.g., a network switch), an optical interconnect;
e. a computer chip;
f. a module adapted and arranged for optical sensing;
g. an apparatus adapted and arranged for a medical application;
h. a vehicle adapted and arranged for flight;
i. a robotic system;
j. a system adapted and arranged for optical computing;
k. at least one of a homomorphic operation module, a photonic encryption module, a photonic decryption module;
l. a transportation means,
m. a system adapted and arranged for at least one of artificial intelligence applications and/or machine learning applications.

In the 70<sup>th</sup> embodiment of the invention, all possible combinations of the features a. to m. are preferred aspects of the invention.

A 71<sup>st</sup> embodiment of the invention is an item comprising an assembly according to the invention, preferably the assembly according to any of the 1<sup>st</sup> to 43<sup>rd</sup>, and 50<sup>th</sup> embodiments of the invention, wherein the item is selected from a group consisting of: an apparatus adapted and arranged for consumer applications; an apparatus adapted and arranged for laser and/or light detection and ranging; an apparatus adapted and arranged for optical spectroscopy; a system adapted and arranged for high performance computing, preferably for memory intensive applications, big data, or search engines; an apparatus adapted and arranged for virtual reality, augmented reality, gaming; an apparatus adapted and arranged for streaming and/or video broadcasting; a system adapted and arranged for trading, brokerage, and/or financing; a system adapted and arranged for wireless communication; an apparatus adapted and arranged for biometric searches, personal data management, or patient data management; an apparatus adapted and arranged for climate prediction, weather forecast, and/or scientific simulations (e.g., the modelling of star formation); an apparatus adapted and arranged for molecular simulation, drug discovery, and/or gene sequencing; and an apparatus adapted and arranged for an enterprise cloud.

DETAILED DESCRIPTION OF THE INVENTION

Features described as preferred in one category of the invention, for example according to the assembly, are analogously preferred in embodiments of the other categories according to the invention, such as a method for producing an assembly and a use of the assembly.

Throughout this document, disclosures of ranges should preferably be understood to include both end points of the range. Furthermore, each disclosure of a range in the document should preferably be understood as also disclosing preferred sub-ranges in which one end point is excluded or both end points are excluded. For example, a disclosure of a range from $X_1$ to $X_2$ is to be understood as disclosing a range that includes both of the end points $X_1$ and $X_2$. Furthermore, it is to be understood as also disclosing a range that includes the end point $X_1$ but excludes the end point $X_2$, a range that excludes the end point $X_1$ but includes the end point $X_2$, and a range that excludes both end points $X_1$ and $X_2$.

Some preferred embodiments and preferred aspects have various combinations of features as alternatives. If the various combinations are disclosed, these combinations are separated by a semi-colon (";"). For example, the list of features "a; a+b; a+c+d" for a preferred embodiment discloses a preferred embodiment that comprises the feature "a", a preferred embodiment that comprises the features "a" and "b", and a preferred embodiment that comprises the features "a", "c", and "d".

Assembly

An assembly according to the invention may consist of only one sub-assembly. However, it is more preferred that an assembly according to the invention comprises at least one sub-assembly. A preferred example of a sub-assembly is a die.

In a preferred aspect of the invention, the assembly comprises a first -sub-assembly, wherein the first sub-assembly comprises an integrated circuit and wherein the first integrated circuit is preferably arranged in a first layer of the first kind. In this aspect, it is preferred that the first sub-assembly is a first die. In a preferred aspect of the invention, the assembly comprises a first sub-assembly and a second sub-assembly, wherein the first sub-assembly comprises a first integrated circuit, preferably arranged in a first layer of the first kind, and wherein the second sub-assembly comprises a second integrated circuit, preferably arranged in a second layer of the first kind. In this aspect, it is preferred that the first sub-assembly is a first die and the second sub-assembly is a second die. In this aspect the first die and the second die may be part of different chips or the same chip.

In a preferred aspect of the invention, the assembly comprises a first sub-assembly and a second sub-assembly. In this aspect, the first sub-assembly comprises a first plurality of electronic components and a first plurality of opto-electronic components. In this aspect, the second sub-assembly comprises a second plurality of electronic components and a second plurality of opto-electronic components. In this aspect, preferably at least one opto-electronic component, of the first plurality of opto-electronic components, is in optical connection with at least one opto-electronic component of the second plurality of opto-electronic components. This should preferably not be understood to mean that there is only an optical connection between the first sub-assembly and the second sub-assembly. The assembly may comprise one or more connectors that are adapted and arranged to electrically connect at least one electronic component, of the first plurality of electronic components, with at least one electronic component of the second plurality of electronic components.

In an optional aspect of the invention, the first sub-assembly comprises electronic components that do not form part of the first plurality of electronic components. It is, however, more preferred that at least 50 %, more preferably at least 75 %, even more preferably at least 85 %, and further preferably at least 95 % of the electronic components in the first sub-assembly form part of the first plurality of electronic components.

In an optional aspect of the invention, the first sub-assembly comprises opto-electronic components that do not form part of the first plurality of opto-electronic components. It is, however, more preferred that at least 50 %, more preferably at least 75 %, even more preferably at least 85 %, and further preferably at least 95 % of the opto-electronic components in the first sub-assembly form part of the first plurality of opto-electronic components.

In a preferred aspect of the invention, the assembly comprises at least 20, more preferably at least 50, more preferably at least 75, even more preferably at least 100, further preferably at least 150, and even further preferably at least 200 opto-electronic components. E.g., the assembly may comprise 1000 or more opto-electronic components. In an optional aspect of the invention, the first sub-assembly comprises waveguides that do no form part of the first plurality of waveguides. It is, however, more preferred that at least 50 %, more preferably at least 75 %, even more preferably at least 85 %, and further preferably at least 95 % of the waveguides in the first sub-assembly form part of the first plurality of waveguides.

In an optional aspect of the invention, the first sub-assembly comprises connectors that do not form part of the first plurality of connectors. It is, however, more preferred that at least 50 %, more preferably at least 75 %, even more preferably at least 85 %, and further preferably at least 95 % of the connectors in the first sub-assembly form part of the first plurality of connectors.

Layer of the first kind

A layer of the first kind preferably comprises a semiconductor substrate, more preferably a monolithic semiconductor substrate. A layer of the first kind preferably comprises silicon, more preferably crystalline silicon. A layer of the first kind preferably comprises at least one integrated electronic element, preferably at least one integrated electronic element arranged on the semiconductor substrate, or at least partially arranged in the semiconductor substrate, or both. A layer of the first kind preferably has a thickness in the range from 200 to 1100 $\mu$m, more preferably from 250 to 975 $\mu$m, and further preferably from 300 to 900 $\mu$m. A layer of the first kind is preferably adapted and arranged to comprise an integrated circuit.

A preferred layer of the first kind, when the layer of the first kind is viewed in a cross-sectional cut, comprises at least two sub-layers. In this aspect it is preferred that the layer of the first kind comprises a sub-layer of a first kind and a sub-layer of a further kind. It is preferred that the sub-layer of the further kind is superimposed on the sub-layer of the first kind. A sub-layer of the first kind is preferably a Front-End-of-Line (FEOL). A preferred FEOL sub-layer comprises one or more electronic components, more preferably integrated electronics components. Examples of preferred electronic components include transistors, capacitors, diodes, and resistors. A sub-layer of the further kind is preferably a back-end-of-line (BEOL). A preferred BEOL sub-layer comprises at least one or more metal layers and/or at least one or more vias adapted and arranged to electrically connect electronic components in a FEOL sub-layer.

A layer of the first kind suitable for the present invention are well-known to the skilled person, and is commercially available from, e.g., United Microelectronics Corporation (Taiwan) and Taiwan Semiconductor Manufacturing Company Limited (Taiwan).

Layer of a further kind

A preferred layer of a further kind is adapted and arranged to transfer data, more preferably to transfer data between at least two sub-assemblies and/or between at least two assemblies and/or between at least one sub-assembly and at least one assembly. A preferred example of a layer of the further kind is an interposer. Interposers are well-known to the skilled person.

A passive layer of the further kind should preferably be understood to mean that the layer of the further kind is not adapted and arranged to perform logic operations.

An active layer of the further kind should preferably be understood to mean that the layer of the further kind is adapted and arranged to perform logic operations and/or storage operations. An example of a logical operation is a function applied to bits. An example of storage operation is the storing of data.

In a preferred aspect of the invention, the layer of the further kind is a passive layer of the further kind, more preferably a passive interposer.

In a preferred aspect of the invention, a refractive index of the layer of the further kind is smaller than a refractive index of the waveguides of the further plurality of waveguides.

In a preferred aspect of the invention, the layer of the further kind is adapted and arranged for a maximum optical conversion rate of 10 Gbibs, more preferably 1 Gbibs, and further preferably 0.1 Gbibs. Here the optical conversion rate is the rate at which data, carried by an electrical signal, is converted to an optical signal. In a preferred aspect of the invention, the layer of the further kind is adapted and arranged for a maximum electrical conversion rate of 10 Gbibs, more preferably 1 Gbibs, and further preferably 0.1 Gbibs. Here the electrical conversion rate is the rate at which data, carried by an optical signal, is converted to an electrical signal.

The layer of the further kind may comprise any material that the skilled person deems suitable for the present invention. For example, the layer of the further kind may comprise fibreglass, at least one epoxy, and/or a material that is used in printed circuit boards. It is, however, more preferred that the layer of the further kind comprises glass.

Electronic component

An electronic component is preferably a semiconductor component. A semiconductor component should preferably be understood as a component that uses the electronic properties of a semiconductor material. Examples of a semiconductor material include silicon, germanium, gallium arsenide, gallium nitride, and silicon carbide. Examples of preferred electronic components include a transistor, a capacitor, a diode, a resistor, an electronic component adapted and arranged to store data using magnetic domains, a magnetic tunnel junction, spin orbit torque junctions, and a combination of at least two thereof. An example of an electronic component that is adapted and arranged to store data using magnetic domains is magneto-resistive random access memory. An electronic component is preferably integrated into a layer of the first kind.

Opto-electronic component and modification

An opto-electronic component is adapted and arranged to modify an electromagnetic wave. Examples of preferred opto-electronic components include modulators and photodetectors. A preferred modulator at least partially converts an electrical signal to an optical signal. A preferred photodetector at least partially converts an optical signal to an electrical signal.

Modification of an electromagnetic wave should preferably be understood as the modification of one or more properties of an electromagnetic wave. Examples of these properties include amplitude, phase, frequency, and polarisation.

A modulator preferably modifies an electromagnetic wave by modulating the electromagnetic wave, more preferably by modulating an amplitude of the electromagnetic wave. It is preferred that the modulator modulates the electromagnetic wave for the transmission of data, more preferably by imposing a signal on the electromagnetic wave. A photodetector preferably modifies an electromagnetic wave by at least partially absorbing the electromagnetic wave. The at least partial absorption of the electromagnetic wave preferably leads to a decrease in the amplitude of the electromagnetic wave. It is preferred that the photodetector at least partially absorbs the electromagnetic wave for the transmission of data.

For example, if a modulator and a photodetector are in optical connection, the modulator sends data and the photodetector receives the data.

An opto-electronic component preferably has a height that is at least 10 nm, more preferably at least 100 nm, and further preferably at least 200 nm. For example, an opto-electronic component may have a height in the range from 300 to 400 nm. A height of an opto-electronic component is measured along the first direction (Z). A preferred opto-electronic component is adapted and arranged to be in opto-electronic interaction with a longitudinal portion of a waveguide. A preferred opto-electronic component comprises at least one electrically conducting element, wherein said electrically conducting element preferably comprises graphene.

Opto-electronic interaction

An electrically conducting element that is adapted and arranged to be in opto-electronic interaction with a longitudinal portion of a waveguide should preferably be understood to mean that electromagnetic waves that propagate in said longitudinal portion of the waveguide can interact with the electrically conducting element. A preferred opto-electronic interaction modifies at least one property of the electromagnetic waves that propagate in said longitudinal portion of the waveguide.

Connectors

Examples of connectors include electrodes, metal layers, vias, bonding wires, bumps, and connectors formed via hybrid bonding (also known as direct bond interconnect). Examples of bumps include microbumps, C2 bumps, C4 bumps (also known as controlled collapse chip connection), and solder bumps. Hybrid bonding should preferably be understood as a connector formed without using a bump, such as a solder bump. All of the aforementioned connectors are well-known to the skilled person. In a preferred embodiment of the invention, the first plurality of connector are selected from the group consisting of electrodes, metal layers, vias, bonding wires, bumps, connectors formed via hybrid bonding, and combinations thereof. For example, the first plurality of connector may comprise electrodes, metal layers, bumps, and vias. In a more preferred embodiment of the invention, the first plurality of connector are selected from the group consisting of electrodes, metal layers, and vias.

A preferred connector is adapted and arranged to form part of an electrical circuit, e.g., to carry current. A preferred connector is adapted and arranged to transmit electrical signals, e.g., to transfer data.

A metal layer should preferably be understood as a layer that is adapted and arranged to allow for a flow of current, more preferably a flow of current substantially parallel to a layer, and further preferably substantially parallel to a layer of the first kind. A metal layer is preferably arranged in a single layer. A preferred example of a metal layer is a metal layer arranged in a back-end-of-line.

A via should preferably be understood as a connector that is adapted and arranged to allow for a flow of current, more preferably a flow of current substantially perpendicular to a layer, and further preferably substantially perpendicular to a layer of the first kind. A via preferably at least partially passes through at least two layers.

Electrical connection

At least two components that are in electrical connection should preferably be understood to mean that an electrical current can flow between the at least two components. Here the at least two components may include at least two electronic components, at least two opto-electronic components, and at least one electronic component and at least one opto-electronic component.

An electrical connection is preferably adapted and arranged for at least one or all of the following: data communication, to provide power to a component (e.g., electronic component, opto-electronic component).

Optical connection

Two elements that are in "optical connection" should preferably be understood to mean that said two elements are adapted and arranged for a propagation (e.g., transmission) of electromagnetic waves, more preferably the communication of data, between said two elements. Here the two elements can be, e.g., a light emitting means and an opto-electronic component, two opto-electronic components (e.g., a modulator and a photodetector), two sub-assemblies. For example, an opto-electronic component and a light emitting means that are adapted and arranged to be in "optical connection" should preferably be understood to mean that the opto-electronic component and the light emitting means are adapted and arranged such that the electromagnetic waves emitted by the light emitting means can be coupled into a first longitudinal portion corresponding to the opto-electronic component (i.e., the electromagnetic waves emitted by the at least one light emitting means can propagate in the first longitudinal portion of the waveguide). For example, two waveguides that are in optical connection with each other should preferably be understood to mean that an electromagnetic wave can propagate between the two waveguides.

Two elements that are in optical connection are not required to be in, e.g., the same assembly, the same sub-assembly, the same apparatus, the same system. A preferred optical connection is adapted and arranged for the transfer of data.

Overlap

An opto-electronic component that is arranged to overlap a layer of the first kind should preferably be understood to mean that the opto-electronic component at least partially covers the layer of the first kind when a cross-sectional cut of the assembly is viewed. Here the cross-sectional cut is made perpendicular to the layer of the first kind. If an opto-electronic component is arranged to overlap a layer of a first kind, this should not be understood to necessarily imply that the opto-electronic component completely covers the layer of the first kind. If an opto-electronic component is arranged to overlap a layer of the first kind, this should not be understood to imply that the opto-electronic component and the layer of the first kind touch each other.

An opto-electronic component that is arranged to overlap a longitudinal portion of a waveguide should preferably be understood to mean that the opto-electronic component, more preferably at least one electrically conducting element of the opto-electronic component, covers the longitudinal portion of the waveguide when a cross-sectional cut of the assembly is viewed. Here the cross-sectional cut is preferably made perpendicular to length of the waveguide (an electromagnetic wave preferably propagates along a length of a waveguide). If an opto-electronic component is arranged to overlap a longitudinal portion of a waveguide, this should not be understood to imply that the opto-electronic component and the longitudinal portion of the waveguide touch each other.

Waveguide

Waveguides suitable for the invention include, but are not limited to, strip waveguides, rib waveguides, slot waveguides, buried waveguides, and diffused waveguides.

A preferred waveguide comprises at least one or all of the following: silicon, oxygen, aluminium, iridium, tantalum, titanium, nitrogen, lithium, niobium, indium, phosphorus, gallium, arsenic, barium, a chalcogenide, at least one polymer, a resin, and a combination of at least two thereof. Examples of combinations of the aforementioned materials include titanium dioxide, aluminium nitride, tantalum pentoxide, silicon nitride, aluminium oxide, silicon oxynitride, lithium niobate, silica, indium phosphide, gallium arsenide, indium gallium arsenide, barium titanate, and aluminium gallium arsenide. A preferred chalcogenide is a dichalcogenide, more preferably a transition metal dichalcogenide.

A preferred waveguide is adapted and arranged for the propagation of electromagnetic waves that have wavelengths in the range from 1000 nm to 2700 nm, preferably from 1100 nm to 2600 nm, and further preferably from 1200 nm to 2500 nm. A more preferred waveguide is adapted and arranged for the propagation of electromagnetic waves that have wavelengths in at least one or all of the following ranges: 1260 nm to 1360 nm (also known as the Original Band or O-Band), 1360 nm to 1460 nm (also known as the Extend Band or E-Band), 1460 nm to 1530 nm (also known as the Short Band or S-Band), 1530 nm to 1565 nm (also known as the Conventional Band or C-Band), and 1565 nm to 1625 nm (also known as the Long Band or L-Band). In an aspect of the invention, it is particularly preferred that the waveguide is adapted and arranged for the propagation of electromagnetic waves that have wavelengths in the O-band, the C-band, or both.

Where it is disclosed that the waveguide is adapted and arranged for the propagation of electromagnetic waves that have wavelengths in a given wavelength range, this should not be understood to mean that the waveguide is necessarily only adapted for the propagation of electromagnetic waves in that given wavelength range. Rather, it should preferably be understood to mean that the waveguide is at least adapted and arranged for the propagation of electromagnetic waves in the given wavelength range.

Longitudinal portion of a waveguide

A first longitudinal portion of a waveguide should preferably be understood as a longitudinal portion of a waveguide that is overlapped by an opto-electronic component, more preferably overlapped by at least one electrically conducting element of an opto-electronic component. For example, a first longitudinal portion of a waveguide is overlapped by at least one electrically conducting element of an opto-electronic device, wherein the at least one electrically conducting element comprises graphene. Said first longitudinal portion and the opto-electronic component are preferably adapted and arranged such that the opto-electronic component can modify electromagnetic waves propagating in the first longitudinal portion.

A further longitudinal portion of a waveguide should preferably be understood as a longitudinal portion of a waveguide that is not overlapped by an electrically conducting element of an opto-electronic component, more preferably not overlapped by an opto-electronic component.

Electrically conducting element

A preferred electrically conducting element has a width in the range from 10 nm to 40 $\mu$m, more preferably from 100 nm to 20 $\mu$m, and further preferably from 500 nm to 1 $\mu$m. A preferred electrically conducting element has a length in the range from 100 nm to 400 $\mu$m, more preferably from 500 nm to 250 $\mu$m, and further preferably from 10 $\mu$m to 100 $\mu$m. A preferred electrically conducting element has a thickness in the range from 0.1 nm to 100 nm, more preferably from 0.7 nm to 50 nm, and further preferably from 1.5 nm to 10 nm.

A preferred electrically conducting element has an electrical conductivity, at 20 °C, of at least $10^4$ S/m, more preferably at least $10^5$ S/m, even more preferably at least $10^6$ S/m, and further preferably at least $10^7$ S/m. The values for the electrical conductivity are preferably for an electrically conducting element that has a thickness of 0.35 nm. A preferred electrically conducting element is in the form of a layer. A preferred electrically conducting element comprises graphene, at least one perovskite, or both. Graphene is particularly preferred.

A preferred electrically conducting element is adapted and arranged to at least partially absorb an electromagnetic wave propagating in a first longitudinal portion of a waveguide.

Examples of transitional metals are molybdenum and tungsten. A chalcogen is defined as a chemical element in Group 16 of the periodic table (*e.g.,* S, Se, and Te). An example of a combination of at least one transitional metal and at least one chalcogen is a transition metal dichalcogenide (e.g., $MoS_2$, $WS_2$, $MoSe_2$, $WSe_2$, $MoTe_2$).

A conductive polymer should preferably be understood as an organic polymer that is adapted and arranged to conduct electricity. A preferred conductive polymer has an electrical conductivity of at least $10^4$ S/m, more preferably of at least $10^5$ S/m, even more preferably of at least $10^6$ S/m.

A conductive oxide should preferably be understood as an oxide that is adapted and arranged to conduct electricity. A preferred conductive oxide has an electrical conductivity of at least $10^4$ S/m, more preferably of at least $10^5$ S/m, even more preferably of at least $10^6$ S/m.

In an aspect of the invention, a preferred form of carbon is graphene. In an aspect of the invention, a preferred metal is a transitional metal. In an aspect of the invention, a preferred nitride is boron nitride, more preferably hexagonal boron nitride.

A 2D material should preferably be understood as a solid, preferably a crystalline solid. In one aspect of the invention, it is preferred that a 2D material consists of a single layer of atoms. In another aspect of the invention, it is preferred that the 2D material comprises more than one layer of atoms (e.g., more than one individual atomic plane), where these layers are bonded to each other by van der Waals forces.

Graphene suitable for the present invention is commercially available from, e.g., Graphenea S.A. (Spain), Graphene Laboratories Inc. (USA), and Grolltex Inc (USA).

Electrically charged

An electrically conducting element that is adapted and arranged to be electrically charged should preferably be understood to mean that the electrically conducting element is adapted an arranged to store a net electrical charge, preferably on a surface of the electrically conducting element. The storing of a net electrical charge preferably produces an electric field around the electrically conducting element.

An electrically conducting element that is adapted and arranged to be electrically charged can, for example, be charged by at least one or all of the following: connecting the electrically conducting element to an electric circuit (e.g., connecting the electrically conducting element to an electrode and/or a connector), the electrically conducting element has an intrinsic net electrical charge (e.g., without requiring connection to a circuit), the electrically conducting element can be charged by irradiating the component with photons.

An electrically conducting element that is adapted and arranged to be electrically discharged should preferably be understood to mean that at least a fraction of any net charge stored in and/or on a surface of the electrically conducting element can be removed, thereby reducing the net electrical charge.

Optical attenuation coefficient

The optical attenuation coefficient should preferably be understood to be a measure that describes the extent to which a radiant flux of a beam of electromagnetic waves is reduced per unit length when it passes through a specific material.

Variable optical attenuation coefficient

An electrically conducting element that is adapted and arranged to have a variable optical attenuation coefficient should preferably be understood to mean that an optical attenuation coefficient of the electrically conducting element can be modified, preferably when the electrically conducting element is placed in an external electrical field and/or an electric field is present between the electrically conducting element and at least one other component (e.g., another electrically conducting element). For example, the optical attenuation coefficient of an electrically conducting element can be increased or decreased when a first electrically conducting element and a second electrically conducting element are electrically charged such that an electric field is present between the first electrically conducting element and the second electrically conducting element. In an aspect of the invention, it is preferred that the optical attenuation coefficient of an electrically conducting element can be reduced, preferably by at least 20 %, more preferably by at least 50 %, and further preferably by at least 85 %.

In an aspect of the invention, if an electrically conducting element is adapted and arranged to have a variable optical attenuation coefficient, it is preferred that the optical attenuation coefficient is modifiable for multiple wavelengths of electromagnetic waves, preferably for electromagnetic waves that have wavelengths in the range from 1200 nm to 1700 nm.

Processing and memory units

A processing unit is preferably adapted and arranged to execute instructions of a computer program. Examples of these instructions include arithmetic, logic, controlling, and input/output operations. A memory unit is preferably adapted and arranged to store instructions of a computer program.

Examples of a processing unit include a central processing unit (CPU), a graphics processing unit (GPU), an XPU (X-Processing Unit), a tensor processing unit (TPU), a neuromorphic processing unit (NPU). Examples of a memory unit include random access memory (RAM), static RAM (SRAM), synchronous dynamic RAM (SDRAM), double data rate SDRAM (DDR SDRAM), graphics DDR SDRAM (GDDR SDRAM), flash memory, magnetoresistive RAM (MRAM), magnetic tunnel junction MRAM, and spin-orbit torque MRAM.

A computing device may be any type of computing device for any kind of purpose. A preferred computing device comprises at least one or all of the following: at least one processing unit, or at least one memory unit, or both. Examples of a data storage means is a hard drive.

Die

A wafer should preferably be understood as a layer comprising a semiconductor material, used for the fabrication of, *e.g.,* integrated circuits. Wafers are well known to the skilled person, and are commercially available from, *e.g.,* United Microelectronics Corporation (Taiwan) and Taiwan Semiconductor Manufacturing Company Limited (Taiwan).

A preferred wafer comprises a plurality of regions, wherein said regions are preferably similar. For example, a wafer comprising a number of regions wherein the same integrated circuit has been repeated in each region. A die is preferably obtained by dicing the wafer into a number of smaller fragments (known as dies). For example, the wafer comprises a plurality of regions, wherein each region forms a die after dicing. The dicing may include, for example, laser cutting, sawing, scribing or breaking of the wafer. An example of a die is a chiplet. A chip should preferably be understood as an example of an assembly that comprises one or more dies that are in electrical connection. An example of a chip is a package that is preferably adapted and arranged to be arranged on a printed circuit board.

Further preferred embodiments

A preferred embodiment A1 of the invention is an assembly comprising

a. a first sub-assembly, wherein the first sub-assembly comprises

i. a first layer of a first kind that comprises

A. a front-end-of-line sub-layer, wherein the front-end-of-line sub-layer comprises a first plurality of electronic components,
B. a back-end-of-line sub-layer superimposed on the front-end-of-line sub-layer, preferably wherein the back-end-of-line sub-layer is adapted and arranged to electrically connect the first plurality of electronic components;

ii. a first plurality of waveguides adapted and arranged for the propagation of electromagnetic waves;
iii. a first plurality of opto-electronic components that each

A. has a height that is equal to or less than 50 $\mu$m, preferably equal to or less than 20 $\mu$m, and more preferably equal to or less than 10 $\mu$m,
B. is adapted and arranged to modify electromagnetic waves propagating in a first longitudinal portion of at least one waveguide, of the first plurality of waveguides;
C. comprises at least one electrically conducting element;

iv. a first plurality of connectors, wherein

A. at least one connector, of the first plurality of connectors, is adapted and arranged to electrically connect at least two electronic components, of the first plurality of electronic components,
B. at least one connector, of the first plurality of connectors, is adapted and arranged to electrically connect at least one electronic component, of the first plurality of electronic components, with at least one opto-electronic component, of the first plurality of opto-electronic components, and

C. preferably, at least one connector, of the first plurality of connectors, is adapted and arranged to electrically connect at least two opto-electronic components, of the first plurality of opto-electronic components;

wherein the average minimum distance $F_X$ between the first longitudinal portions, of the first plurality of waveguides, and the first plurality of connectors is in the range from 0.75 to 1.7 $\mu$m, preferably from 0.8 to 1.5 $\mu$m, more preferably from 0.85 to 1.3 $\mu$m, and further preferably from 0.9 to 1.1 $\mu$m, wherein the average minimum distance $F_X$ is measured parallel to a further direction (X) that is perpendicular to a first direction (Z), wherein the first direction (Z) is perpendicular to the first layer of the first kind.

The 2nd to 43rd preferred embodiments, as well as their preferred aspects, are also preferred embodiments and aspects of preferred embodiment A1. In a preferred aspect of embodiment A1, at least a fraction of the connectors, of the first plurality of connectors, are arranged in the back-end-of-line sub-layer. In a preferred aspect of embodiment A1, the assembly comprises a layer of the further kind, wherein the layer of the further kind is an interposer. In a preferred aspect of embodiment A1, the first plurality of opto-electronic components overlap the first layer of the first kind. In a preferred aspect of embodiment A1, the average minimum distance Fz between the first longitudinal portions, of the first plurality of waveguides, and the first plurality of connectors is in the range from 2 to 3.5 $\mu$m, preferably from 2.1 to 3.1 $\mu$m, more preferably from 2.2 to 2.8 $\mu$m, and further preferably from 2.3 to 2.6 $\mu$m, wherein the average minimum distance $F_Z$ is measured parallel to the first direction (Z).

A preferred embodiment B1 of the invention is an assembly comprising

a. a first sub-assembly, wherein the first sub-assembly comprises

i. a first layer of a first kind that comprises

A. a front-end-of-line sub-layer, wherein the front-end-of-line sub-layer comprises a first plurality of electronic components,

B. a back-end-of-line sub-layer superimposed on the front-end-of-line sub-layer, preferably wherein the back-end-of-line sub-layer is adapted and arranged to electrically connect the first plurality of electronic components;

ii. a first plurality of waveguides adapted and arranged for the propagation of electromagnetic waves;

iii. a first plurality of opto-electronic components that each

A. has a height that is equal to or less than 50 $\mu$m, preferably equal to or less than 20 $\mu$m, and more preferably equal to or less than 10 $\mu$m,

B. is adapted and arranged to modify electromagnetic waves propagating in a first longitudinal portion of at least one waveguide, of the first plurality of waveguides;

C. comprises at least one electrically conducting element;

iv. a first plurality of connectors, wherein

A. at least one connector, of the first plurality of connectors, is adapted and arranged to electrically connect at least two electronic components, of the first plurality of electronic components,

B. at least one connector, of the first plurality of connectors, is adapted and arranged to electrically connect at least one electronic component, of the first plurality of electronic components, with at least one opto-electronic component, of the first plurality of opto-electronic components, and

C. preferably, at least one connector, of the first plurality of connectors, is adapted and arranged to electrically connect at least two opto-electronic components, of the first plurality of opto-electronic components;

wherein the average minimum distance $G_Z$ between the further longitudinal portions, of the first plurality of waveguides, and the first plurality of connectors is in the range from 2 to 3.5 $\mu$m, preferably from 2.1 to 3.1 $\mu$m, more preferably from 2.2 to 2.8 $\mu$m, and further preferably from 2.3 to 2.6 $\mu$m, wherein the average minimum distance $G_Z$ is measured parallel to the first direction (Z) that is perpendicular to the first layer of the first kind.

A preferred embodiment C1 of the invention is an assembly having the features of the preferred embodiment A1 and the preferred embodiment B1, e.g., an embodiment having both of the features related to the average minimum distance $F_X$ and the average minimum distance $G_Z$.

The 2nd to 43rd preferred embodiments, as well as their preferred aspects, are also preferred embodiments and aspects of preferred embodiment B1. In a preferred aspect of embodiment B1, at least a fraction of the connectors, of the first plurality of connectors, are arranged in the back-end-of-line sub-layer. In a preferred aspect of embodiment B1, the assembly comprises a layer of the further kind, wherein the layer of the further kind is an interposer. In a preferred aspect of embodiment B1, the first plurality of opto-electronic components overlap the first layer of the first kind. In a preferred aspect of embodiment B1, the average minimum distance $G_X$ between the further longitudinal portions, of the first plurality of waveguides, and the first plurality of connectors is in the range from 2 to 3.5 $\mu$m, preferably from 2.1 to 3.1 $\mu$m, more preferably from 2.2 to 2.8 $\mu$m, and further preferably from 2.3 to 2.6 $\mu$m, wherein the average minimum distance $G_X$ is measured parallel to the further direction ($X$).

Patterning

Various patterning methods for, e.g., removing a section of a layer, are well known in the art. Any patterning method, which the skilled person deems suitable for the present invention, may be used.

A preferred patterning method uses lithography. Various lithography methods are also well known in the art. Any lithography method, which the skilled person deems suitable for the present invention, may be used. These lithography methods include, but are not limited to, photolithography (such as deep ultraviolet lithography, extreme ultraviolet lithography), electron beam lithography, nanoimprint lithography, interference lithography, magneto-lithography, scanning probe lithography, surface-charge lithography, and diffraction lithography.

A preferred patterning method comprises the steps of depositing a masking layer, such as a photoresist, on a layer; removing at least one section of the making layer to expose at least one section of the layer; etching the at least one exposed section of the layer. After the at least one exposed section of the layer has been etched, it is preferred to remove the masking layer.

Etching

Various etching methods (e.g., for reducing a thickness of a layer and/or a section of layer, for removing a layer and/or a section of a layer) are well known in the art. Any etching method, which the skilled person deems suitable for the present invention, may be used. These etching methods include wet etching methods and dry etching methods. Examples of suitable dry etching methods include plasma etching, reactive-ion etching, ion beam etching, and vapour phase etching. A preferred etching method uses at least one masking layer to mask at least one section of the component being etched.

An etchant should preferably be understood as a processing chemical substance that is used during an etching method. A preferred etchant can be a liquid, a gas, or a combination thereof.

Preferred processing chemical substances that are suitable to be used for a wet etching method include, but are not limited to, hydrofluoric acid, buffered hydrofluoric acid, buffered oxide etch, ammonium fluoride, phosphoric acid, and combinations of at least two or more thereof. Preferred processing chemical substances that are suitable to be used for a dry etching method include, but are not limited to, boron trichloride ($BCl_3$), hydrofluoric acid, buffered hydrofluoric acid, buffered oxide etch, ammonium fluoride, phosphoric acid, chlorine ($Cl_2$), sulphur hexafluoride ($SF_6$), hydrobromic acid (HBr), tetrafluoromethane ($CF_4$), trifluoromethane ($CHF_3$), 1,2-difluoroethylene ($C_2H_2F_2$), methyl fluoride ($CH_3F$), and combinations of at least two or more thereof.

Chemical-mechanical polishing

Chemical-mechanical polishing (CMP) should preferably be understood as a method that uses a combination of chemical and mechanical forces. A preferred CMP method is adapted and arranged for at least one or all of the following: to reduce a thickness of a layer and/or a thickness of a section of a layer; to remove a layer and/or a section of a layer; to increase a smoothness of a surface of a layer and/or a section of a layer; to increase a flatness of a layer and/or a section of a layer.

A preferred CMP method uses a slurry in combination with a rotating pad. A preferred pad comprises a polymer. A preferred slurry comprises at least one liquid and particles mixed with the at least one liquid. A preferred slurry is in the form of a colloid. The particles in a preferred slurry comprise at least one or all of the following: aluminium oxide, cerium oxide, zirconium oxide, titanium oxide, thorium oxide, silica, ceria, a combination of at least two thereof.

Any CMP process parameters, including the chemical composition of the slurry and the rotation rate of the rotating pad, which the skilled person deems suitable for the present invention, may be used. Suitable slurries are commercially available from, e.g., BASF SE (Germany) and Hitachi Chemical Co Ltd (Japan). Any CMP machine, which the skilled person deems suitable for the present invention, may be used. Examples of a CMP machine include the F-REX200M2 or F-REX300X, both commercially available from Ebara Engineering Singapore Pte Ltd.

Vapour deposition

Various chemical vapour deposition (CVD) methods for depositing a layer are well known in the art. Any CVD method, which the skilled person deems suitable for the present invention, may be used. These CVD methods include, but are not limited to, atmospheric pressure CVD (APCVD), low-pressure CVD (LPCVD), ultrahigh vacuum CVD (UHCVD), plasma-enhanced CVD (PECVD), atomic-layer deposition (ALD), and metalorganic CVD (MOCVD).

Various physical vapour deposition (PVD) methods for depositing a layer are well known in the art. Any PVD method, which the skilled person deems suitable for the present invention, may be used. These PVD methods include, but are not limited to, sputtering and evaporation deposition methods. Evaporation deposition methods pertain to the evaporation and condensation of a chemical substance on a component. Suitable sputtering deposition methods include, but are not limited to, high-power impulse magnetron sputtering, high-target-utilisation sputtering, ion beam sputtering, reactive sputtering, ion-assisted deposition, and gas flow sputtering.

Superimposed

A layer may be superimposed on an element. Here element refers to, *e.g.,* an electronic component, an opto-electronic component, an electrically conducting element, and another layer. If a layer is superimposed on an element, this should preferably be understood to mean that the layer at least partially covers a surface of the element. If a layer is superimposed on an element, then the layer and the element may touch each other. However, if a layer is superimposed on an element, this should not be understood to mean that the layer and element necessarily have to touch each other. *E.g.,* a further layer superimposed on a first layer, wherein a second layer is arranged between the first layer and the further layer, *i.e.,* the first layer and the further layer both touch the second layer, but the first layer and the further layer do not touch each other. *E.g.,* a further layer is superimposed on a first layer, and the first layer and the further layer touch other.

A layer may be superimposed using any method which the skilled person deems suitable. A layer may be superimposed using atomic layer deposition, chemical vapour deposition, physical vapour deposition, surface activation by plasma, sacrificial layers or molecular monolayers, or a combination of at least two thereof.

Examples of lithography include nanoimprint lithography, laser lithography, electron beam lithography, and optical lithography.

Atomic layer deposition, chemical vapour deposition, physical vapour deposition, and lithography are well-known to the skilled person. Any device which the skilled person deems suitable can be used for the layer deposition.

First, second and further directions

The first direction (Z) is preferably perpendicular to the first layer of the first kind. A further direction (X) is perpendicular to the first direction (Z). A second direction (Y) is perpendicular to both the first direction (Z) and a further direction (X). The second direction (Y) is preferably arranged parallel to a direction of propagation of an electromagnetic wave through a longitudinal portion of a waveguide. The further direction (X) is preferably arranged perpendicular to a direction of propagation of an electromagnetic wave through a waveguide.

It is not a requirement that the further direction (X) and the second direction (Y) be defined globally (e.g., uniquely) for the assembly. For example, the assembly may comprise two, first longitudinal portions that are both arranged parallel to the first layer of the first kind, but perpendicular to each other. For each of these first longitudinal portions a local set of directions may be defined such that a second direction (Y) is parallel to a direction of propagation of an electromagnetic wave through the respective first longitudinal portion (i.e., two, local second directions (Y) are defined that are perpendicular to each other). Similarly, the further directions (X) are defined as being perpendicular to a direction of propagation of an electromagnetic through the respective first longitudinal portion (i.e., two, local further directions (X) are defined that are perpendicular to each other).

A distance that is measured parallel to a direction should preferably be understood that said distance is measured along said direction.

Data communication

Two elements that are in data communication should preferably be understood to mean that data can be communicated between said elements. The data may be communicated using electrical signals, optical signals, or both. Data that is communicated between a first element and a further element include at least one or all of the following: A.] a transmission (e.g., transfer) of data from the first element to the further element, B.] a transmission (e.g., transfer) of data from the further element to the first element, both A.] and B.]. Here the first and further elements can be, e.g., a modulator and a photodetector, a sensing unit and an assembly according to the invention, a first sub-assembly and a second sub-assembly.

If two elements, such as a first element and a second element, are in data communication and in optical connection with each other, it is preferred that at least the first element comprises a modulator, and at least the second element comprises a photodetector. If two elements, such as a first element and a second elements, are in data communication and in optical connection with each other, it is particularly preferred that both the first element and the second element comprise a modulator, and that both the first element and the second element comprise a photodetector.

Light emitting means

A light emitting means is adapted and arranged to emit electromagnetic waves. For example, a light emitting means is adapted and arranged to emit radio waves, microwaves, or optical waves. A preferred light emitting means is adapted and arranged to facilitate at least one or all of the following: data communication, sensing, imaging. An example of a light emitting means is a laser.

Light and photonics

The terms "optical" and "light", as used herein, should preferably be understood as electromagnetic radiation, more preferably electromagnetic radiation in any of the visible, infrared, and ultraviolet spectral ranges. An example of an "optical signal" is a signal and/or data that is transmitted using electromagnetic waves. Optical data should preferably be understood as data that is communicated using electromagnetic waves.

Photonics should preferably be understood to include at least one or all of the following: generation, detection, manipulation, emission, transmission, modulation, signal processing, switching, amplification, and sensing of electromagnetic waves.

Artificial intelligence and machine learning

Artificial intelligence (AI) should preferably be understood to include at least one or all of the following: perceiving, synthesizing, inferring, predicting and/or generating information using computerised tools and/or techniques (e.g., machine learning models). Machine learning includes supervised learning (e.g., linear regression, decision trees, support vector machines), unsupervised learning (e.g., hierarchical clustering, k-means clustering), and reinforced learning. Machine learning also includes deep learning, such as convolutional neural networks and recurrent neural networks.

Sensing means

A sensing means is preferably adapted and arranged to sense (e.g., measure) at least one or all of the following: sound waves, electromagnetic waves, electrical signals, a movement, a temperature, a speed, an acceleration, and a rotation. For example, a movement, a speed, an acceleration and/or a rotation may be of a mammalian body, a vehicle, a robotic body, or a transportation means. It is particularly preferred that a sensing means is adapted and arranged to at least partially absorb electromagnetic waves. A sensing means is preferably adapted and arranged to generate an electrical signal, more preferably based on an input received (such as a measurement) by the sensing means.

A sensing means may comprise at least one or all of the following: photodiodes, phototransistors, image sensors, optical fibre sensors, laser diodes, optical biosensor, optical position sensors, optical touch sensors, photomultiplier tubes, avalanche photodiodes, charge-coupled devices, complementary metal-oxide-semiconductor sensors, thermal infrared detectors, photon counting detectors, superconducting nanowire single-photon detectors.

Sensing unit

A sensing unit comprises a sensing means. A sensing unit preferably comprises an integrated circuit.

A sensing unit is preferably adapted and arranged to analyse and/or process data of a target area obtained by the sensing unit, wherein said data may be images, sounds, temperature measurements, or other sensor readings. The output of a sensing unit is preferably structured data that represents the interpretation and/or analysis of the data obtained by the sensing unit, such as a health of a patient, item detection and recognition, scene information, localization and mapping data, preferably including road geometry and/or landmarks, feature extraction results (including edges, corners, textures, shapes, and/or keypoints), and pattern recognition output.

Spatial information should preferably be understood as information about a space wherein an element, such as a vehicle, a robotic body, or a transportation means, is located. Spatial information may include information on a presence of an item in the vicinity of the element (e.g., a distance between the element and the item), a speed of the element, an acceleration of the element, and a rotation of the element.

Applications of the assembly

Local communication should preferably be understood as the communication of data over a distance of less than 1 km. Telecommunication should preferably be understood as the communication of data over a distance of at least 1 km.

An assembly that is adapted and arranged for local communication may communicate the data using at least one modulator and at least one photodetector. Alternatively, an assembly that is adapted and arranged for local communication may communicate the data using at least one modulator, at least one photodetector, and additionally, at least one further communication means. Examples of a further communication means include an antenna, an optical cable (such as an optical fibre), a wired connection.

An assembly that is adapted and arranged for telecommunication may communicate the data using at least one modulator and at least one photodetector. Alternatively, an assembly that is adapted and arranged for telecommunication may communicate the data using at least one modulator, at least one photodetector, and additionally, at least one further communication means. Examples of a further communication means include an antenna, an optical cable (such as an optical fibre), a wired connection.

An assembly that is adapted and arranged for high-performance computing is preferably arranged as part of at least one supercomputer and/or at least one computer cluster. A supercomputer should preferably be understood as a computer that can perform at least $10^{14}$ floating-point operations per second. High-performance computing is preferably adapted and arranged for parallel computing.

An assembly that is adapted and arranged for a data centre is preferably adapted and arranged to communicate data between at least one or all of the following: at least one processor, at least one data storage means.

An assembly that is adapted and arranged for artificial intelligence is preferably an assembly that can be used to obtain artificial intelligence models, more preferably to obtain machine learning models, using e.g., supervised learning, semi-supervised learning, and unsupervised learning.

A switch is preferably adapted and arranged for, e.g., optically connecting two networks and/or optically connecting a computational means (such as a computer) and a network.

An optical interconnect is preferably adapted and arranged for optically connecting at least one or all of the following: two integrated circuits, two computer chips. Here the two integrated circuits and/or two computer chips may be parts of a system-in-package or a chiplet. Here the two integrated circuits may be part of the same chip.

An assembly according to the invention allows for an increased data transfer rate, an improved signal-to-noise ratio, a reduced crosstalk and a reduced energy consumption. An assembly also allows for a communication of data over increased distances, while simultaneously allowing for at least one of all of the following: a reduced energy consumption, an increased data transfer rate, an improved signal-to-noise ratio.

Optical sensing module

The further electromagnetic waves detected by a photodetector from a target area include, amongst other, electromagnetic waves reflected by an item in the target area, and/or electromagnetic waves emitted by an item in the target area.

An optical sensing module may comprise at least one or all of the following: photodiodes, phototransistors, image sensors, optical fibre sensors, laser diodes, optical biosensor, optical position sensors, optical touch sensors, photomultiplier tubes, avalanche photodiodes, charge-coupled devices, complementary metal-oxide-semiconductor sensors, thermal infrared detectors: photon counting detectors, superconducting nanowire single-photon detectors.

Examples of optics include lenses, prisms, and diffraction gratings.

An example of an optical sensing module is disclosed in WO2023076132 A1.

An optical sensing module according to the present invention allows for improved sensing capabilities and performance. Specifically, the optical sensing module according to the present invention allows for enhanced sensitivity, improved signal-to-noise ratio, reduced crosstalk and reduced energy consumption, allowing for an improved performance and versatility in various sensing applications.

First apparatus adapted and arranged for a medical application

A "medical application" should preferably be understood as including at least one or all of the following: monitoring a health of a patient, diagnosing a pathological condition in a patient; maintaining a state of health of a patient; sending and/or receiving data from a further apparatus, preferably a further apparatus adapted and arranged for a medical application; controlling a further apparatus, preferably a further apparatus adapted and arranged for a medical application. Here a patient is preferably a mammal, and more preferably a human. The first apparatus may be implantable in a patient (internal use) or may be for use outside a body of a patient.

Examples of a physical property of a body include an oxygen concentration (e.g., of blood, tissue), a temperature of the body, a heart rate of the body, a blood glucose level. Examples of a sensing unit adapted and arranged to measure at least one physical property of a body include a blood glucose monitor, a heart rate monitor, a thermometer, an oximeter.

A first apparatus, adapted and arranged for a medical application, and according to the present invention, allows for an improved patient safety, an improved monitoring of the health of a patient and an improved diagnosing of a pathological condition in a patient. A first apparatus according to the invention also allows for an improved sensitivity, an increased data transfer rate, an improved signal-to-noise ratio, a reduced crosstalk and a reduced energy consumption.

Vehicle adapted and arranged for flight

A vehicle, adapted and arranged for flight, is preferably adapted and arranged to transmit data via an optical signal by using a modulator. The vehicle, adapted and arranged for flight, is preferably adapted and arranged to receive data via an optical signal using a photodetector. Here the transmitting and/or receiving of data may be a communication of data within the vehicle, between the vehicle and another entity (e.g., another vehicle, a ground station), or both. It is particularly preferred that the transmitting and/or receiving of data is within the vehicle, e.g., between a sensing unit and an integrated circuit in the vehicle.

"Flight" should preferably be understood to include both controlled flight and uncontrolled flight. Here controlled flight should preferably be understood to mean that a movement of the vehicle can be controlled by, e.g., a human operator and/or an integrated circuit (such as a processing unit). For example, an airplane is adapted and arranged for controlled flight by a human and/or an autopilot. Here the vehicle may be controlled remotely. Uncontrolled flight should preferably be understood to mean that a movement of the vehicle is generally not controlled by, e.g., a human operator and/or an integrated circuit (such as a processing unit). For example, a weather balloon is generally adapted and arranged for uncontrolled flight. "Flight" should preferably be understood to include flight in the atmosphere, as well as above the atmosphere. "Flight" should preferably be understood to include an orbit of the vehicle, e.g., around the Earth.

Examples of a propulsion means include an engine, jet propulsion, burners of a hot-air balloon, an envelope of a hot-air balloon, a balloon. Here engines include, but are not limited to, jet engines and turbine engines.

An example of a means for generating lift is wings.

A control system preferably comprises a control means and/or a control module. Examples of a control means include a rudder, an elevator, and an aileron. Example of a control module is an integrated circuit that is adapted and arranged to control a movement of a control means.

A vehicle adapted and arranged for flight may be used for commercial and/or defence purposes.

A vehicle, adapted and arranged for flight, and according to the present invention, allows for an improved safety of the vehicle, including passengers in the vehicle, an improved control of the vehicle, an improved control of the vehicle when operated remotely, and an improved communication with the vehicle (e.g., including a tracking of the vehicle, a faster data transfer rate, less disruption when communication with the vehicle).

Robotic system

The term "robotic system", as used herein, should preferably be understood to comprise a robotic body that is designed to perform tasks autonomously or under remote control. In a preferred aspect of the robotic system, the robotic system is adapted and arranged for an autonomous movement of the robotic body.

A robotic system as used herein may be used for commercial and/or defence purposes. For example, a robot system can comprise an industrial robot, a service robot, a personal and domestic robot, an educational robot, a research robot, an entertainment robot. A robotic body may be a robotic arm. Robotic arms typically comprise multiple segments connected by joints, resembling a human arm.

In a particularly preferred aspect of the robotic system, the robotic body comprises a sensing unit. In another preferred aspect of the robotic system, the sensing unit is arranged at a location that is removed from the robotic body (e.g., does not touch the robotic body). In another preferred aspect of the robotic system, the sensing unit is partly arranged in both the robotic body (e.g., some sub-modules of the sensing unit are arranged in the robotic body, while other sub-modules of the sensing unit are arranged at a location that is removed from the robotic body).

In a particularly preferred aspect of the robotic system, the robotic body comprises a control module. In another preferred aspect of the robotic system, the control module is arranged at a location that is removed from the robotic body (e.g., does not touch the robotic body). In another preferred aspect of the robotic system, the control module is partly arranged in both the robotic body (e.g., some sub-modules of the control module are arranged in the robotic body, while other sub-modules of the control module are arranged at a location that is removed from the robotic body).

In a particularly preferred aspect of the robotic system, at least one or all of the following forms part of the robotic body: the sensing unit, the control module.

The robotic system according to the present invention allows for improved reliability of the robotic system, improved communication (e.g., data transfer rate) in the robotic system, improved safety, increased versatility of the robotic system, and a reduced energy usage of the robotic system.

First system

A first system is preferably adapted and arranged for optical computing. A first system as used herein should preferably be understood as a computational architecture that uses the principles of optics and photonics for at least one or all of the following: data processing, data transmission, data storage.

In a preferred aspect of the first system, the at least one or more memory units is at least one or more optical memory units and the at least one of more processors is at least one or more optical processors.

In a preferred aspect of the first system, a memory unit comprises at least one or all of the following: a modulator, a photodetector. In a preferred aspect of the first system, a processor comprises at least one or all of the following: a modulator, a photodetector.

An optical processor preferably comprises at least one or all of the following: an optical switch, an optical transistor. Examples of optical processor include photonic integrated circuits (PICs), Fourier optical processors, optical neural networks (ONNs), all-optical switches, and quantum optical processors.

Examples of an optical memory unit include holographic memory, photorefractive crystals, optical RAM (ORAM), phase change materials and optical fibre delay lines.

The first system according to the invention allows for an increased computational speed, improved energy efficiency, improved scalability, and an improved resistance to electromagnetic interference.

Optical computing is described in, e.g., WO2023145206 A1 and WO2021245701 A1.

Second system

"Homomorphic encryption" should preferably be understood as a form of encryption that allows mathematical operations to be performed on encrypted data without decrypting said data first. E.g., it enables computations to be carried out directly on ciphertext, yielding an encrypted result that, when decrypted, corresponds to the result of the operations performed on the unencrypted data. "Photonic homomorphic encryption" should preferably be understood as an encryption technique that combines principles of both photonics and homomorphic encryption to enable computations on encrypted data using optical signals. In photonic homomorphic encryption, encryption and/or decryption are performed using photonic components and techniques, while homomorphic properties are preserved to allow computations on the encrypted data without decryption.

A second system adapted and arranged for photonic homomorphic encryption is preferably used for at least one or all of the following: secure data processing, cloud computing, secure multiparty computation, and privacy-preserving data analysis.

Examples of photonic encryption and/or decryption modules include optical phase encoders and/or decoders, optical polarization encoders and/or decoders, optical frequency encoders and/or decoders, optical chaos-based encryption and/or decryption modules, a quantum key distribution system, and an optical one-time pad system.

The second system according to the present invention allows for an increased computational speed, improved energy efficiency, improved scalability, improved resistance to electromagnetic interference, improved encryption, improved encryption and decryption speed, enhanced security, and an improved compatibility with optical networks.

Homomorphic encryption is described in, e.g., WO2022213048 A1, US20220116198 A1, US20220366059 A1, and US20240022394 A1.

First and further transportation means

A transportation means includes a vehicle (e.g., a car, a truck), a train, an airplane, a ship, a bicycle, a drone, a satellite. Examples of autonomous movement include autonomous driving, autonomous flying, autonomous sailing, autonomous walking.

A processing module is preferably adapted and arranged for executing instructions and performing computations. A processing module preferably comprises a processing unit.

Examples of a human-machine interface include a screen, preferably a touch screen, a device adapted and arranged to play a sound, a device adapted and arranged to emit a signal, preferably a light signal. Examples of a steering means include a steering wheel, a rudder, handlebars, ailerons. Examples of a propulsion means include a combustion engine, a jet engine, a sail, a drivetrain of a bicycle.

A sensing unit may comprise at least one or all of the following: photodiodes, phototransistors, image sensors, optical fibre sensors, laser diodes, optical biosensor, optical position sensors, optical touch sensors, photomultiplier tubes, avalanche photodiodes, charge-coupled devices, complementary metal-oxide-semiconductor sensors, thermal infrared detectors, photon counting detectors, superconducting nanowire single-photon detectors.

A perception sub-module is adapted and arranged to analyse and/or process data of a target area obtained by a sensing unit, wherein said data may be images, sounds, or other sensor readings. The output of a perception sub-module is preferably structured data that represents the interpretation and/or analysis of the data obtained by the sensing unit, such as item detection and recognition, scene information, localization and mapping data, preferably including road geometry and/or landmarks, feature extraction results (including edges, comers, textures, shapes, and/or keypoints), and pattern recognition output.

A generation sub-module may be used in e.g., autonomous systems. The generation sub-module is adapted and arranged to process and/or analyse the data provided by the perception module in order to, e.g., determine actions or responses based on predefined objectives, rules, and constraints. For example, the generation sub-module outputs driving commands, including trajectory planning, path selection, and control commands for steering, acceleration, and braking in autonomous vehicles. Subsequently, a control unit may execute a driving command generated by the generation sub-module and control the transportation means' motion accordingly.

The first and further transportation means according to the present invention allow for improved safety, enhanced traffic efficiency, reduced environmental impact, increased accessibility, enhanced user experience, increased scalability, and increased adaptability.

A transportation means is described in, e.g., DE102021121918 A1.

Third system

Examples of artificial intelligence (AI) include perceiving, synthesizing, inferring, predicting and/or generating information using, e.g., machine learning. For example, a third system may use a combination of hardware and software to perform operation to perceive, synthesize, infer, predict, and/or generate information.

The third system according to the present invention allows for a handling of increased volumes of data, faster processing speeds, reduced susceptibility to electromagnetic interference, and lower energy consumption. The third system according to the present invention allows for massive parallelism (e.g., parallel computing) and high-speed data processing, such as big data analytics, neural network training, and real-time simulations.

A system for machine AI and machine learning is described in, e.g., US20230114847 A1, WO2018187487 A1, and US20220188155 A1.

The invention is now illustrated by non-limiting examples and exemplifying embodiments.

FIGURES

List of figures

The figures serve to exemplify the present invention and should not be viewed as limiting the invention. The figures are not drawn to scale.

Fig. 1A: schematic illustration showing a cross-sectional cut of an assembly according to the invention.
Fig. 1B: schematic illustration showing further details of the layer of the further kind of the assembly of Fig. 1A.
Fig. 1C: schematic illustration showing further details of the layer of the even-further kind of the assembly of Fig. 1A.
Fig. 1D: schematic illustration showing further details of the layer of the even-further kind of the assembly of Fig. 1A.
Fig. 2A: schematic illustration showing a first longitudinal portion and a further longitudinal portion of a waveguide.
Fig. 2B: schematic illustration showing how an individual minimum distance fz and an individual minimum distance $f_X$ of a first longitudinal portion of a waveguide is determined.
Fig. 2C: schematic illustration showing how an individual minimum distance $h_Z$ of a first longitudinal portion of a waveguide is determined.
Fig. 2D: schematic illustration showing how an individual minimum distance $h_X$ of a first longitudinal portion of a waveguide is determined.
Fig 3A to 3D: schematic illustration of points on a waveguide closest to a plane.
Fig. 4A and 4B: schematic illustrations of preferred opto-electronic components.
Fig. 5: schematic illustration of an assembly, according to the invention, comprising a first sub-assembly and a second sub-assembly.
Fig. 6: schematic illustration of an assembly, not according to the invention.
Fig. 7: schematic illustration of the steps of a method, according to the invention, for producing an assembly according to the invention.
Fig. 8: flow diagram of the steps of a method, according to the invention, for producing an assembly according to the invention.

Description of figures

Unless stated otherwise, a direction of propagation of an electromagnetic wave in a first longitudinal portion of a waveguide (shown in the figures) is perpendicular to the first direction 106 and the further direction 107, as shown in said figures.

*Fig. 1A*

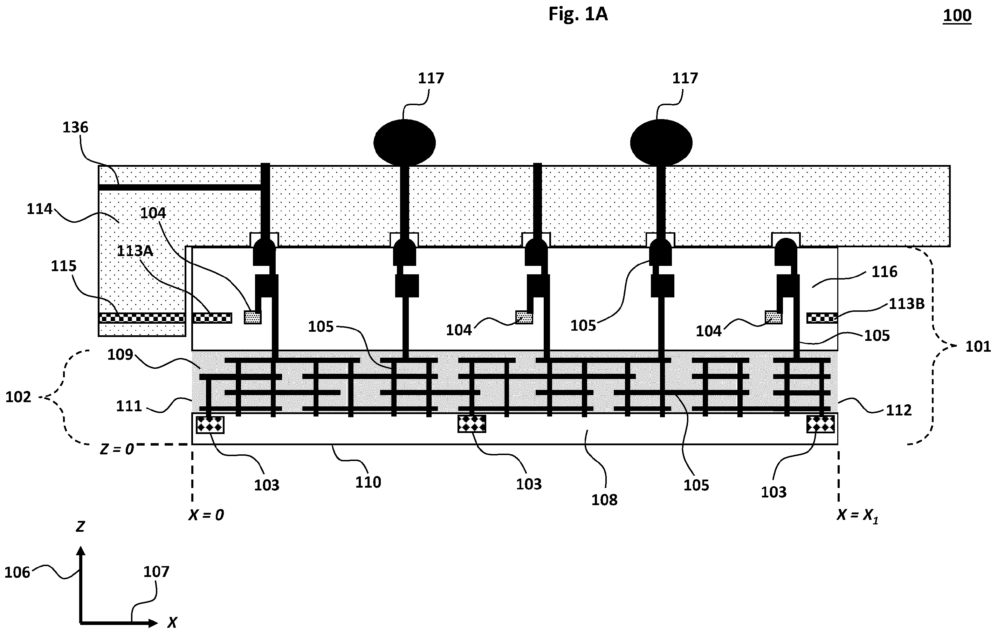

Fig. 1A is a schematic illustration showing a cross-sectional cut of an assembly 100, according to the invention, made perpendicular to a first layer of the first kind. The assembly 100 comprises a first sub-assembly 101, with the first sub-assembly in turn comprising the first layer of the first kind 102. Said first layer of the first kind 102 comprises a first plurality of electronic components 103. These electronic components are, for example, resistors, capacitors, transistors, and diodes. The first sub-assembly 101 further comprises a first plurality of opto-electronic components 104. The first sub-assembly 101 also comprises a first plurality of waveguides (not shown, except for waveguides 113A and 113B) that are adapted and arranged for the propagation of electromagnetic waves. The opto-electronic components 104 are adapted and arranged to modify the electromagnetic waves propagating in first longitudinal portions of the first plurality of waveguides. Two or more of these opto-electronic components may be adapted and arranged to modify electromagnetic waves in the same waveguide (e.g., the waveguide has more than one first longitudinal portion) and/or some waveguides may have only one first longitudinal portion. Examples of these opto-electronic components 104 are modulators and photodetectors. As a further example, a modulator and a photodetector may modify electromagnetic waves propagating in the same waveguide. At least some of the waveguides, of the first plurality of waveguides, are also adapted and arranged to allow electromagnetic waves to enter and exit the first sub-assembly 101. This is illustrated by the waveguides 113A and 113B.

The first sub-assembly 101 also comprises a first plurality of connectors 105. Some of these connectors are adapted and arranged to electrically connect the electronic components, of the first plurality of electronic components 103, with each other. The first plurality of connectors 105 is also made up of connectors that are adapted and arranged to electrically connect the electronic components, of the first plurality of electronic components 103, with the opto-electronic components of the first plurality of opto-electronic components 104. The first plurality of connectors 105 may also be made up of connectors that are adapted and arranged to electrically connect the opto-electronic components, of the first plurality of opto-electronic components 104, with each other. Examples of the connectors include vias and metal layers. The assembly 100 is adapted and arranged so that electrical currents, used to transfer data, can flow between the first plurality of electronic components 103 and the first plurality of opto-electronic components 104 without requiring that these electrical currents flow through any of the following: a bonding wire, a solder bump, a microbump, a C2 bump, a C4 bump, or a hybrid bond. The first plurality of opto-electronic components 104 are thus monolithically integrated with the first layer of the first kind 102. It is emphasised that Fig. 1A is only schematic illustration, and that the first plurality of connectors 105 are shown in Fig. 1A in a simplified manner for the purposes of illustration. For example, it should not be derived from Fig. 1A that all electronic components 103 and all opto-electronic components 104 are necessarily connected with each other.

Data, in the form of electrical currents, flow between the first plurality of electronic components 103 and the first plurality of opto-electronic components 104, with the opto-electronic components converting electrical signals into optical signals, as well as converting optical signals into electrical signals. For example, an electrical current flows from an electronic component to a modulator. The modulator modulates an electromagnetic wave propagating in a waveguide of the first plurality of waveguides, thereby transferring the data carried by the electrical signal to data carried by the electromagnetic wave (optical signal). Conversely, an electromagnetic wave carrying data, and propagating in a waveguide of the first plurality of waveguides, can be detected by a photodetector, thereby transferring an optical signal to an electrical current that carries data to an electronic component.

It can also be seen from Fig. 1A that the first layer of the first kind 102 comprises a sub-layer of a first kind 108 and a sub-layer of a further kind 109. An example of a sub-layer of the first kind 108 is a front-end-of-line. An example of a sub-layer of the further kind 109 is a back-end-of-line.

Fig. 1A shows that the first plurality of opto-electronic components 104, as well as some of the connectors, forming part of the first plurality of connectors 105, are arranged in a layer of an even-further kind 116. Although not shown, the layer of an even-further kind 116 generally comprises multiple sub-layers. These sub-layers may include a sub-layer made from glass and/or a sub-layer made from aluminium oxide and/or other dielectric layers.

Fig. 1A also shows how a first direction (Z) 106 and a further direction (X) 107 are defined. The first direction 106 is arranged perpendicular to the first layer of the first kind 102. The further direction 107 is arranged perpendicular to the first direction 106 (and thus parallel to the first layer of the first kind 102). The further direction 107 shown in Fig. 1A corresponds to the first longitudinal portions (of the first plurality of waveguides) associated with the opto-electronic components 104. For the purposes of illustration, the further direction 107 shown in Fig. 1A will be used as a global definition of the further direction for Figs 1A to 1D. A heigh of an opto-electronic component is measured along the first direction 106.

Fig. 1A further shows that the first plurality of opto-electronic components 104 are arranged such that these opto-electronic components overlap the first layer of the first kind 102. Alternatively stated: as shown in Fig. 1A, a first surface 110 of the first layer of the first kind 102 is selected as a reference plane $Z = 0$, a second surface 111 of the first layer of the first kind 102 is selected as a reference plane $X = 0$, while a further surface 112 of the first layer of the first kind 102 is selected as a reference plane $X=X_1$. The second surface 111 and the further surface 112 are perpendicular to the first surface 110. The first plurality of opto-electronic components 104 are arranged at positions with Z-coordinates such that $Z > 0$, and at positions with X-coordinates such that $0 <X<X_1$. With respect to Fig. 1A, the first plurality of opto-electronic components 104 are thus arranged directly above the first layer of the first kind 102 (i.e., cover the first layer of the first kind 102). An opto-electronic component is arranged at a position $Z > 0$ if a centre of a first longitudinal potion of a waveguide, associated with the opto-electronic component, is arranged at positions $Z > 0$. An opto-electronic component is arranged at a position $0<X<X_1$ if the centre of a first longitudinal portion of the waveguide, associated with the opto-electronic component, is arranged at a position that falls between 0 and $X_1$. An opto-electronic component arranged at a position $0 <X <X_1$ overlaps the first layer of the first kind 102.

The assembly 100 in Fig. 1A further comprises a layer of a further kind 114, wherein the layer of the further kind 114 is preferably made from glass. The layer of the further kind 114 comprises a further plurality of waveguides (*e.g.,* the waveguides are embedded in the layer of the further kind 114). Fig. 1A shows one such waveguide 115. The waveguide 115 is adapted and arranged to allow for an electromagnetic wave to be coupled between the waveguide 115 and the waveguide 113A. Electromagnetic waves (*e.g.,* carrying data) can thus be transported by the layer of the further kind 114. Arranged on the layer of the further kind 114 is a third plurality of connectors 117 that are in electrical connection with the first plurality of connectors 105. Electrical current can be brough to the first sub-assembly 101 via the third plurality of connectors 117.

The layer of the further kind 114 may also comprise a further plurality of connectors to, e.g., transfer data in the form of electrical signals (*e.g.,* connector 136). The layer of the further kind 114 may also comprise electronic components, such as transistors, capacitors, resistors, and diodes. If the layer of the further kind 114 does comprise electronic components, then it is preferred that the maximum number of logic operations per second that the layer of the further kind 114 can perform is less than the number of logic operations per second that the first layer of the first kind 102 can perform. It is preferred that the layer of the further kind 114 does not comprise any opto-electronic components.

### *Fig. 1B to 1D*

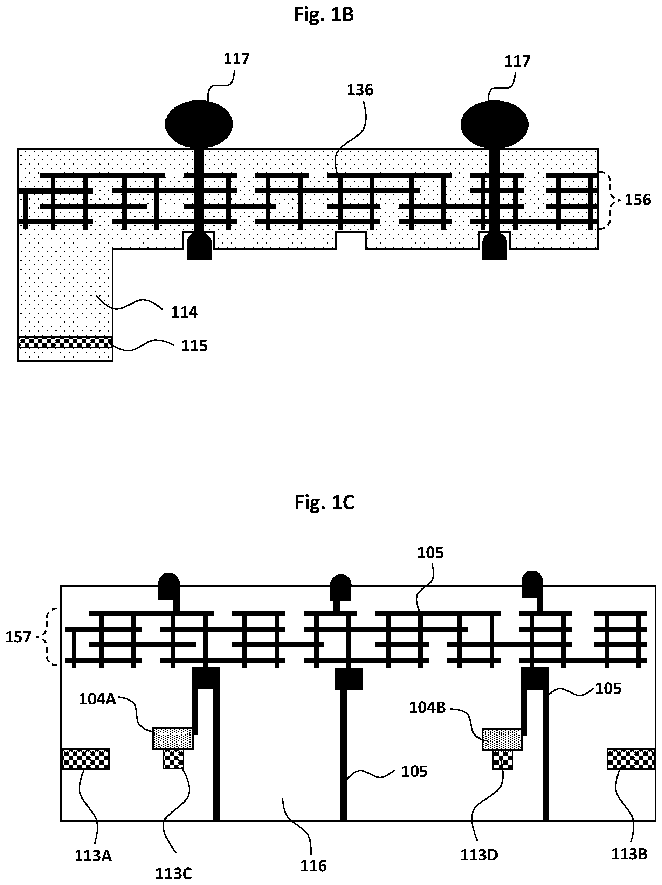

Fig. 1B is a schematic illustration showing further details of the layer of the further kind 114 of the assembly 100 of Fig. 1A. In addition to the features shown in Fig. 1A, Fig. 1B shows that the layer of the further kind 114 has a further plurality of connectors 136 arranged as metal redistribution layers and vias 156.

Fig. 1C is a schematic illustration showing further details of the layer of the even-further kind 116 of the assembly 100 of Fig. 1A. In addition to the waveguides 113A and 113B, Fig. 1C also shows waveguides 113C and 113D. The opto-electronic component 104A and the waveguide 113C are arranged such that the opto-electronic component 104A can modify an electromagnetic wave propagating in a first longitudinal portion of the waveguide 113C. Similarly, the opto-electronic component 104B and the waveguide 113D are arranged such that the opto-electronic component 104B can modify an electromagnetic wave propagating in a first longitudinal portion of the waveguide 113D. Fig. 1C also shows that some of the connectors, of the first plurality of connectors 105, are arranged as metal redistributions layers and vias 157 in the layer of the even-further kind 116. These metal redistributions layers and vias 157 are arranged between the opto-electronic components 104 and the layer of the further kind (not shown in Fig. 1C).

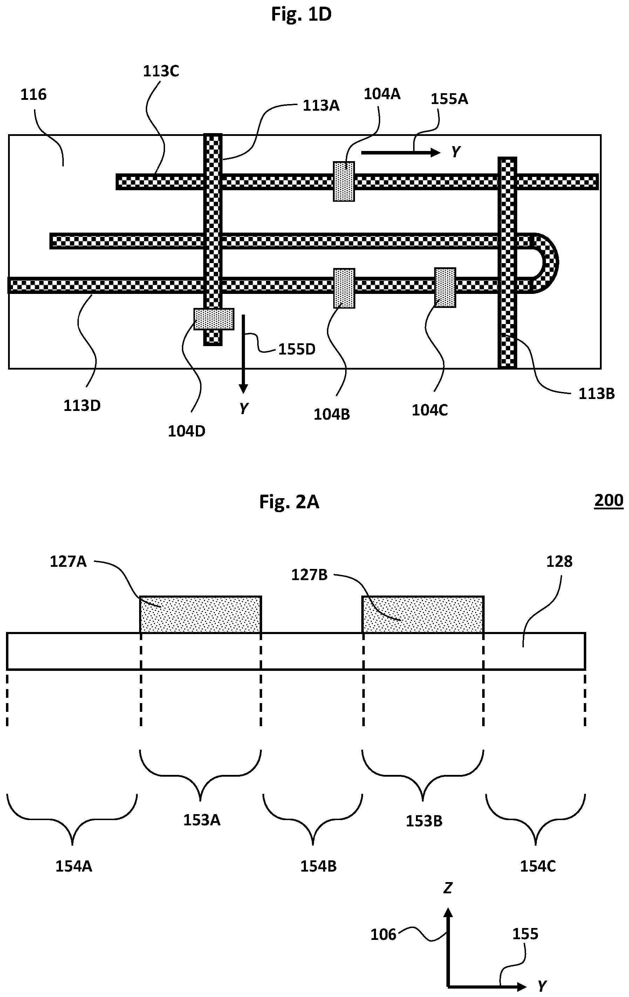

Fig. 1D is a schematic illustration showing further details of the layer of the even-further kind of the assembly of Fig. 1A. Different to Figs 1A to 1C, Fig. 1D shows a cross-section of the assembly made parallel to the layer of the even-further kind 116 and the first layer of the first kind 102 (i.e., the layer of the even-further kind 116 is viewed from above). Fig. 1D shows the first plurality of waveguides 113A to 113D, and the first plurality of opto-electronic components 104A to 104D. It is again emphasised that Fig. 1D is a schematic illustration, and it should not necessarily be derived from Fig. 1D that all waveguides, of the first plurality of waveguides, are in optical connection with each other. Fig. 1D also shows that the second direction (Y) may be locally defined. For example, at the position of the opto-electronic component 104A a second direction 155A is defined as shown. Similarly, at the position of the opto-electronic component 104D a second direction 155D is defined as shown in Fig. 1D, with the directions 155A and 155D being perpendicular to each other. A further direction (X) may also be locally defined. A further direction (not shown) at the position of the opto-electronic component 104A is defined perpendicular to the second direction 155A, while a further direction (not shown) at the position of the opto-electronic component 104D is defined perpendicular to the second direction 155D. For both the opto-electronic components 104A and 104D, the first direction (Z) is perpendicular to the first layer of the first kind, and thus the locally defined second directions 155A and 155D and the corresponding, locally defined further directions.

*Fig. 2*

Fig. 2A is a schematic illustration showing a first longitudinal portion and a further longitudinal portion of a waveguide (of the first plurality of waveguides). In Fig. 2A a length of the waveguide 128 is arranged parallel to a second direction (Y) that is perpendicular to the first direction (Z). Although not shown, the second direction (Y) is also perpendicular to the further direction (X). A direction of propagation of an electromagnetic wave in the waveguide 128 is along the second direction (Y). In Fig. 2A two opto-electronic components 127A and 127B overlap longitudinal portions 153A and 153B of the waveguide 128. These longitudinal portions 153A and 153B are first longitudinal portions. The longitudinal portions 154A, 154B, and 154C, not overlapped by an opto-electronic component, are further longitudinal portions. A waveguide (of the first plurality of waveguides) may have one or more first longitudinal portions. However, some waveguides (of the first plurality of waveguides) may have no first longitudinal portions. A waveguide (of the first plurality of waveguides) may also have one or more further longitudinal portions. However, some waveguides (of the first plurality of waveguides) may have no further longitudinal portions.

The above, as described for the first plurality of waveguides, also applies to the second plurality of waveguides. For example, a first longitudinal portion of the waveguide (of the second plurality of waveguides) is overlapped by an opto-electronic component (of the second plurality of opto-electronic components).

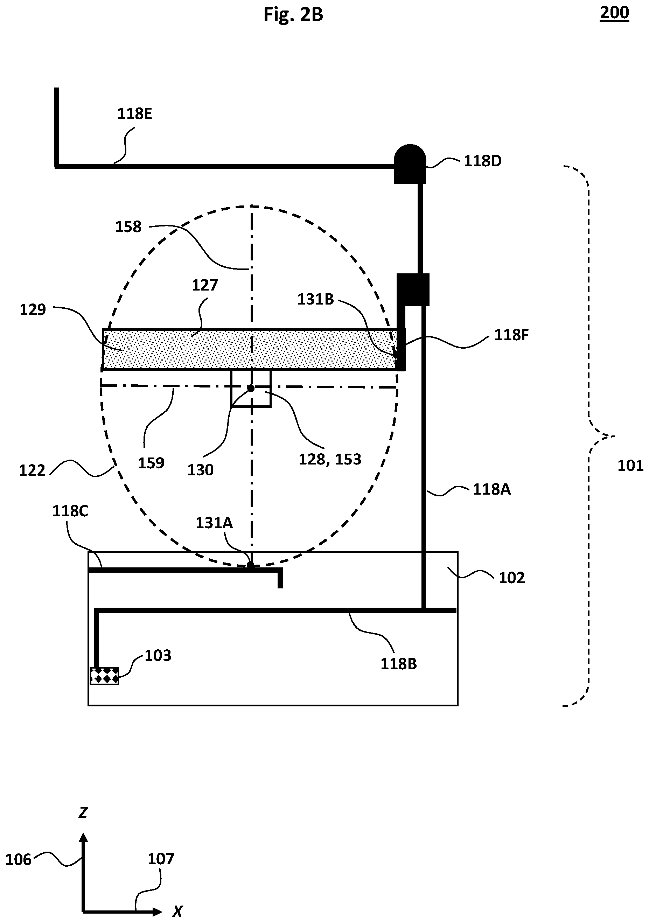

Fig. 2B illustrates how an individual minimum distance fz and an individual minimum distance $f_X$ of a first longitudinal portion of a waveguide (of the first plurality of waveguides) are determined. Fig. 2B is a simplified version of Fig. 1A, with many of the features of Fig. 1A omitted for the purpose of illustration. Fig. 2B shows an opto-electronic component 127 with a first longitudinal portion 153 of a waveguide 128. For simplicity, individual parts of the opto-electronic component 127 are not explicitly shown but are represented by the layer 129. Fig. 2B also shows the first layer of the first kind 102 of the first sub-assembly 101. Fig. 2B further shows one electronic component 103 (of the first plurality of electronic components), as well as a number of connectors of the first plurality of connectors. These connectors include, amongst others, vias and metal layers such as 118A, 118B, 118C, 118 D, 118E, and 118F. The individual minimum distance $f_Z$ and the individual minimum distance $f_X$ are determined by first drawing an imaginary ellipse 122 around the first longitudinal portion 153 of the waveguide 128, with a centre of the ellipse 122 also being a centre 130 of the first longitudinal portion 153. The ellipse 122 is drawn such that the minor and major axes of the ellipse 122 have the largest values possible without any part of a connector being located in the ellipse 122. For example, the ellipse 122 indicates an area around the first longitudinal portion 153 of the waveguide 128 that is substantially free of connectors. The ellipse 122 may also be a circle (i.e., the minor and major axes are of equal length). As can be seen in Fig. 2B, the ellipse 122 touches connectors at the points 131A and 131B (the connector at point 131B is an electrode of the opto-electronic component 127). Increasing either of the minor or major axes of the ellipse 122 will thus include a part of at least one connector (here connectors 118C and 118F) within the ellipse 122. A first axis 158 of the ellipse 122 is arranged parallel to the first direction (Z) 106, and a second axis 159 of the ellipse 122 is arranged parallel to the further direction (X) 107. Here the first axis 158 can be either the minor or major axis. If the first axis 158 is the minor axis, then the second axis 159 is the major axis. If the first axis 158 is the major axis, then the second axis 159 is the minor axis. The individual minimum distance fz of the first longitudinal portion 153 of the waveguide 128 is 0.5Lz, where Lz is the length of the first axis 158 of the ellipse 122. The individual minimum distance $f_X$ of the first longitudinal portion 153 of the waveguide 128 is $0.5L_X$, where $L_X$ is the length of the second axis 159 of the ellipse 122. For different cross-section of the assembly, e.g., made at different positions along a length of a first longitudinal portion of a waveguide, the individual minimum distance $f_Z$ may vary between these cross-sections. Here the individual minimum distance $f_Z$ is defined as the smallest of these distances. Similarly, for different cross-section of the assembly, e.g., made at different positions along a length of a first longitudinal portion of a waveguide, the individual minimum distance $f_X$ may vary between these cross-sections. Here the individual minimum distance $f_X$ is defined as the smallest of these distances.

Although not shown, an individual minimum distance gz is determined in the same manner as described for the individual minimum distance fz in Fig. 2B, with the difference that the individual minimum distance gz is determined with respect to a further longitudinal portion of a waveguide (of the first plurality of waveguides), i.e., a longitudinal portion not overlapped by an opto-electronic component. Similarly, an individual minimum distance $g_X$ is determined in the same manner as described for the individual minimum distance $f_X$ in Fig. 2B, with the difference that the individual minimum distance $g_X$ is with respect to the further longitudinal portion of the waveguides (of the first plurality of waveguides).

An individual minimum distance iz and an individual minimum distance $i_X$ (of a first longitudinal portion of a waveguide of the second plurality of waveguides, forming part of a second sub-assembly) is determined in the same manner as described above for the individual minimum distance $f_Z$ and the individual minimum distance $f_X$, respectively.

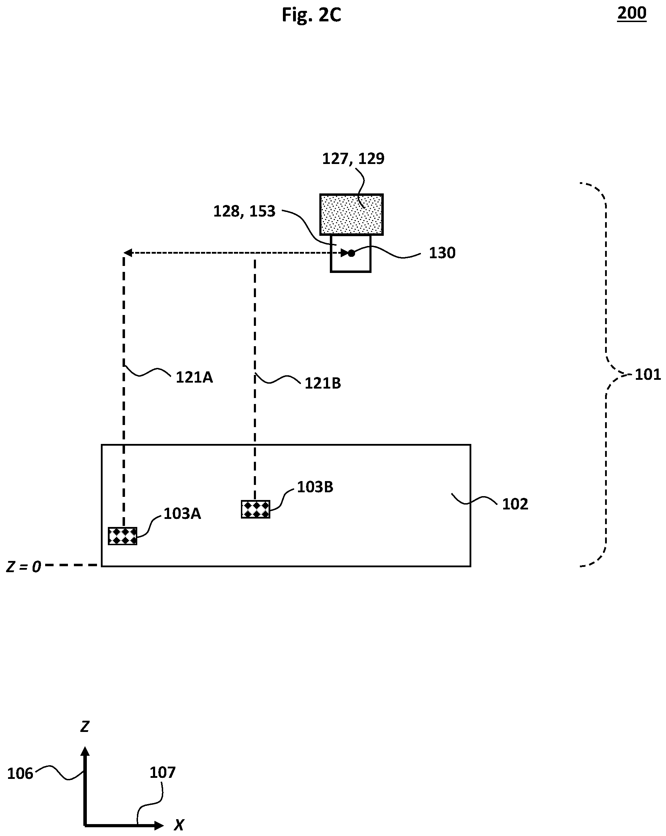

Fig. 2C shows how an individual minimum distance hz between a first longitudinal portion of a waveguide (of the first plurality of waveguides) and an electronic component (of the first plurality of electronic components) is determined. Fig. 2C is a simplified version of Figs 1 and 2B, with many of the features of these figures omitted for the purpose of illustration. Fig. 2C shows an opto-electronic component 127 and a waveguide 128 having a first longitudinal portion 153. For simplicity, individual parts of the opto-electronic component 127 are not explicitly shown but are represented by the layer 129. Fig. 2C also shows the first layer of the first kind 102 of the first sub-assembly 101. Fig. 2C further shows two electronic component 103A and 103B (of the first plurality of electronic components). The individual minimum distance $h_Z$ for the first longitudinal portion 153 is defined as the distance, measured along the first direction 106, between a centre 130 of the first longitudinal portion 153 and the electronic component with the largest $Z$-coordinate (i.e., the electronic component arranged closest, along the first direction, to the first longitudinal portion 153). In Fig. 2C the electronic component 103B has a larger Z-coordinate compared to electronic component 103A. In other words, the distance 121B is shorter than the distance 121A, where said distances are measured along the first direction 106. The distance 121B is therefore the individual minimum distance $h_Z$ for the first longitudinal portion 153.

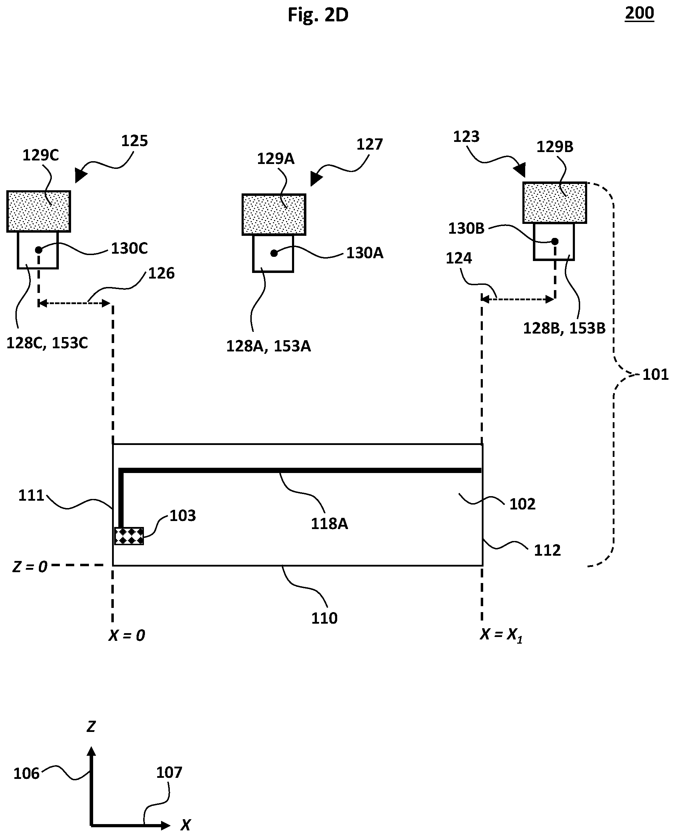

Fig. 2D shows how an individual minimum distance $h_X$ is determined for a first longitudinal portion of a waveguide of the first plurality of waveguides. Fig. 2D is a simplified version of Fig. 1A, with many of the features of Fig. 1A omitted for the purpose of illustration. Fig. 2D shows the first layer of the first kind 102 that has a second surface 111 and a further surface 112. Said surfaces 111 and 112 are perpendicular to the first surface 110 of the layer of the first kind 102. Furthermore, the second surface is arranged at $X = 0$, while the further surface 112 is arranged at $X = X_1$.

If a centre of a first longitudinal portion of a waveguide is arranged at a position $X$ such that $0 \leq X \leq X_1$, the individual minimum distance $h_X$ is zero. This holds for the opto-electronic component 127 shown in Fig. 2D (the opto-electronic component 127 is associated with the first longitudinal portion 153A). Here a centre 130A of the first longitudinal portion 153A of the waveguide 128A is arranged between 0 and $X_1$. The individual minimum distance $h_X$ for the first longitudinal portion 153A of the waveguide 128A is thus zero.

If a centre of a first longitudinal portion of a waveguide is arranged at a position $X$ such that $X > X_1$, then the individual minimum distance $h_X$ is defined as the distance between $X_1$ and $X$. This is illustrated in Fig. 2D for an opto-electronic component 123 (associated with the first longitudinal portion 153B). Here a centre 130B of the first longitudinal portion 153B of the waveguide 128B is arranged at a position $X > X_1$. The distance 124 between $X$ and $X_1$ is the individual minimum distance $h_X$ for the first longitudinal portion 153B.

If a centre of a first longitudinal portion of a waveguide is arranged at a position $X$ such that $X < 0$, then the individual minimum distance $h_X$ is defined as the distance between $X$ and 0. This is illustrated in Fig. 2D for an opto-electronic component 125 (associated with the first longitudinal portion 153C). Here a centre 130C of the first longitudinal portion 153C of the waveguide 128C is arranged at a position $X < 0$. The distance 126 between $X$ and 0 is the individual minimum distance $h_X$ for the first longitudinal portion 153C.

An individual minimum distance $h_Y$ for a first longitudinal portion of a waveguide (of the first plurality of waveguides) is determined in the same manner as described above for the individual minimum distance $h_X$.

Although not shown in Figs 2A to 2D, the distance between the first layer of the first kind 102 and the layer of the further kind 114 is defined as the distance between the last metal layer in the first layer of the first kind 102 and the layer of the further kind 114. Here the last metal layer is a metal layer that is arranged between the electronic components and the opto-electronic components, and which is closest to the opto-electronic components (i.e., the last metal layer is the metal layer with the largest $Z$ value - see Fig. 1A). Furthermore, this distance between the first layer of the first kind 102 and the layer of the further kind 114 is measured along the first direction 106. This distance is also measured along an imaginary line that passes through an opto-electronic component.

*Fig. 3*

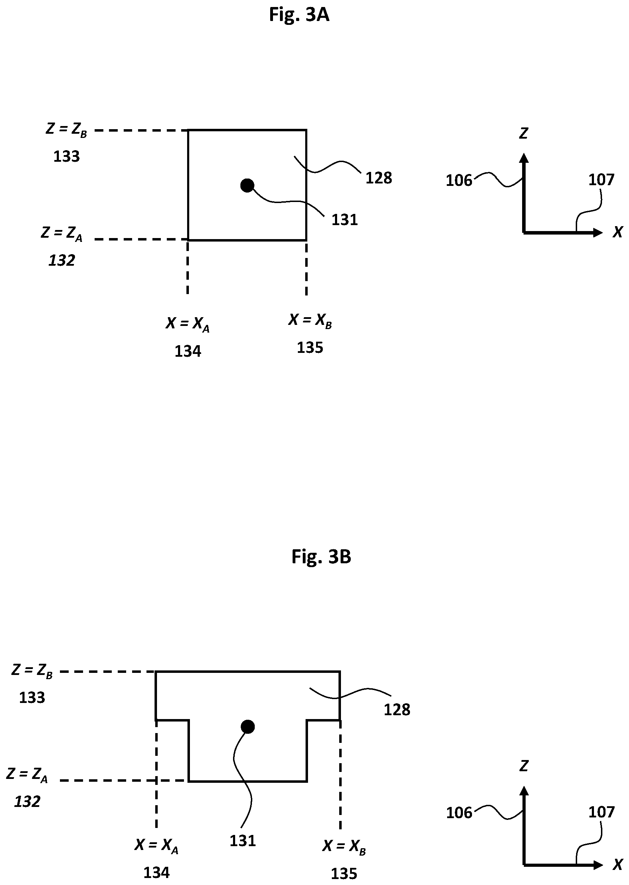

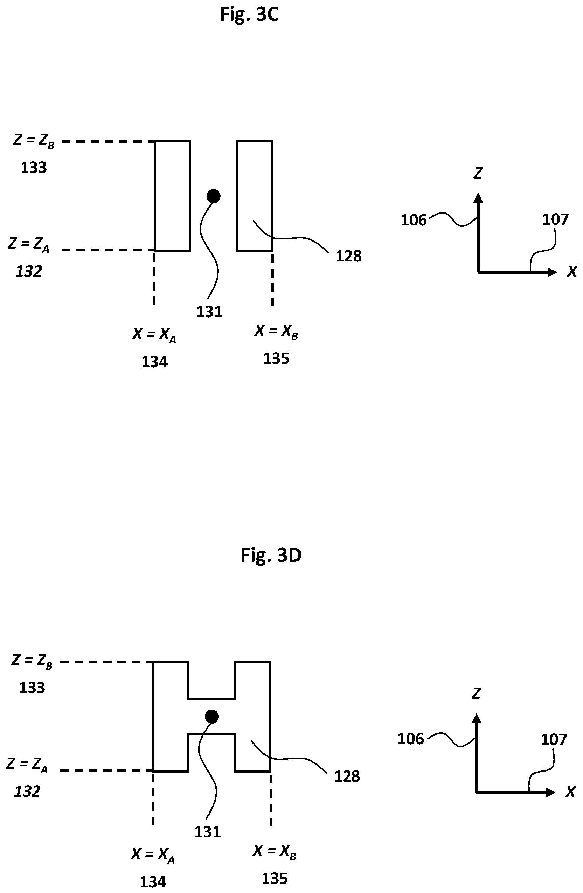

Figs 3A to 3D illustrates how a centre of a longitudinal portion of a waveguide is defined. Fig. 3 shows a longitudinal portion of a waveguide 128 (here the longitudinal portion can be a first or further longitudinal portion). To determine the $Z$-coordinate of a centre 131, the lowermost and uppermost points on the waveguide 128, measured along the first direction 106, are determined. In Figs 3A to 3D, these points are at $Z = Z_A$ (132) and $Z = Z_B$ (133). The $Z$-coordinate of the centre 131 is determined by the relation $Z = (Z_A + Z_B) / 2$. To determine the $X$-coordinate of the centre 131, the leftmost and rightmost points on the waveguide 128, measured along the further direction 107, are determined. In Figs 3A to 3D, these points are at $X = X_A$ (134) and $X = X_B$ (135). The $X$-coordinate of the centre 131 is determined by the relation $X = (X_A + X_B) / 2$.

*Fig. 4*

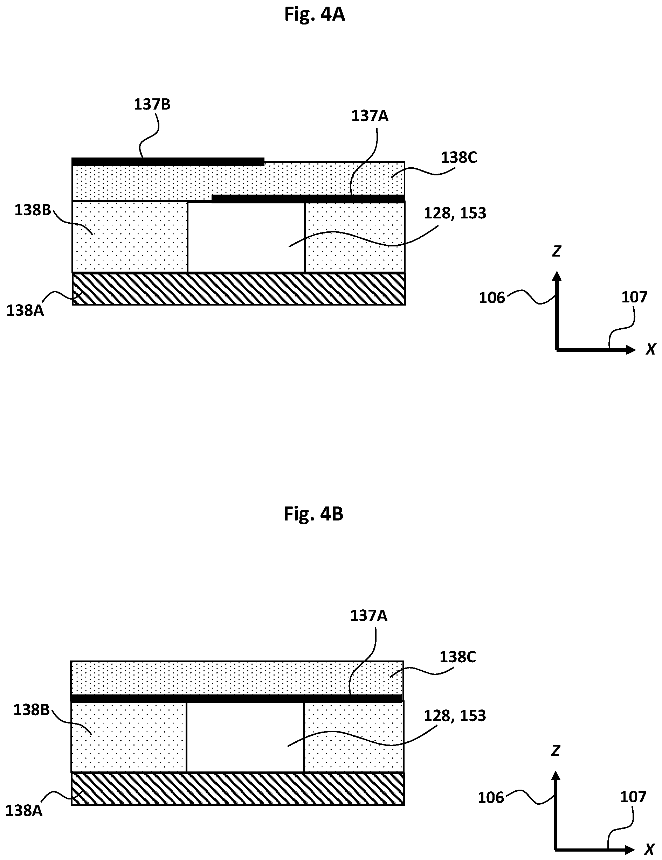

Figs 4A and 4B are schematic illustrations of opto-electronic components. Fig. 4A shows a modulator associated with a first longitudinal portion 153 of a waveguide 128, with the modulator comprising two electrically conducting elements 137A and 137B. The electrically conducting elements 137A and 137B are arranged to overlap each other, as well as the first longitudinal portion 153. The modulator is also adapted and arranged to apply an electrical voltage between the sections of the electrically conducting elements 137A and 137B that overlap. Furthermore, this electrical voltage can be varied. The electrically conducting elements 137A and 137B are made from graphene and are each connected to an electrode (not shown). The modulator also has a number of layers 138A, 138B, and 138C comprising a dielectric material (not necessarily the same for each of these layers). For example, the layer 138C comprises aluminium oxide, whereas the layer 138A comprises silicon dioxide. The electrically conducting elements 137A and 137B, as well as the layer 138C, are examples of the individual parts the of opto-electronic component (as referred to in, e.g., Fig. 2B - see layer 129). Fig. 4B shows a photodetector. The photodetector is similar to the modulator of Fig. 4A, with the difference that the photodetector has only one electrically conducting element 137A. Variations in the modulator and photodetector of Figs 4A and 4B, respectively, are also possible. These variations include the number and/or arrangement of the graphene layer(s).

*Fig. 5*

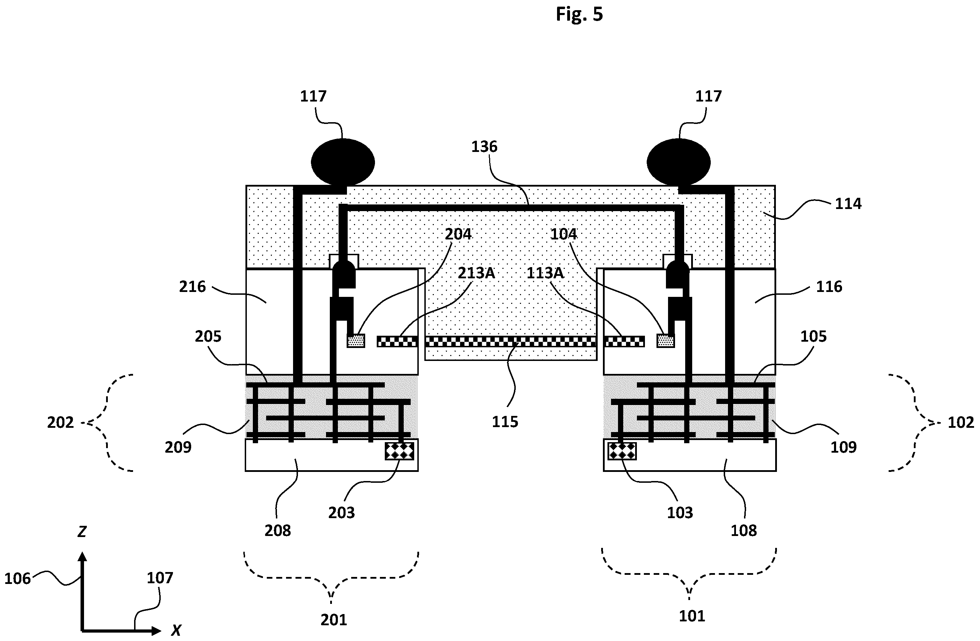

Fig. 5 is a schematic illustration showing a cross-sectional cut of an assembly, according to the invention, comprising a first sub-assembly 101 and a second sub-assembly 201. It is again emphasised that Fig. 5 is a highly simplified, schematic illustration. The first sub-assembly 101 in Fig. 4 is the same sub-assembly 101 shown in Fig. 1A. However, for the purpose of illustration, only part of the first sub-assembly 101 is shown in Fig. 5. Furthermore, the second sub-assembly 201 is identical to the first sub-assembly 101 (this is, however, not a requirement). However, for the purpose of illustration, only part of the second sub-assembly 201 is shown in Fig. 5.

Fig. 5 shows that, similar to the first sub-assembly 101, the second sub-assembly 201 comprises a second layer of the first kind 202. Said second layer of the first kind 202 comprises a second plurality of electronic components 203 (of which only one is shown). These electronic components are, for example, resistors, capacitors, transistors, and diodes. The second sub-assembly 201 further comprises a second plurality of opto-electronic components 204 (of which only one is shown). The second sub-assembly 201 also comprises a second plurality of waveguides that are adapted and arranged for the propagation of electromagnetic waves. At least some of these waveguides have first longitudinal portions that are associated with the second plurality of opto-electronic components 204. Some of the waveguides, of the second plurality of waveguides, are also adapted and arranged to allow electromagnetic waves to enter and exit the second sub-assembly 201. This is illustrated by the waveguide 213A.

The second sub-assembly 201 also comprises a second plurality of connectors 205 (of which only some are shown). Some of these connectors are adapted and arranged to electrically connect the electronic components, forming part of the second plurality of electronic components 203, with each other. The second plurality of connectors 205 is also made up of connectors that are adapted and arranged to electrically connect the second plurality of electronic components 203 with the second plurality of opto-electronic components 204. The second plurality of connectors 205 may also be made up of connectors that are adapted and arranged to electrically connect the opto-electronic components, of the second plurality of opto-electronic components 204, with each other. Examples of the connectors include vias and metal layers. The assembly is adapted and arranged that electric currents, used to transfer data, can flow between the second plurality of electronic components 203 and the second plurality of opto-electronic components 204 without requiring that these electric currents flow through any of the following: a bonding wire, a solder bump, a microbump, a C2 bump, a C4 bump, or a hybrid bond. The second plurality of opto-electronic components 204 are thus monolithically integrated with the second layer of the first kind 202.

It can also be seen from Fig. 5 that the second layer of the first kind 202 comprises a sub-layer of a first kind 208 and a sub-layer of a further kind 209. An example of a sub-layer of the first kind 208 is a front-end-of-line. An example of a sub-layer of the further kind 209 is a back-end-of-line.

Fig. 5 shows that the second plurality of opto-electronic components 204, as well as some of the connectors, forming part of the second plurality of connectors 205, are arranged in a layer of an even-further kind 216. Fig. 5 further shows that the second plurality of opto-electronic components 204 are arranged directly above the second layer of the first kind 202.

The assembly in Fig. 5 further comprises a layer of a further kind 114, wherein the layer of the further kind 114 is preferably made from glass. The layer of the further kind 114 comprises a further plurality of waveguides (*e.g.,* the waveguides are embedded in the layer of the further kind 114). Fig. 5 shows one such waveguide 115. The waveguide 115 is adapted and arranged to allow for an electromagnetic wave to be coupled between the waveguide 115 and the waveguides 113A and 213A. Electromagnetic waves (*e.g.,* carrying data) can thus be transported by the layer of the further kind 114 between the first plurality of opto-electronic components 104 and the second plurality of opto-electronic components 204. This allows for an exchange of data between the first plurality of electronic components 103 and the second plurality of electronic components 203 via the first plurality of opto-electronic components 104 and the second plurality of opto-electronic components 204.

Arranged on the layer of the further kind 114 is a third plurality of connectors 117 that are in electrical connection with the first plurality of connectors 105 and the second plurality of connectors 205. Electrical current can be brough to the first sub-assembly 101 and the second sub-assembly 201 via the third plurality of connectors 117.

The layer of the further kind 114 may also comprise a further plurality of connectors for transferring data in the form of electrical signals (*e.g.,* connector 136) between the first sub-assembly 101 and the second sub-assembly 201. The layer of the further kind 114 may also comprise electronic components, such as transistors, capacitors, resistors, and diodes. If the layer of the further kind 114 does comprise electronic components, then it is preferred that the maximum number of logic operations per second that the layer of the further kind 114 can perform is less than the number of logic operations per second that the first layer of the first kind 102 and the second layer of the first kind 202 can perform. It is preferred that the layer of the further kind 114 does not comprise any opto-electronic components.

### Fig. 6

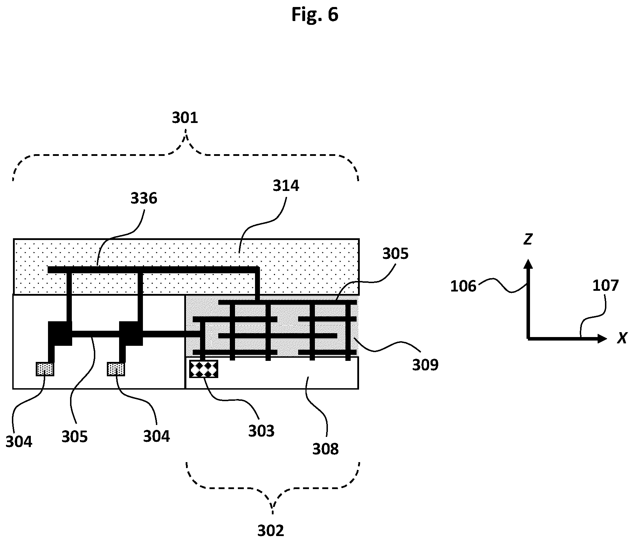

Fig. 6 is a schematic illustration showing a cross-sectional cut of an assembly that is not according to the invention. The assembly comprises a sub-assembly 301, with the sub-assembly 301 in turn comprising a layer of the first kind 302. Said first layer of the first kind 302 comprises a plurality of electronic components 303 (of which only one is shown). The sub-assembly 301 further comprises a plurality of opto-electronic components 304. Similar to Fig. 1A, the further direction 107 shown in Fig. 6 corresponds to the first longitudinal portions (of the first plurality of waveguides) associated with the opto-electronic components 304. For the purposes of illustration, the further direction 107 shown in Fig 6 will be used as a global definition of the further direction for Fig. 6.

The sub-assembly 301 also comprises a first plurality of connectors 305. These connectors 305 are adapted and arranged to electrically connect the electronic components (of the plurality of electronic components 303) with each other. It can also be seen from Fig. 6 that the layer of the first kind 302 comprises a sub-layer of a first kind 308 and a sub-layer of a further kind 309. An example of a sub-layer of the first kind 308 is a front-end-of-line. An example of a sub-layer of the further kind 309 is a back-end-of-line.

The assembly also has a layer of a further kind 314 (e.g., an interposer). The layer of the further kind 314 comprises a further plurality of connectors 336 (of which one is shown). The further plurality of connectors 336 are adapted and arranged to electrically connect the electronic components (of the plurality of electronic components 303) with the opto-electronic components (of the plurality of opto-electronic components 304) via the first plurality of connectors 305. The assembly is adapted and arranged such that electric currents, used to transfer data, can flow between the plurality of electronic components 303 and the plurality of opto-electronic components 304.

In contrast to the sub-assembly 101 shown in Fig. 1A, Fig. 6 shows that the plurality of opto-electronic components 304 are arranged at a same height as the plurality of electronic components 303 (height is measured along the first direction 106). Therefore, in the sense of Fig. 6, the plurality of opto-electronic components 304 are arranged next to the plurality of electronic components 303, instead of directly above the layer of the first kind 302.

### Fig. 7

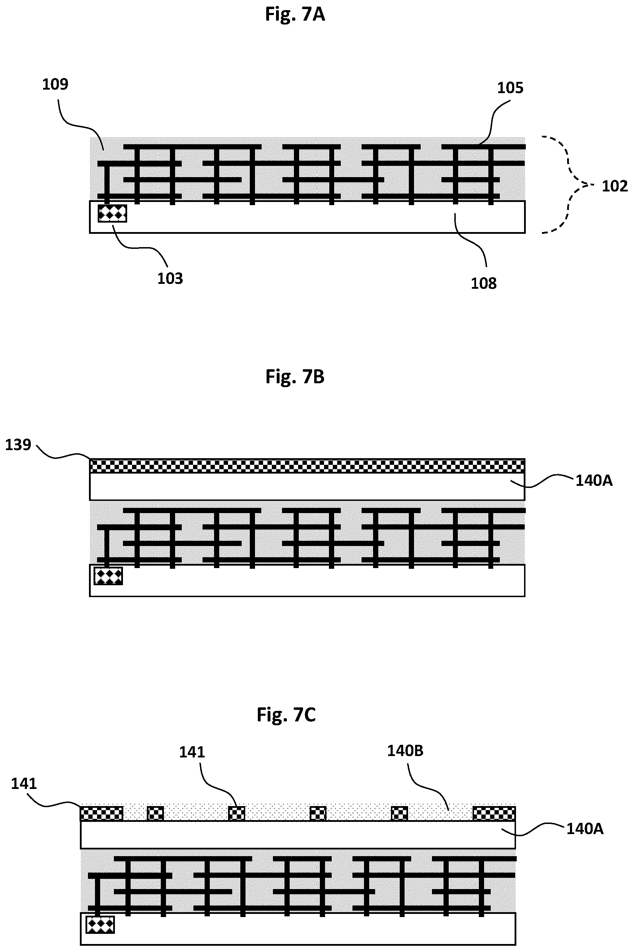

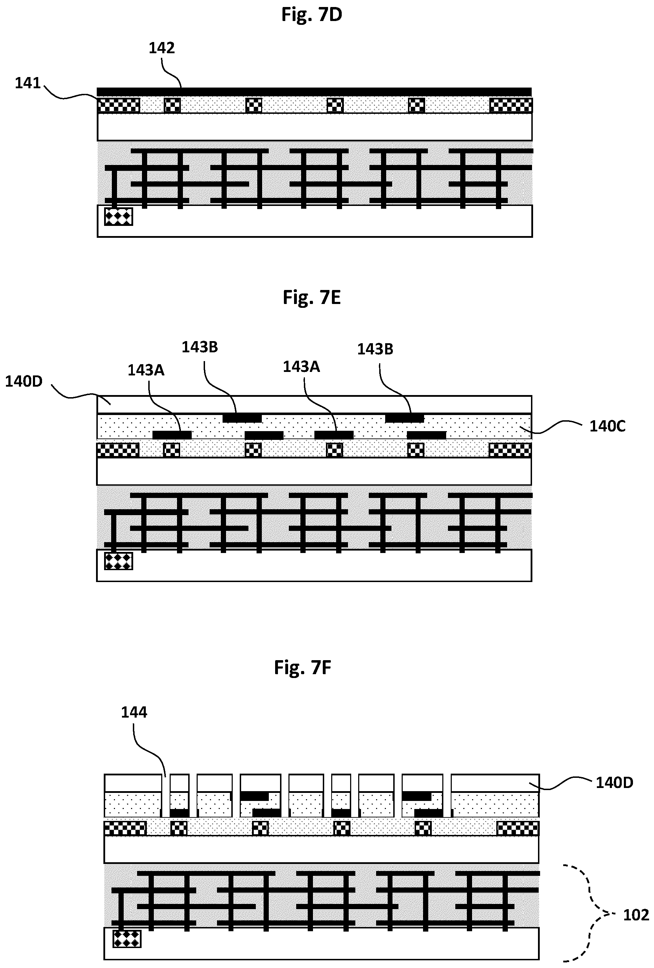

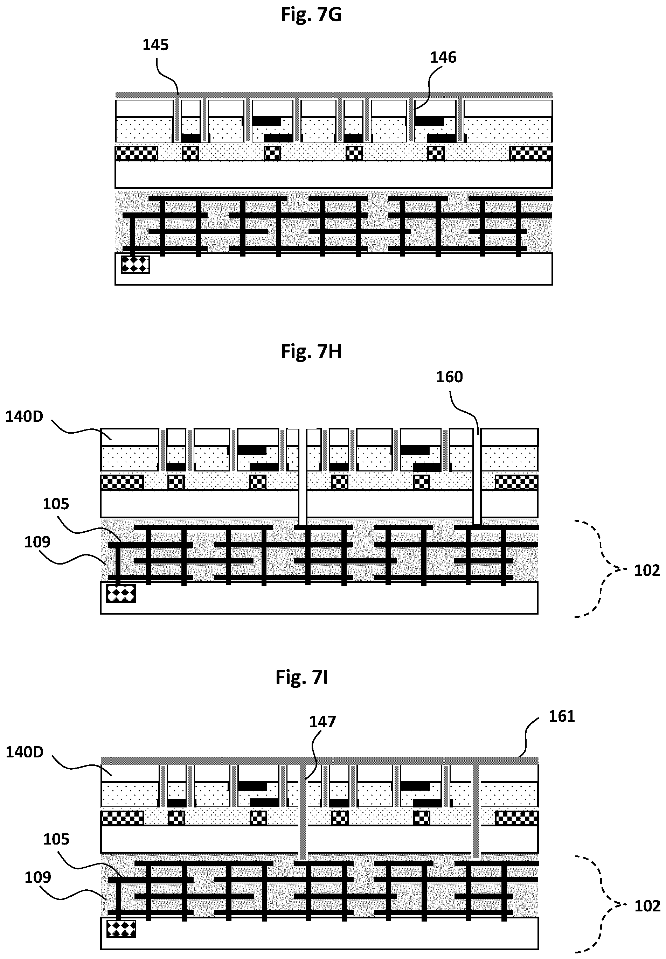

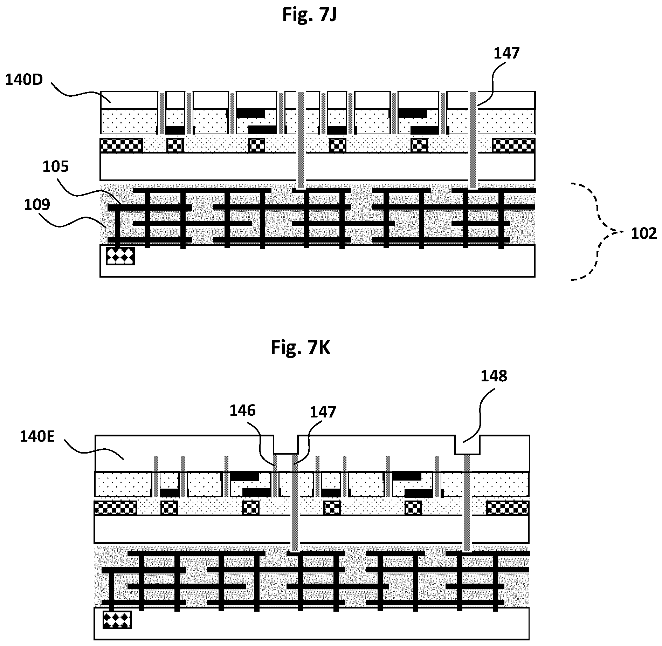

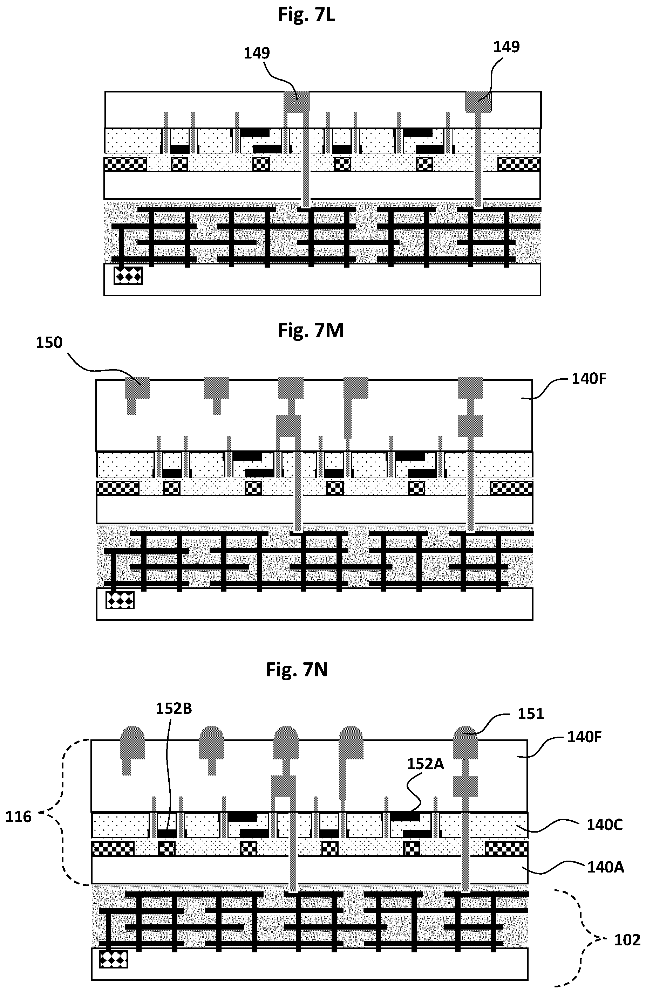

Fig. 7 is schematic illustration of the steps of a method, according to the invention, for producing an assembly according to the invention.

In Fig. 7A a layer of a first kind 102 is provided. The layer of the first kind 102 comprises a sub-layer of a first kind 108 and a sub-layer of a further kind 109. The sub-layer of the first kind 108 comprises a plurality of electronic components 103 (of which only one is shown). The sub-layer of the first kind 108 is a front-end-of-line layer. The sub-layer of the further kind 109 comprises a plurality of connectors 105. The sub-layer of the further kind 109 is a back-end-of-line layer.

In Fig. 7B a waveguide layer 139 is superimposed on the layer of the first kind 102. The waveguide layer 139 is preferably superimposed using physical vapour deposition. The waveguide layer 139 is preferably superimposed at temperatures below 350 °C. The waveguide layer 139 preferably comprises silicon nitride. Prior to superimposing the waveguide layer 139, a dielectric layer $d_1$ 140A is preferably first superimposed on the layer of the first kind 102. The dielectric layer $d_1$ 140A preferably comprises a glass, such as silicon dioxide. Once the dielectric layer $d_1$ 140A has been superimposed, it is preferred to increase a flatness of the dielectric layer $d_1$ 140A by, e.g., chemical-mechanical polishing. If the dielectric layer $d_1$ 140A is present, this dielectric layer $d_1$ 140A is arranged between the layer of the first kind 102 and the waveguide layer 139.

In Fig. 7C sections of the waveguide layer 139 are removed to obtain a plurality of waveguides 141. The sections of the waveguide layer 139 are preferably removed using patterning. After the plurality of waveguides 141 have been obtained, it is preferred to superimpose a dielectric layer $d_2$ 140B on the plurality of waveguides 141. The material of the dielectric layer $d_2$ 140B preferably has a smaller refractive index that the material out of which the plurality of waveguides 141 are made. If the dielectric layer $d_2$ 140B has been superimposed, it is preferred to increase a flatness of the dielectric layer $d_2$ 140B, preferably using chemical-mechanical polishing.

In Fig. 7D a first electrically conducting element layer 142 is superimposed on the plurality of waveguides 141. The first electrically conducting element layer 142 preferably comprises graphene. The first electrically conducting element layer 142 can be superimposed using, e.g., a graphene transfer method.

In Fig. 7E, at least one section of the first electrically conducting element layer 142 is removed to obtain a plurality of electrically conducting elements 143A. The at least one section is preferably removed using patterning. The at least one section is removed such that an electrically conducting element overlaps a waveguide (when viewed in a cross-sectional cut, such as Fig. 7E). Preferably, a dielectric layer $d_3$ 140C is superimposed on the plurality of electrically conducting elements 143A. The dielectric layer $d_3$ 140C is preferably superimposed using atomic layer deposition. The dielectric layer $d_3$ 140C is preferably a high-κ dielectric. The dielectric layer $d_3$ 140C preferably comprises aluminium oxide or hafnium oxide. A second electrically conducting element layer (not shown) is superimposed on the dielectric layer $d_3$ 140C. The second electrically conducting element layer preferably comprises graphene. The second electrically conducting element layer can be superimposed using, *e.g.,* a graphene transfer method. At least one section of the second electrically conducting element layer is removed to obtain a plurality of electrically conducting elements 143B. The at least one section, of the second electrically conducting element layer, is preferably removed using patterning. The at least one section is removed such that an electrically conducting element overlaps a waveguide (when viewed in a cross-sectional cut, such as Fig. 7E). A dielectric layer $d_4$ 140D is preferably superimposed on the plurality of electrically conducting elements 143. It is preferred that the dielectric layer $d_4$ 140D is superimposed using chemical vapour deposition.

In Fig. 7F, preferably, a first plurality of through-holes 144 are formed, wherein the first plurality of through-holes 144 extend to at least one electrically conducting element. It is particularly preferred that the first plurality of through-holes 144 do not pass through the layer of the first kind 102. However, an alternative wherein the first plurality of through-holes 144 pass through the layer of the first kind 102 is not excluded but is less preferred. If the dielectric layer $d_4$ 140D is present, the first plurality of through-holes 144 extend through the dielectric layer $d_4$ 140D. Preferably, the number of through-holes 144 is greater than or equal to the number of electrically conducting elements 143. Preferably, each electrically conducting element has one through-hole that extends to said electrically conducting element.

In Fig. 7G, preferably a first electrically conducting material 145 is superimposed on the plurality of electrically conducting elements 143 in the form of a layer, thereby at least partially filling the first plurality of through-holes 144, which in turn leads to the formation of a first plurality of electrodes 146 that are in electrical connection with the plurality of electrically conducting elements 143. The first electrically conducting material 145 preferably comprises a metal, more preferably at least one of the following: copper, silver, titanium, tungsten, a combination of at least two thereof, and an alloy of at least two thereof. The first plurality of through-holes 144 are preferably formed using pattering.

In Fig. 7H at least one section of the first electrically conducting material 145 is preferably removed, more preferably using chemical-mechanical polishing. Preferably, the first electrically conducting material 145 not present in the first plurality of through-holes 144 is removed. Following the removal of the at least one section of the first electrically conducting material 145, a further plurality of through-holes 160 is preferably formed, wherein the further plurality of through-holes 160 extends to the layer of the first kind 102. If the dielectric layer $d_4$ 140D is present, the further plurality of through-holes extends through the dielectric layer $d_4$ 140D.

In Fig. 7I a second electrically conducting material 161 is superimposed on the plurality of electrically conducting elements 143 in the form of a layer, thereby at least partially filling the further plurality of through-holes 160, which in turn leads to the formation of a further plurality of electrodes 147 that are preferably in electrical connection with the connectors 105 in the sub-layer of the further kind 109. The second electrically conducting material 161 preferably comprises a metal, more preferably at least one of the following: copper, silver, titanium, tungsten, a combination of at least two thereof, and an alloy of at least two thereof. The further plurality of through-holes is preferably formed using pattering.

Preferably, as shown in Fig. 7J, at least a section of the second electrically conducting material 161 is removed, more preferably using chemical-mechanical polishing. Preferably, the second electrically conducting material 161 not present in the further plurality of through-holes is removed.

Alternatively, the first plurality of though-holes and the further plurality of through-holes may be made prior to an electrically conducting material being superimposed. In this case, superimposing an electrically conducting material at least partially fills both the first plurality of though-holes and the further plurality of through-holes.

The first plurality of though-holes, or the further plurality of through-holes, or both, are preferably blind through-holes. In other words, the plurality of through-holes do not extend though all layers and sub-layers that are present.

In Fig. 7K, a dielectric layer $d_5$ 140E is preferably superimposed on the plurality of electrically conducting elements. Preferably, the dielectric layer $d_4$ 140D and the dielectric layer $d_5$ 140E are made from the same material. Once the dielectric layer $d_5$ 140E has been superimposed, at least one section of the dielectric layer $d_5$ 140E is removed to form at least one recess 148 in the dielectric layer $d_5$ 140E. Preferably, the at least one recess is formed such that an end of at least one electrode, of the first plurality of electrodes 146, and an end of at least one electrode, of the further plurality of electrodes 147, are exposed. The at least one section in the dielectric layer $d_5$ 140E is preferably removed using pattering.

In Fig. 7L, preferably a third electrically conducting material 149 is superimposed on the plurality of electrically conducting elements 143 in the form of a layer, thereby at least partially filling the at least one recess 148. Preferably, an end of at least one electrode, of the first plurality of electrodes, is thereby electrically connected with an end of at least one electrode, of the further plurality of electrodes. A plurality of connectors is formed thereby. The third electrically conducting material preferably comprises a metal, more preferably at least one of the following: copper, silver, aluminium, a combination of at least two thereof, and an alloy of at least two thereof. Excess third electrically conducting material is preferably removed, as shown in Fig. 7L.

As shown in Fig. 7M, the steps in Figs 7K and 7L may be repeated. For example, a dielectric layer $d_6$ is superimposed, recesses are formed in the dielectric layer $d_6$, and the recess are at least partially filled with a fourth electrically conducting material.

In Fig. 7N, it is preferred to form microbumps 151 that are in electrical connection with the first plurality of electrodes and the further plurality of electrodes. As shown in Fig. 7N the plurality of electrically conducting elements 143 is arranged between the layer of the first kind 102 and the microbumps 151.

Fig. 7N also illustrates an example of a layer of an even-further kind 116. The layer of the even-further kind 116 comprises the plurality of opto-electronic components, such as the modulator 152A and the photodetector 152B. The layer of the even-further kind 116 also comprises, amongst other, the dielectric layer $d_1$ 140A, the dielectric layer $d_3$ 140C, and the dielectric layer $d_6$ 140F as sub-layers.

Although not shown in Fig. 7, the layer of the further kind can be obtained in a similar manner as illustrated in Figs 7B and 7C. I.e., a silicon dioxide layer $S_1$ is deposited on the dielectric layer $d_6$ 140F (see Fig. 7N). The silicon dioxide layer $S_1$ is subsequently subjected to chemical mechanical polishing. A waveguide layer is then superimposed on the silicon dioxide layer $S_1$, wherein said waveguide layer preferably comprises silicon nitride. Sections of said waveguide layer are then removed to obtain a further plurality of waveguides in the further layer. The sections of the waveguide layer are preferably removed using patterning. After the further plurality of waveguides have been obtained, a silicon dioxide layer $S_2$ is deposited on the silicon dioxide layer $S_1$ and the further plurality of waveguides. Any other methods for obtaining the layer of the further kind and known to the skilled person may also be used.

*Fig. 8*

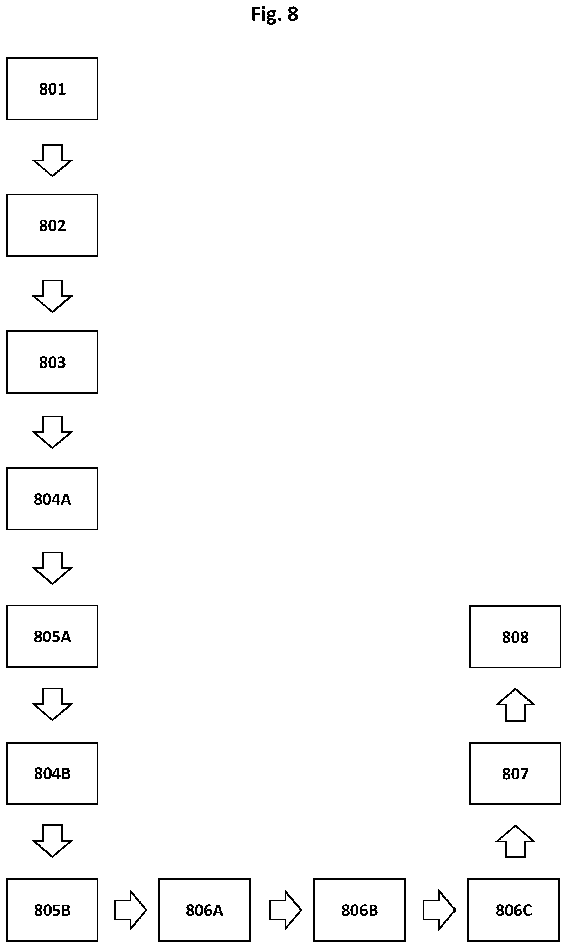

Fig. 8 shows a flow diagram of the steps of a method, according to the invention, for producing an assembly according to the invention. In step 801, a layer of a first kind is provided. The layer of the first kind comprises a front-end-of-line layer and a back-end-of-line layer superimposed on the front-end-of-line layer. In step 802, a waveguide layer is superimposed on the layer of the first kind. In step 803, sections of the waveguide layer are removed to obtain a plurality of waveguides. In step 804A, a first electrically conducting element layer is superimposed on the plurality of waveguides. In Step 805A, sections of the first electrically conducting element layer is removed to obtain a first plurality of electrically conducting elements. Steps 804A and 805A are then repeated (steps 804B and 805B in Fig. 8). More specifically: in step 804B, a second electrically conducting element layer is superimposed on the plurality of waveguides. In step 805B, sections of the second electrically conducting element layer are removed to obtain a second plurality of electrically conducting elements. In step 806, a first plurality of electrodes that are in electrical connection with the plurality of electrically conducting elements is formed. Step 806 comprises the following sub-steps: in step 806A, a dielectric layer A is superimposed on the first and second plurality of electrically conducing elements. In step 806B a first plurality of through-holes is formed through the dielectric layer A. The first plurality of through-holes extends to the electrically conducting element of the first plurality of electrically conducing elements and the second plurality of electrically conducing elements. In step 806C, a first electrically conducting material is superimposed on the dielectric layer A, thereby at least partially filling the first plurality of through-holes, and thereby forming the first plurality of electrodes. In step 807, a further plurality of electrodes that are in electrical connection with the layer of the first kind is formed. In step 808, the first plurality of electrodes and the further plurality of electrodes are brought into electrical connection with each other.

In Figs 7 and 8, electrodes are examples of connectors. In the above figures, the Z-coordinate increases as one moves upwards in the figures. In the above figures, the *X*-coordinate increases as one moves towards the right in the figures.

**TEST METHODS**

The test methods which follow were utilized within the context of the invention. Unless stated otherwise, the measurements were conducted at an ambient temperature of 23 °C, an ambient air pressure of 100 kPa (0.986 atm) and a relative air humidity of 50 %.

Dimensions and distance

A focused ion beam (FIB) is used to make a cut through the assembly. Dimensions (such as length, width and height) of, *e.g.,* a waveguide, as well as the first distance and the further distance, are then measured using scanning electron microscopy (SEM).

Height and thickness of, e.g., an electronic component, an opto-electronic component, and a waveguide, are measured parallel to the first direction (Z). Width of, e.g., an electronic component, an opto-electronic component, and a waveguide, is measured parallel to the further direction (X). Length of, e.g., an electronic component, an opto-electronic component, and a waveguide, is measured parallel to a second direction (Y) that is perpendicular to both the first direction (Z) and the further direction (X).

Average minimum distances

The individual minimum distance $f_Z$, the individual minimum distance $f_X$, the individual minimum distance $g_Z$, the individual minimum distance $g_X$, the individual minimum distance $h_Z$, and the individual minimum distance $h_X$ are determined as illustrated in Figs 2C to 2D, and as described in the accompanying figure description.

In the below description of the measurement method, reference is made to the number, $C_{NUM}$, of cuts made by a focused ion beam. If a first-sub assembly comprises 50 or more opto-electronic components, then $C_{NUM}$ = 50. If a first sub-assembly comprises less than 50 opto-electronic components, then $C_{NUM}$ is equal to the number of opto-electronic components of the first sub-assembly. E.g., if a first sub-assembly comprises only a single opto-electronic component, then $C_{NUM}$ = 1 .

To determine the average minimum distance $F_Z$, a focused ion beam (FIB) is used to make a number of cuts through the first sub-assembly ($C_{NUM}$ is the number of cuts), with a scanning electron microscopy (SEM) image subsequently made of each cut. Each SEM image should have at least one opto-electronic component visible. If one or more SEM images do not have an opto-electronic component visible, then additional FIB cuts and SEM images are made until $C_{NUM}$ SEM images are obtained that each have an opto-electronic component visible.

The individual minimum distance $f_Z$ for $C_{NUM}$ first longitudinal portions of the waveguides (of the first plurality of waveguides) in the SEM images are measured. In other words, $C_{NUM}$ fz values are measured corresponding to each of the $C_{NUM}$ opto-electronic components in the SEM images.

The average minimum distance Fz is then calculated as follows:

$$F_Z = \sum f_{Z,i} \, / \, N,$$

where $f_{Z,i}$ is the individual minimum distance $f_Z$ of the ith first longitudinal portion measured in the SEM images and N = $C_{NUM}$ is the number of first longitudinal portions. In other words, the average minimum distance Fz is calculated by summing the individual minimum distances $f_{Z,i}$ measured for the first longitudinal portions and dividing said sum by the number N of first longitudinal portions.

The average minimum distance $F_X$ is determined in the same manner as described above for the average minimum distance Fz. In other words, the individual minimum distance $f_X$ for $C_{NUM}$ first longitudinal portions of the waveguides (of the first plurality of waveguides) in the SEM images is measured. The average minimum distance $F_X$ is then calculated by summing the individual minimum distances $f_{X,i}$ determined for the first longitudinal portions and dividing said sum by the number N of first longitudinal portions.

The average minimum distance $G_Z$ is determined in the same manner as described above for the average minimum distance $F_Z$, with the following difference: $C_{NUM}$ SEM images of the assembly wherein $C_{NUM}$ further longitudinal portions are visible should be used. In other words, if $C_{NUM}$ SEM images are initially obtained wherein one or more SEM images do not have a further longitudinal portion visible, additional SEM images should be obtained until $C_{NUM}$ further longitudinal portions are visible. The individual minimum distance $g_Z$ for $C_{NUM}$ further longitudinal portions of the waveguides (of the first plurality of waveguides) in the SEM images is measured. The average minimum distance $G_Z$ is then calculated by summing the individual minimum distances $g_{Z,j}$ measured for the further longitudinal portions and dividing said sum by the number M = $C_{NUM}$ of further longitudinal portions (here $g_{Z,j}$ is the individual minimum distance gz of the jth further longitudinal portion).

The average minimum distance $G_X$ is determined in the same manner as described above for the average minimum distance $G_Z$. In other words, the individual minimum distance $g_X$ for $C_{NUM}$ further longitudinal portions of the waveguides (of the first plurality of waveguides) in the SEM images is measured. The average minimum distance $G_X$ is then calculated by summing the individual minimum distances $g_{X,j}$ measured for the further longitudinal portions and dividing said sum by the number M = $C_{NUM}$ of further longitudinal portions (here $g_{X,j}$ is the individual minimum distance $g_X$ of the jth further longitudinal portion).

The average minimum distance $H_Z$ is determined in the same manner as described above for the average minimum distance Fz. In other words, the individual minimum distance $h_Z$ for $C_{NUM}$ first longitudinal portions of the waveguides (of the first plurality of waveguides) in the SEM images is measured. The average minimum distance $H_Z$ is then calculated by summing the individual minimum distances $h_{Z,i}$ measured for the first longitudinal portions and dividing said sum by the number N = $C_{NUM}$ of first longitudinal portions.

The average minimum distance $H_X$ is determined in the same manner as described above for the average minimum distance Fz. In other words, the individual minimum distance $h_X$ for $C_{NUM}$ first longitudinal portions of the waveguides (of the first plurality of waveguides) in the SEM images is measured. The average minimum distance $H_X$ is then calculated by summing the individual minimum distances $h_{X,i}$ measured for the first longitudinal portions and dividing said sum by the number N = $C_{NUM}$ of first longitudinal portions.

The average minimum distance $H_Y$ is determined in the same manner as described above for the average minimum distance $F_Z$. In other words, the individual minimum distance $h_Y$ for $C_{NUM}$ first longitudinal portions of the waveguides (of the first plurality of waveguides) in the SEM images is measured. The average minimum distance $H_Y$ is then calculated by summing the individual minimum distances $h_{Y,i}$ measured for the first longitudinal portions and dividing said sum by the number $N = C_{NUM}$ of first longitudinal portions.

Although the above procedure is described for the first sub-assembly, the same procedure is used to calculate, e.g., the average minimum distance $I_Z$ and the average minimum distance $I_X$ for a second sub-assembly, as well as any other sub-assemblies.

Minimum distance between electronic components

The minimum distance between the first plurality of electronic components and the second plurality of electronic components is determined as follows. For each electronic component, of the first plurality of electronic components, a distance is measured to each of the electronic components of the second plurality of electronic components. The shortest of these distances is defined as the minimum distance. For example, the first plurality of electronic components is made up of the electronic components $A_1$, $A_2$, and $A_3$, while the second plurality of electronic components is made up of the electronic components $B_1$ and $B_2$. The distances between the following pairs of electronic components are measured: $A_1$ and $B_1$; $A_2$ and $B_1$; $A_3$ and $B_1$; $A_1$ and $B_2$; $A_2$ and $B_2$; $A_3$ and $B_2$. The shortest of these distances is defined as the minimum distance between the first plurality of electronic components and the second plurality of electronic components.

The minimum distance between the first plurality of opto-electronic components and the second plurality of opto-electronic components is determined as follows. For each opto-electronic components, of the first plurality of opto-electronic components, a distance is measured to each of the opto-electronic components of the second plurality of opto-electronic components. The shortest of these distances is defined as the minimum distance. For example, the first plurality of opto-electronic components is made up of the opto-electronic components $C_1$, $C_2$, and $C_3$, while the second plurality of opto-electronic components is made up of the opto-electronic components $D_1$ and $D_2$. The distances between the following pairs of opto-electronic components are measured: $C_1$ and $D_1$; $C_2$ and $D_1$; $C_3$ and $D_1$; $C_1$ and $D_2$; $C_2$ and $D_2$; $C_3$ and $D_2$. The shortest of these distances is defined as the minimum distance between the first plurality of opto-electronic components and the second plurality of opto-electronic components.

The minimum distance between the first plurality of electronic components and the second plurality of electronic components, as well as the minimum distance between the first plurality of opto-electronic components and the second plurality of opto-electronic components are not necessarily measured along only the first direction of the further direction. Rather, these distances may be measured along a direction that is a combination of the first direction and the further direction.

Distance between first layer of the first kind and further layer

The distance between the first layer of the first kind and the further layer is defined as given in the description of Fig. 2.

## EXAMPLES

The invention is illustrated further by way of examples. The invention is not restricted to the examples.

In the examples the following scale is used for the technical effects, arranged from smallest to largest: "-----, -,---, --, -, +, ++, +++, ++++, +++++".

Example 1

In Examples 1.1 to 1.6 an assembly as described in Fig. 1A is provided. The first sub-assembly has 5000 opto-electronic components in the form of modulators and photodetectors. The modulators and photodetectors use one or more graphene layers (electrically conducting elements) to modulate and detect electromagnetic waves, respectively. The opto-electronic components have a height and width of 10 $\mu$m.

The first sub-assembly has a layer of the first kind that contains a 1.8 $\mu$m thick back-end-of-line layer superimposed on a front-end-of-line layer. The assembly also has an interposer (a layer of the further kind) that comprises a further plurality of waveguides that are in optical connection with the first plurality of waveguides. The waveguides, of both the first plurality of waveguides and the further plurality of waveguides, have a height of 350 nm.

In Examples 1.1 to 1.6, the average minimum distance Fz, the average minimum distance Gz, and the average minimum distance $G_X$ are 2.5 $\mu$m. In Examples 1.1 to 1.6 the average minimum distance $F_X$ between the first longitudinal portions (of the first plurality of waveguides) and the first plurality of connectors is varied as shown in Table 1 below. In Examples 1.1 to 1.6, the closest connectors to the first longitudinal portions of the waveguides are the electrodes of the opto-electronic components. In Examples 1.1 to 1.6 the average minimum distance $F_X$ is thus the average minimum distance between the first longitudinal portions (of the first plurality of waveguides) and the electrodes of the opto-electronic components.

**Table 1**

| Example | 1.1 | 1.2 | 1.3 | 1.4 | 1.5 | 1.6 |
|---|---|---|---|---|---|---|
| | | | | | | |
| **Set-up** | | | | | | |
| Average minimum distance $F_X$ [$\mu$m] | 0.7 | 0.8 | 1 | 1.3 | 1.5 | 1.8 |
| | | | | | | |
| **Technical effects** | | | | | | |
| Energy consumption | --- | -- | - | - | + | ++ |
| Bit rate | --- | ++ | +++ | ++ | + | - |

The technical effects in Table 1 are as follows:

- Energy consumption: the amount of energy require to send one bit of data. A "+" indicates that more energy is required, and a "-" indicates that less energy is required. It is desired to reduce the energy required.
- Bitrate: the rate at which data can be sent and received by the first sub-assembly. A "+" indicates a larger bit rate, and a "-" indicates a lower bit rate. It is desired to increase the bit rate.

Example 2

In Examples 2.1 to 2.6 an assembly as described in Fig. 1A is provided. The first sub-assembly has 5000 opto-electronic components in the form of modulators and photodetectors. The modulators and photodetectors use one or more graphene layers (electrically conducting elements) to modulate and detect electromagnetic waves, respectively. The opto-electronic components have a height and width of 10 $\mu$m. The first sub-assembly has a layer of the first kind that contains a 1.8 $\mu$m thick back-end-of-line layer superimposed on a front-end-of-line layer. The assembly also has an interposer (a layer of the further kind) that comprises a further plurality of waveguides that are in optical connection with the first plurality of waveguides. In Examples 2.1 to 2.6, the average minimum distance Fz is 2.5 $\mu$m, while the average minimum distance $F_X$ is 1.3 $\mu$m.

In Examples 2.1 to 2.6 the average minimum distance $G_Z$ and the average minimum distance $G_X$, between the further longitudinal portions (of the first plurality of waveguides) and the first plurality of connectors, are varied as shown in Table 2 below. For Examples 2.1 to 2.6, the average minimum distance $G_Z$ and the average minimum distance $G_X$ are equal.

**Table 2**

| | 2.1 | 2.2 | 2.3 | 2.4 | 2.5 | 2.6 |
|---|---|---|---|---|---|---|
| | | | | | | |
| Average minimum distance $G_Z$ / $G_X$ [$\mu$m] | 1.8 | 2 | 2.2 | 2.3 | 4.0 | 4.5 |
| | | | | | | |
| **Technical effects** | | | | | | |
| Bitrate | ---- | --- | -- | + | + | + |
| Energy consumption | +++++ | ++ | + | + | - | -- |
| Heat dissipation | --- | --- | - | - | + | ++ |
| Manufacturing complexity | - | - | - | - | - | +++ |
| Production time | -- | - | - | - | - | +++ |

The technical effects in Table 1 are as follows:

- Bitrate: the rate at which data can be sent and received by the first sub-assembly. A "+" indicates a larger bit rate, and a "-" indicates a lower bit rate. It is desired to increase the bit rate.
- Energy consumption: the energy required to send or receive one bit of data by the first sub-assembly. A "+" indicates a larger energy consumption, and a "-" indicates a lower energy consumption. It is desired to decrease the energy consumption.
- Heat dissipation: heat is generated between the first layer of the first kind and the first opto-electronic components, and it is required to dissipate this heat. A "+" indicates a larger heat dissipation, and a "-" indicates a lower heat dissipation. It is desired to increase the heat dissipation.
- Manufacturing complexity: the complexity of manufacturing the assembly. A "+" indicates a larger manufacturing complexity, and a "-" indicates a lower manufacturing complexity. It is desired to decrease the manufacturing complexity.
- Production time: the time required to produce the assembly. A "+" indicates a longer production time, and a "-" indicates a shorter production time. It is desired to reduce the production time.

Example 3

In Examples 3.1 and 3.2, an assembly with a first sub-assembly and a second sub-assembly is provided. The first and second sub-assemblies are in data communication via an interposer (a layer of a further kind)

- Example 3.1: the sub-assemblies are according to Example 2.4, and as further described in Fig. 5. In other words, the two sub-assemblies are in optical connection with each other via an interposer that comprises a plurality of waveguides. The opto-electronic components of the respective sub-assemblies are also arranged above the back-end-of-line layers of the two sub-assemblies.
- Example 3.2: the assembly is similar to that of Example 3.1, with the following differences: neither of the sub-assemblies contain any opto-electronic components, and the interposer does not contain any waveguides. Rather, data is transferred between the two sub-assemblies via an interposer that comprises a plurality of copper connectors.

A comparison of the above assemblies is shown in Table 3 below.

**Table 3**

|  | 3.1 | 3.2 |
|---|---|---|
|  |  |  |
| **Technical effects** |  |  |
| Heat dissipation | - | + |
| Bitrate/distance | ++++ | + |

The technical effects in Table 3 are the same as described in Table 1, with the following additional effect:

- Bitrate/distance: The bitrate that can be obtained over increasing distances. A "+" indicates a larger bitrate per distance, and a "-" indicates a smaller bitrate per distance. It is desired to increase the bitrate per distance.

Example 4

Three assemblies are provided.

- Example 4.1: the assembly is according to Example 2.4, and as described in Fig. 1A. In particular, the opto-electronic components are monolithically integrated with the layer of the first kind.
- Example 4.2: the assembly is similar to that of Example 4.1, with the following difference. The opto-electronic components are arranged on the interposer. The interposer is then connected to the back-end-of-line layer using microbumps. In other words, the layer of the first kind, and the interposer with the opto-electronic components are manufactured as separate parts.
- In example 4.3, an assembly as shown in Fig. 6 is provided (the opto-electronic components are arranged next to the first layer of the first kind, i.e., at the same position as measured along the first direction).

A comparison of the above assemblies is shown in Table 4 below.

**Table 4**

|  | 4.1 | 4.2 | 4.3 |
|---|---|---|---|
|  |  |  |  |
| **Technical effects** |  |  |  |
| Bitrate | +++ | +++ | -- |
| Energy consumption | - | ++ | ++ |
| Heat dissipation | + | + | ++ |
| Bitrate/distance | ++++ | + | +++ |
| Manufacturing complexity | + | ++ | + |
| Footprint on wafer | - | - | + |

The technical effects in Table 4 are the same as described in Tables 2 and 3, with the following additional technical effect.

- Footprint on wafer: the area on the silicon wafer that is required to produce the first sub-assembly. A "+" indicates a larger footprint, and a "-" indicates a lower footprint. It is desired to decrease the footprint.

## REFERENCE LIST

| 100 | Assembly |
|---|---|
| 101 | First sub-assembly |
| 102 | First layer of the first kind |
| 103 | First plurality of electronic components |
| 104 | First plurality of opto-electronic components |
| 105 | First plurality of connectors |
| 106 | First direction |
| 107 | Further direction |
| 108 | Sub-layer of the first kind |
| 109 | Sub-layer of the further kind |
| 110 | First surface of first layer of the first kind |
| 111 | Second surface of first layer of the first kind |
| 112 | Further surface of first layer of the first kind |
| 113 | First plurality of waveguides |
| 114 | Layer of a further kind |
| 115 | Waveguide of layer of the further kind |
| 116 | Layer of an even-further kind |
| 117 | Third plurality of connectors |
| 118 | Connector |
| 121 | Distance between electronic component and opto-electronic component |
| 122 | Imaginary ellipse |
| 123 | Opto-electronic component |
| 124 | Individual minimum distance $h_X$ |
| 125 | Opto-electronic component |
| 126 | Individual minimum distance $h_X$ |
| 127 | Opto-electronic component |
| 128 | Waveguide |
| 129 | Elements of opto-electronic component |
| 130 | Centre of waveguide |
| 131 | Contact point between ellipse and connector |
| 132 | $Z_A$ |
| 133 | $Z_B$ |

| | |
|---|---|
| 134 | $X_A$ |
| 135 | $X_B$ |
| 136 | Further plurality of connectors |
| 137 | Electrically conducting element |
| 138 | Dielectric layer |
| 139 | Waveguide layer |
| 140 | Dielectric layer |
| 141 | Plurality of waveguides |
| 142 | Electrically conducting element layer |
| 143 | Plurality of electrically conducting elements |
| 144 | First plurality of through-holes |
| 145 | First electrically conducting material |
| 146 | First plurality of electrodes |
| 147 | Further plurality of electrodes |
| 148 | Recess |
| 149 | Third electrically conducting material |
| 150 | Fourth electrically conducting material |
| 151 | Microbumps |
| 152 | Opto-electronic component |
| 153 | First longitudinal portion of waveguide |
| 154 | Further longitudinal portion of waveguide |
| 155 | Second direction |
| 156 | Metal redistribution layers and vias in layer of further kind |
| 157 | Metal redistribution layers and vias in layer of even-further kind |
| 158 | First axis of ellipse |
| 159 | Second axis of ellipse |
| 160 | Further plurality of through-holes |
| 161 | Second electrically conducting material |
| | |
| 201 | Second sub-assembly |
| 202 | Second layer of the first kind |
| 203 | Second plurality of electronic components |
| 204 | Second plurality of opto-electronic components |
| 205 | Second plurality of connectors |
| 208 | Sub-layer of the first kind |
| 209 | Sub-layer of the further kind |
| 213 | Waveguide of second sub-assembly |
| 216 | Layer of an even-further kind |
| 301 | Sub-assembly not according to the invention |
| 302 | Layer of the first kind |
| 303 | Plurality of electronic components |
| 304 | Plurality of opto-electronic components |
| 305 | First plurality of connectors |
| 308 | Sub-layer of the first kind |
| 309 | Sub-layer of the further kind |
| 314 | Layer of a further kind |
| 336 | Further plurality of connectors |
| | |
| 900 | Optical sensing module |
| 901 | Light emitting means |
| 902 | Target area |
| 903 | Sensing unit |
| 904 | Optis |
| 905 | Assembly |
| 906 | First sub-assembly |
| 907 | Second sub-assembly |
| | |
| 1000 | First apparatus adapted and arranged for a medical application |

| 1001 | Sensing unit |
| 1002 | Assembly |
| 1003 | First sub-assembly |
| 1004 | Second sub-assembly |

| 1100 | Vehicle adapted and arranged for flight |
| 1101 | Sensing unit |
| 1102 | Assembly |
| 1103 | First sub-assembly |
| 1104 | Second sub-assembly |
| 1105 | Propulsion means |
| 1106 | Means to generate lift |
| 1107 | Control system |

| 1200 | Robotic system |
| 1201 | Robotic body |
| 1202 | Sensing unit |
| 1203 | Assembly |
| 1204 | First sub-assembly |
| 1205 | Second sub-assembly |
| 1206 | Control module |

| 1300 | First system |
| 1301 | Assembly |
| 1302 | First sub-assembly |
| 1303 | Second sub-assembly |
| 1304 | Optical memory unit |
| 1305 | Optical processor |

| 1400 | Second system |
| 1401 | Assembly |
| 1402 | First sub-assembly |
| 1403 | Second sub-assembly |
| 1404 | Homomorphic operation module |
| 1405 | Photonic encryption module |
| 1406 | Photonic decryption module |

| 1500 | First transportation means |
| 1501 | Sensing unit |
| 1502 | Assembly |
| 1503 | First sub-assembly |
| 1504 | Second sub-assembly |
| 1505 | Processing module |
| 1506 | Perception sub-module |
| 1507 | Generation sub-module |
| 1508 | Human-machine interface |
| 1509 | Control unit |
| 1510 | Steering means |
| 1511 | Propulsion means |

| 1600 | Second transportation means |
| 1601 | Assembly |
| 1602 | First sub-assembly |
| 1603 | Second sub-assembly |
| 1604 | Steering means |
| 1605 | Propulsion means |

| 1700 | Third system |

1701    Assembly
1702    First sub-assembly
1703    Second sub-assembly

**Claims**

1. An assembly comprising

    a. a first sub-assembly, wherein the first sub-assembly comprises

        i. a first layer of a first kind that comprises a first plurality of electronic components;
        ii. a first plurality of waveguides adapted and arranged for the propagation of electromagnetic waves;
        iii. a first plurality of opto-electronic components that each

            A. has a height that is equal to or less than 50 $\mu$m, and
            B. is adapted and arranged to modify electromagnetic waves propagating in a first longitudinal portion of at least one waveguide, of the first plurality of waveguides;

        wherein at least 95 % of the opto-electronic components, of the first plurality of opto-electronic components, comprise at least one electrically conducting element, wherein said at least one electrically conducting element comprises graphene;
        iv. a first plurality of connectors, wherein

            A. at least one connector, of the first plurality of connectors, is adapted and arranged to electrically connect at least one electronic component, of the first plurality of electronic components, with at least one opto-electronic component, of the first plurality of opto-electronic components;

    wherein

    an average minimum distance $F_X$ between the first longitudinal portions, of the first plurality of waveguides, and the first plurality of connectors is in the range from 0.75 to 1.7 $\mu$m, wherein the average minimum distance $F_X$ is measured parallel to a further direction ($X$) that is perpendicular to a first direction ($Z$), wherein the first direction ($Z$) is perpendicular to the first layer of the first kind, and
    the average minimum distance $F_X$ is determined as described herein.

2. The assembly according to claim 1, wherein the average minimum distance $F_X$ is less than an average minimum distance $F_Z$ between the first longitudinal portions, of the first plurality of waveguides, and the first plurality of connectors, wherein the average minimum distance $F_Z$ is measured parallel to the first direction ($Z$).

3. The assembly according to any of the preceding claims, wherein the average minimum distance $F_Z$ between the first longitudinal portions, of the first plurality of waveguides, and the first plurality of connectors is in the range from 2 to 3.5 $\mu$m, wherein the average minimum distance $F_Z$ is measured parallel to the first direction ($Z$).

4. The assembly according to any of the preceding claims, wherein an average minimum distance $G_X$ between further longitudinal portions, of the first plurality of waveguides, and the first plurality of connectors is in the range from 2 to 3.5 $\mu$m, wherein the average minimum distance $G_X$ is measured parallel to the further direction ($X$).

5. The assembly according to any of the preceding claims, wherein an average minimum distance $H_Z$ between the first longitudinal portions, of the first plurality of waveguides, and the first plurality of electronic components is in the range from 8 to 24 $\mu$m, wherein the average minimum distance $H_Z$ is measured parallel to the first direction ($Z$).

6. The assembly according to any of the preceding claims, wherein at least one or all of the following applies:

    a. an average minimum distance $H_X$ between the first layer of the first kind and the first longitudinal portions, of the first plurality of waveguides, is less than 100 nm, and wherein the average minimum distance $H_X$ is measured parallel to the further direction ($X$);
    b. an average minimum distance $H_Y$ between the first layer of the first kind and the first longitudinal portions, of the first plurality of waveguides, is less than 100 nm, wherein the average minimum distance $H_Y$ is measured parallel to a second direction (*Y*), wherein the second direction (*Y*) is perpendicular to the first direction (*Z*) and the further direction (*X*).

7.  The assembly according to any of the preceding claims, wherein at least one or all of the following applies:

    a. the first layer of the first kind does not comprise a waveguide;
    b. the first layer of the first kind does not comprise an optical element adapted and arranged for the coupling of electromagnetic waves between two waveguides.

8.  The assembly according to any of the preceding claims, wherein in a cross-sectional cut of the assembly made perpendicular to the first layer of the first kind, the cross-sectional cut comprises the following layers and components, in this order:

    i. the first layer of the first kind; and
    ii. the first plurality of opto-electronic components.

9.  The assembly according to any of the preceding claims, wherein the assembly is adapted and arranged to allow for a flow of an electrical current between at least one electronic component, of the first plurality of electronic components, and at least one opto-electronic component, of the first plurality of opto-electronic components, without requiring that the electrical current flows through at least one of the following: a bonding wire, a solder bump, a microbump, a C2 bump, a C4 bump, a hybrid bond.

10. The assembly according to any of the preceding claims, wherein the first plurality of connectors does not comprise any of the following: a bonding wire, a solder bump, a microbump, a C2 bump, a C4 bump, a hybrid bond.

11. A method for producing an assembly, comprising the steps of

    I. providing a layer of a first kind;
    II. superimposing a waveguide layer on the layer of the first kind;
    III. removing at least one section of the waveguide layer to obtain a plurality of waveguides;
    IV. superimposing at least one electrically conducting element layer on the plurality of waveguides;
    V. removing at least one section of the at least one electrically conducting element layer to obtain a plurality of electrically conducting elements;
    VI. forming a first plurality of electrodes that are in electrical connection with the plurality of electrically conducting elements;
    VII. forming a further plurality of electrodes that are in electrical connection with the layer of the first kind;
    VIII. bringing at least one electrode, of the first plurality of electrodes, and at least one electrode, of the further plurality of electrodes, into electrical connection with each other.

12. The method according to the preceding claim 11, wherein the step of forming the first plurality of electrodes comprises the sub-steps of:

    a. preferably superimposing a dielectric layer A on the plurality of electrically conducing elements;
    b. forming a first plurality of through-holes wherein said through-holes extend to at least one electrically conducting element;
    c. superimposing a first electrically conducting material on the plurality of electrically conducing elements, thereby at least partially filling the first plurality of through-holes, and thereby forming the first plurality of electrodes.

13. The method according to the preceding claim 12, wherein the first plurality of through-holes do not pass through the layer of the first kind.

14. Use of an assembly according to any of the claims 1 to 10 in a computing device for at least one or all of the following:

    a. a transfer of data between at least two electronic components;
    b. a transfer of data between at least two opto-electronic components.

**Amended claims in accordance with Rule 137(2) EPC.**

1. An assembly comprising

   a. a first sub-assembly, wherein the first sub-assembly comprises

   i. a first layer of a first kind that comprises a first plurality of electronic components;
   ii. a first plurality of waveguides adapted and arranged for the propagation of electromagnetic waves;
   iii. a first plurality of opto-electronic components that each

   A. has a height that is equal to or less than 50 $\mu$m, and
   B. is adapted and arranged to modify electromagnetic waves propagating in a first longitudinal portion of at least one waveguide, of the first plurality of waveguides;
   wherein at least 95 % of the opto-electronic components, of the first plurality of opto-electronic components, comprise at least one electrically conducting element, wherein said at least one electrically conducting element comprises graphene;

   iv. a first plurality of connectors, wherein

   A. at least one connector, of the first plurality of connectors, is adapted and arranged to electrically connect at least one electronic component, of the first plurality of electronic components, with at least one opto-electronic component, of the first plurality of opto-electronic components;

   wherein

   an average minimum distance $F_X$ between the first longitudinal portions, of the first plurality of waveguides, and the first plurality of connectors is in the range from 0.75 to 1.7 $\mu$m, wherein the average minimum distance $F_X$ is measured parallel to a further direction ($X$) that is perpendicular to a first direction ($Z$), wherein the first direction ($Z$) is perpendicular to the first layer of the first kind, and
   the average minimum distance $F_X$ is determined as described herein.

2. The assembly according to claim 1, wherein the average minimum distance $F_X$ is less than an average minimum distance $F_Z$ between the first longitudinal portions, of the first plurality of waveguides, and the first plurality of connectors, wherein the average minimum distance $F_Z$ is measured parallel to the first direction ($Z$).

3. The assembly according to any of the preceding claims, wherein the average minimum distance $F_Z$ between the first longitudinal portions, of the first plurality of waveguides, and the first plurality of connectors is in the range from 2 to 3.5 $\mu$m, wherein the average minimum distance $F_Z$ is measured parallel to the first direction ($Z$).

4. The assembly according to any of the preceding claims, wherein an average minimum distance $G_X$ between further longitudinal portions, of the first plurality of waveguides, and the first plurality of connectors is in the range from 2 to 3.5 $\mu$m, wherein the average minimum distance $G_X$ is measured parallel to the further direction ($X$).

5. The assembly according to any of the preceding claims, wherein an average minimum distance $H_Z$ between the first longitudinal portions, of the first plurality of waveguides, and the first plurality of electronic components is in the range from 8 to 24 $\mu$m, wherein the average minimum distance $H_Z$ is measured parallel to the first direction ($Z$).

6. The assembly according to any of the preceding claims, wherein at least one or all of the following applies:

   a. an average minimum distance $H_X$ between the first layer of the first kind and the first longitudinal portions, of the first plurality of waveguides, is less than 100 nm, and wherein the average minimum distance $H_X$ is measured parallel to the further direction ($X$);
   b. an average minimum distance $H_Y$ between the first layer of the first kind and the first longitudinal portions, of the first plurality of waveguides, is less than 100 nm, wherein the average minimum distance $H_Y$ is measured parallel to a second direction ($Y$), wherein the second direction ($Y$) is perpendicular to the first direction ($Z$) and the further direction ($X$).

7. The assembly according to any of the preceding claims, wherein at least one or all of the following applies:

a. the first layer of the first kind does not comprise a waveguide;

b. the first layer of the first kind does not comprise an optical element adapted and arranged for the coupling of electromagnetic waves between two waveguides.

8. The assembly according to any of the preceding claims, wherein in a cross-sectional cut of the assembly made perpendicular to the first layer of the first kind, the cross-sectional cut comprises the following layers and components, in this order:

    i. the first layer of the first kind; and

    ii. the first plurality of opto-electronic components.

9. The assembly according to any of the preceding claims, wherein the assembly is adapted and arranged to allow for a flow of an electrical current between at least one electronic component, of the first plurality of electronic components, and at least one opto-electronic component, of the first plurality of opto-electronic components, without requiring that the electrical current flows through at least one of the following: a bonding wire, a solder bump, a microbump, a C2 bump, a C4 bump, a hybrid bond.

10. The assembly according to any of the preceding claims, wherein the first plurality of connectors does not comprise any of the following: a bonding wire, a solder bump, a microbump, a C2 bump, a C4 bump, a hybrid bond.

11. A method for producing an assembly according to any of the preceding claims, comprising the steps of

    I. providing a layer of a first kind;

    II. superimposing a waveguide layer on the layer of the first kind;

    III. removing at least one section of the waveguide layer to obtain a plurality of waveguides;

    IV. superimposing at least one electrically conducting element layer on the plurality of waveguides;

    V. removing at least one section of the at least one electrically conducting element layer to obtain a plurality of electrically conducting elements;

    VI. forming a first plurality of electrodes that are in electrical connection with the plurality of electrically conducting elements;

    VII. forming a further plurality of electrodes that are in electrical connection with the layer of the first kind;

    VIII. bringing at least one electrode, of the first plurality of electrodes, and at least one electrode, of the further plurality of electrodes, into electrical connection with each other.

12. The method according to the preceding claim 11, wherein the step of forming the first plurality of electrodes comprises the sub-steps of:

    a. preferably superimposing a dielectric layer A on the plurality of electrically conducing elements;

    b. forming a first plurality of through-holes wherein said through-holes extend to at least one electrically conducting element;

    c. superimposing a first electrically conducting material on the plurality of electrically conducing elements, thereby at least partially filling the first plurality of through-holes, and thereby forming the first plurality of electrodes.

13. The method according to the preceding claim 12, wherein the first plurality of through-holes do not pass through the layer of the first kind.

14. Use of an assembly according to any of the claims 1 to 10 in a computing device for at least one or all of the following:

    a. a transfer of data between at least two electronic components;

    b. a transfer of data between at least two opto-electronic components.

Fig. 1A

100

## Fig. 1B

## Fig. 1C

## Fig. 1D

## Fig. 2A

200

**Fig. 2B**                                                                                   <u>200</u>

**Fig. 2C**

<u>200</u>

**Fig. 2D**                                                                                    200

EP 4 737 962 A1

**Fig. 3A**

**Fig. 3B**

57

**Fig. 3C**

**Fig. 3D**

## Fig. 4A

## Fig. 4B

Fig. 5

**Fig. 6**

## Fig. 7A

## Fig. 7B

## Fig. 7C

## Fig. 7D

## Fig. 7E

## Fig. 7F

## Fig. 7G

145    146

## Fig. 7H

140D    160

105

109

102

## Fig. 7I

140D    147    161

105

109

102

**Fig. 7J**

**Fig. 7K**

## Fig. 7L

149    149

## Fig. 7M

150    140F

## Fig. 7N

152B    151
140F
152A
116    140C
140A
102

**Fig. 8**

```
┌─────────┐
│   801   │
└─────────┘
     ⇓
┌─────────┐
│   802   │
└─────────┘
     ⇓
┌─────────┐
│   803   │
└─────────┘
     ⇓
┌─────────┐
│  804A   │
└─────────┘
     ⇓
┌─────────┐                                              ┌─────────┐
│  805A   │                                              │   808   │
└─────────┘                                              └─────────┘
     ⇓                                                        ⇑
┌─────────┐                                              ┌─────────┐
│  804B   │                                              │   807   │
└─────────┘                                              └─────────┘
     ⇓                                                        ⇑
┌─────────┐  ⇨  ┌─────────┐  ⇨  ┌─────────┐  ⇨  ┌─────────┐
│  805B   │     │  806A   │     │  806B   │     │  806C   │
└─────────┘     └─────────┘     └─────────┘     └─────────┘
```

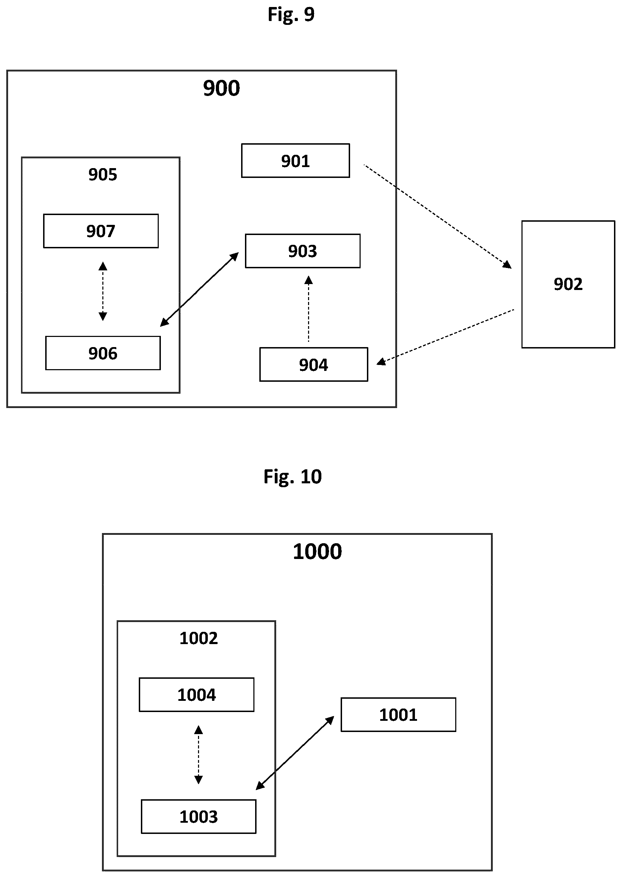

**Fig. 9**

**Fig. 10**

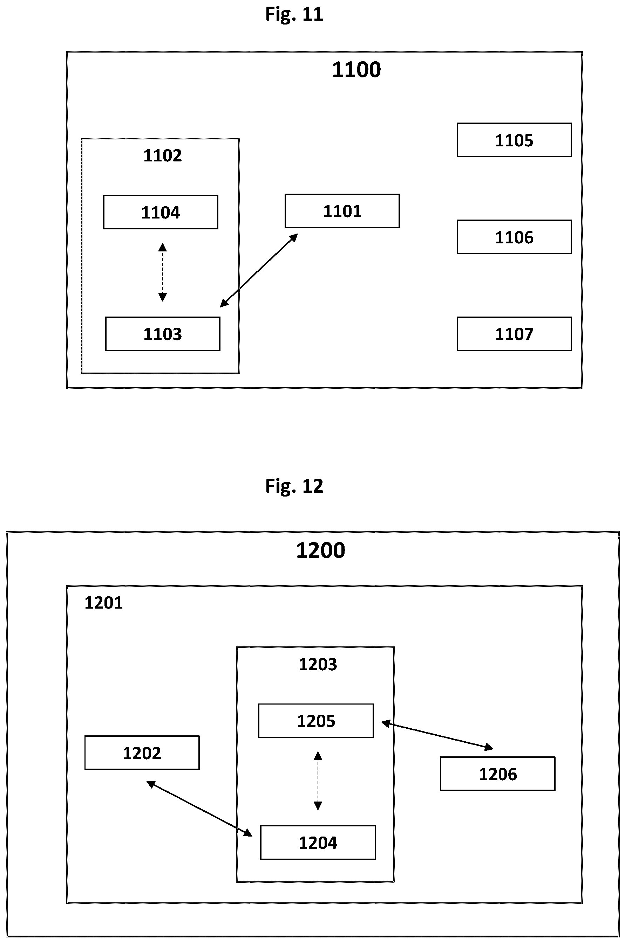

**Fig. 11**

**Fig. 12**

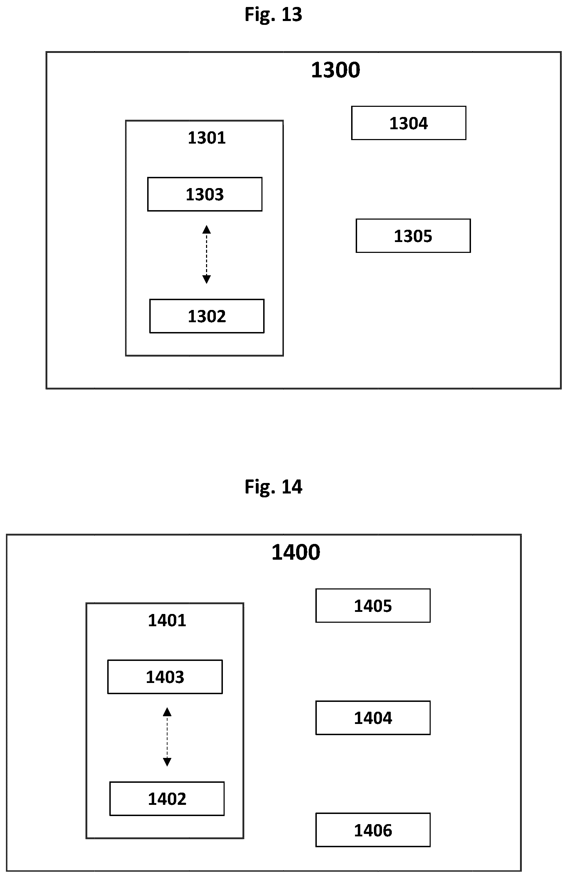

**Fig. 13**

**1300**

1304

1301

1303

1305

1302

**Fig. 14**

**1400**

1405

1401

1403

1404

1402

1406

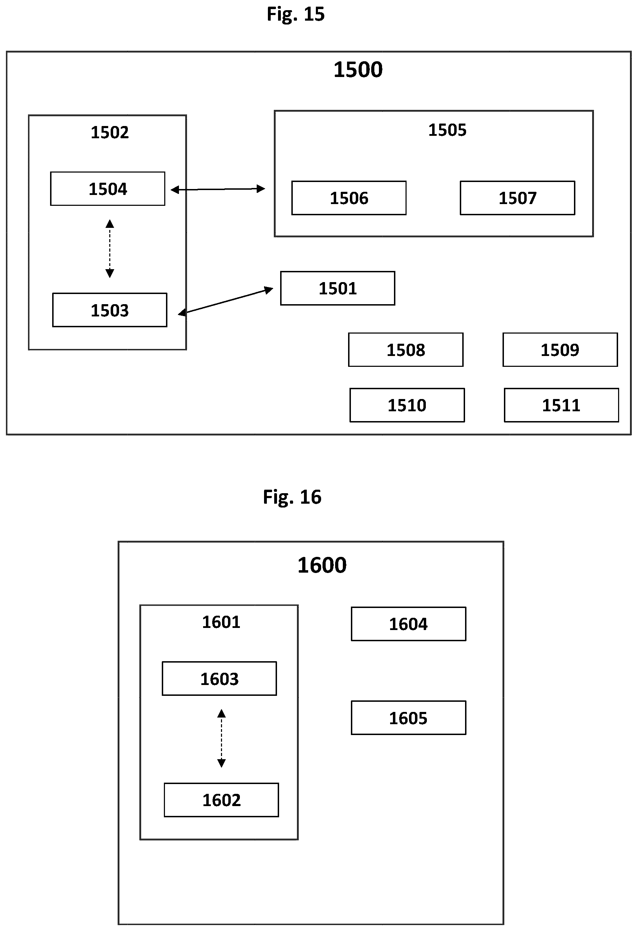

## Fig. 15

## Fig. 16

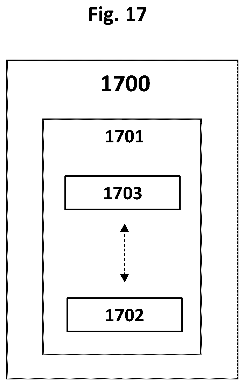

**Fig. 17**

1700

1701

1703

1702

Europäisches Patentamt
European Patent Office
Office européen des brevets

# PARTIAL EUROPEAN SEARCH REPORT

under Rule 62a and/or 63 of the European Patent Convention.
This report shall be considered, for the purposes of
subsequent proceedings, as the European search report

**Application Number**

EP 24 21 0598

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/194806 A1 (BADCOCK THOMAS JAMES [GB] ET AL) 13 June 2024 (2024-06-13)<br>* abstract *<br>* paragraphs [0019] - [0242] *<br>* paragraphs [0251] - [0271]; figures *<br>----- | 1-10,15 | INV.<br>G02B6/13<br>G02B6/43<br>G02F1/01<br>G02B6/42 |
| A | WO 2021/068606 A1 (UNIV SHENZHEN [CN]) 15 April 2021 (2021-04-15)<br>* abstract *<br>* page 4, line 3 - line 9; figure 2 *<br>----- | 1-10 | |
| A | CN 103 439 807 A (INST SEMICONDUCTORS CAS) 11 December 2013 (2013-12-11)<br>* abstract *<br>* paragraph [0042]; figure 1 *<br>----- | 1-10 | |
| X | CA 3 169 253 A1 (GES FUR ANGEWANDTE MIKRO UND OPTOELEKTRONIK MIT BESCHRANKTER HAFTUNG A) 5 August 2021 (2021-08-05)<br>* abstract *<br>* page 68, line 73 - page 16, line 26; figures *<br>----- | 11-15 | |

**TECHNICAL FIELDS
SEARCHED (IPC)**

G02B
G02F

## INCOMPLETE SEARCH

The Search Division considers that the present application, or one or more of its claims, does/do
not comply with the EPC so that only a partial search (R.62a, 63) has been carried out.

Claims searched completely :

Claims searched incompletely :

Claims not searched :

Reason for the limitation of the search:

see sheet C

| Place of search | Date of completion of the search | Examiner |
|---|---|---|
| The Hague | 23 June 2025 | Cohen, Adam |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04E07)

Europäisches
Patentamt

European
Patent Office

Office européen
des brevets

**INCOMPLETE SEARCH
SHEET C**

**Application Number**

EP 24 21 0598

Claim(s) completely searchable:

-

Claim(s) searched incompletely:
1-15

Reason for the limitation of the search:

In view of multiple independent claims in the same category and a number of severe Art. 84 and Art. 83 EPC objections, an invitation under R. 62a(1) EPC and R. 63 EPC was sent to the applicant on 17 April 2025, with a request to indicate subject-matter that could form the basis of the search.
An informal telephone consultation was held with the applicant's representative on 3 June 2025. The examiner expanded on the Art. 83 EPC objection and indicated a possible way forward.
On pages 4-6 of their letter dated 17 June 2025 the applicant confirmed the indication the examiner had given during the telephone consultation, namely that claims 1 and 11 would be searched based on the average minimum distance Fx being be understood as described on page 54 of the description and shown in Fig. 2B, and that the opto-electronic components would be understood as comprising at least one layer of graphene. Claim 11 would be interpreted as having the opto-electronic components being produced as part of the method, and that the limitations concerning the average minimum distance Fx would also be included in the produced assembly.
The search was therefore limited accordingly. In practice it proved practicable to search all independent claims.

## ANNEX TO THE EUROPEAN SEARCH REPORT
## ON EUROPEAN PATENT APPLICATION NO.

EP 24 21 0598

This annex lists the patent family members relating to the patent documents cited in the above-mentioned European search report.
The members are as contained in the European Patent Office EDP file on
The European Patent Office is in no way liable for these particulars which are merely given for the purpose of information.

23-06-2025

| Patent document cited in search report | | | Publication date | Patent family member(s) | | | Publication date |
|---|---|---|---|---|---|---|---|
| US 2024194806 | A1 | | 13-06-2024 | DE | 112022002427 | T5 | 15-02-2024 |
| | | | | US | 2024194806 | A1 | 13-06-2024 |
| | | | | WO | 2022229283 | A1 | 03-11-2022 |
| WO 2021068606 | A1 | | 15-04-2021 | CN | 110737114 | A | 31-01-2020 |
| | | | | WO | 2021068606 | A1 | 15-04-2021 |
| CN 103439807 | A | | 11-12-2013 | NONE | | | |
| CA 3169253 | A1 | | 05-08-2021 | CA | 3169253 | A1 | 05-08-2021 |
| | | | | CN | 115039003 | A | 09-09-2022 |
| | | | | DE | 102020102534 | A1 | 05-08-2021 |
| | | | | EP | 4097520 | A1 | 07-12-2022 |
| | | | | JP | 7612699 | B2 | 14-01-2025 |
| | | | | JP | 2023512099 | A | 23-03-2023 |
| | | | | KR | 20220126734 | A | 16-09-2022 |
| | | | | US | 2023123602 | A1 | 20-04-2023 |
| | | | | WO | 2021151594 | A1 | 05-08-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2023076132 A1
- WO 2023145206 A1
- WO 2021245701 A1
- WO 2022213048 A1
- US 20220116198 A1
- US 20220366059 A1
- US 20240022394 A1
- DE 102021121918 A1
- US 20230114847 A1
- WO 2018187487 A1
- US 20220188155 A1